# EUROPEAN PATENT APPLICATION

(11) **EP 4 610 520 A1**
(43) Date of publication of application: **03.09.2025**
(21) Application number: 23882701.8
(22) Date of filing: 25.10.2023
(51) Int. Cl.: F16H 25/24, B23Q 5/40, F16C 19/16, F16C 19/52, F16C 19/54, F16C 23/06, F16C 25/08, F16H 25/20, F16H 25/22, F16J 15/10

(54) **ROTATIONAL SUPPORT DEVICE, AND SUPPORT MECHANISM POSITION ADJUSTMENT MECHANISM OF SHAFT SUPPORT DEVICE**

(30) Priority: 28.10.2022 JP 2022173759; 21.07.2023 JP 2023118993; 22.08.2023 JP 2023134633
(71) Applicant: NSK LTD., Tokyo 141-8560 (JP)
(72) Inventor: ARAI Satoru, Fujisawa-shi, Kanagawa 251-8501 (JP)
(74) Representative: Grünecker Patent- und Rechtsanwälte PartG mbB
(86) International application number: PCT/JP2023/038610
(87) International publication number: WO 2024/090497

(57) **Abstract**

A support mechanism (30) that rotatably supports both ends of a screw shaft (21) in an axial direction comprises: a bearing unit (41) having a moving-side bearing housing (51) and a pair of angular ball bearings (33) fit inside the moving-side bearing housing (51); a support base (43) that is disposed on an axial side with respect to the bearing unit (41) and through which the screw shaft (21) passes; and a housing position adjustment mechanism (44) disposed between the bearing unit (41) and the support base (43). The housing position adjustment mechanism (44) comprises: a support base-side member (61) provided on the support base (43) side; a bearing housing-side member (62) provided on the bearing housing (51) side and movable in the axial direction relative to the support base-side member (61); a hollow member (90) disposed in a pressure chamber (66) formed between the support base-side member (61) and the bearing housing-side member (62); and a working fluid (70) that fills a space other than the hollow member (90) in the pressure chamber (66). This makes it possible to continuously and stably maintain a support stiffness in the axial direction even when the length of the rotating shaft in the axial direction changes due to the influence of heat.

## Description

### TECHNICAL FIELD

The present invention relates to a rotation support device that supports a rotation shaft such as a ball screw feeding device or a spindle device, and a support mechanism position adjustment mechanism for a shaft support device that supports a shaft.

### BACKGROUND ART

In the ball screw feeding device, high rigidity in an axial direction is required to maintain feeding accuracy of a screw shaft. In the related art, as a method for imparting rigidity to a screw shaft of a ball screw device, a method of combining a plurality of angular bearings to apply a preload, and arranging these at one end portion or both end portions of the screw shaft to fix and support the screw shaft in an axial direction is generally used. In addition, when thermal expansion of the screw shaft is taken into consideration, a method is adopted in which tension is applied in advance to the screw shaft in the axial direction to elongate the screw shaft by a predetermined amount. Patent Literature 1 describes a pre-tension mechanism that applies tension to a feed screw (screw shaft) in advance by adjusting a dimension of a spacer in an axial direction, and when the feed screw extends beyond the pretension due to a temperature rise, further moving a bearing in the axial direction by a disc spring or a pressure of a fluid to apply a tension to the feed screw.

### CITATION LIST

### PATENT LITERATURE

Patent Literature 1: JP2573982Y

### SUMMARY OF INVENTION

### TECHNICAL PROBLEM

However, when a load applied to the feed screw, known as pretension or pre-tension, is excessive, a large load is applied to the bearing, which may result in damage to the bearing. For this reason, normally, in a range where excessive load is not applied to the bearing in the axial direction, a disc spring, a fluid supplied from outside, or the like, as seen in the pre-tension mechanism described in Patent Literature 1, is provided. However, in the case of using the disc spring, since the load weakens as the shaft extends, it is only possible to cope with the extension under a temperature rise of 3 to 4 degrees. In a machining center or the like, the temperature rise of the ball screw often exceeds 4 degrees, in which case the disc spring is no longer able to apply a sufficient load, and the support rigidity in the axial direction may decrease.

In the method of supplying a fluid from the outside and applying a load by hydraulic pressure, an external device such as a hydraulic pump is required, and the ball screw feeding device is increased in size, which increases costs and results in additional energy consumption.

Further, such problems exist not only in a ball screw feeding device, but also in a rotation support device such as a spindle device in which both end portions in the axial direction of a rotation shaft are supported by a pair of support mechanisms in a rotatable manner.

The present invention has been made in view of the above-described problems, and an object of the present invention is to provide a rotation support device capable of continuously and stably maintaining support rigidity in an axial direction even when an axial length of a rotation shaft changes due to an influence of heat, and a support mechanism position adjustment mechanism of a shaft support device.

### SOLUTION TO PROBLEM

The above object of the present invention is achieved by the following configuration.
[1] A rotation support device including:
   a rotation shaft; and
   a pair of support mechanisms that rotatably support both end portions in an axial direction of the rotation shaft, respectively,
   wherein one of the pair of support mechanisms includes
   a bearing unit including a bearing housing and a bearing that rotatably supports the rotation shaft with respect to the bearing housing and is configured to support a load in the axial direction,
   a support base through which the rotation shaft passes or disposed around the rotation shaft, and
   a housing position adjustment mechanism disposed between the bearing unit and the support base, and
   wherein the housing position adjustment mechanism includes
   a support base side member provided on a support base side and through which the rotation shaft passes or disposed around the rotation shaft,
   a bearing housing side member provided on a bearing housing side, through which the rotation shaft passes or disposed around the rotation shaft, and movable in the axial direction relative to the support base side member,
   a hollow member disposed in a pressure chamber formed between the support base side member and the bearing housing side member, and
   a working fluid filling a space other than the hollow member in the pressure chamber.
[2] A support mechanism position adjustment mechanism of a shaft support device,
   the shaft support device including a shaft and a pair of support mechanisms provided at both end portions in an axial direction of the shaft to support the shaft,
   the support mechanism position adjustment mechanism being provided on one of the pair of support mechanisms,
   one of the pair of support mechanisms including a support body through which the shaft passes or which is disposed around the shaft,
   the support mechanism position adjustment mechanism of a shaft support device including:
      a first member provided on one of a shaft side and a support body side, and through which the shaft passes or which is disposed around the shaft;
      a second member provided on the other of the shaft side and the support body side, through which the shaft passes or which is disposed around the shaft, and movable in the axial direction relative to the first member, an accommodation space being formed between the first member and the second member;
      a hollow member disposed in the accommodation space; and
      a working fluid filling a space other than the hollow member in the accommodation space.

### ADVANTAGEOUS EFFECTS OF INVENTION

According to the rotation support device of the present invention, even when an axial length of the rotation shaft changes due to the influence of heat, support rigidity in the axial direction can be continuously and stably maintained. Further, since the hollow member is disposed within the pressure chamber, it is not always necessary to have an external accumulator, a pump, or the like, and a compact configuration can be achieved.

Further, according to the support mechanism position adjustment mechanism of a shaft support device of the present invention, even when an axial length of the shaft changes due to the influence of heat, support rigidity in the axial direction can be continuously and stably maintained.

Further, since the hollow member is disposed within the pressure chamber, it is not always necessary to have an external accumulator, a pump, or the like, and a compact configuration can be achieved.

### BRIEF DESCRIPTION OF DRAWINGS

[FIG. 1] FIG. 1 is a cross-sectional view of a table feeding system of a machine tool to which a ball screw feeding device according to a first embodiment of the present invention is applied.
[FIG. 2] FIG. 2 is an enlarged sectional view of a support mechanism including a housing position adjustment mechanism shown in FIG. 1.
[FIG. 3] FIG. 3 is a view taken along an arrow A in FIG. 2.
[FIGS. 4A to 4C] FIGS. 4A to 4C are cross-sectional views of a pressure chamber in which a hollow member according to first to third modifications of the first embodiment is disposed.
[FIGS. 5A and 5B] FIGS. 5A and 5B are cross-sectional views of the hollow member according to fourth and fifth modifications of the first embodiment.
[FIGS. 6A and 6B] FIGS. 6A and 6B are a cross-sectional view of the hollow member according to a sixth modification of the first embodiment.
[FIGS. 7A to 7C] FIGS. 7A to 7C are cross-sectional views of the hollow member according to seventh to ninth modifications of the first embodiment.
[FIGS. 8A to 8C] FIGS. 8A to 8C are cross-sectional views of the hollow member according to tenth to twelfth modifications of the first embodiment.
[FIGS. 9A and 9B] FIGS. 9A and 9B are cross-sectional views of the hollow member according to thirteenth and fourteenth modifications of the first embodiment.
[FIGS. 10A to 10C] FIGS. 10A to 10C are cross-sectional views of the hollow member according to fifteenth to seventeenth modifications of the first embodiment.
[FIG. 11] FIG. 11 is a view corresponding to FIG. 2 of a ball screw feeding device according to the seventeenth modification of the first embodiment.
[FIG. 12] FIG. 12 is a view corresponding to FIG. 2 of a ball screw feeding device according to a second embodiment of the present invention.
[FIG. 13] FIG. 13 is a graph conceptually showing a combination of forces generated by a plurality of hollow members according to the second embodiment.
[FIG. 14] FIG. 14 is a view corresponding to FIG. 2 of a ball screw feeding device according to a third embodiment of the present invention.
[FIG. 15] FIG. 15 is a view corresponding to FIG. 2 of a ball screw feeding device according to a fourth embodiment of the present invention.
[FIG. 16] FIG. 16 is an enlarged view of a part XVI in FIG. 15.
[FIGS. 17A to 17C] FIGS. 17A to 17C are enlarged cross-sectional views of a main part showing an example in which a wear-resistant member is applied to a seal groove of the ball screw feeding device according to modifications of the fourth embodiment.
[FIG. 18] FIG. 18 is a view corresponding to FIG. 2 of a ball screw feeding device according to a fifth embodiment of the present invention.
[FIG. 19] FIG. 19 is a view corresponding to FIG. 2 of a ball screw feeding device according to a sixth embodiment of the present invention.
[FIG. 20] FIG. 20 is a view corresponding to FIG. 2, showing a modification of a bearing unit in which a pair of angular ball bearings are arranged in back-to-back combination in the first to sixth embodiments.
[FIG. 21] FIG. 21 is a view corresponding to FIG. 2, showing another modification of the bearing unit in which the pair of angular ball bearings are arranged side-by-side in the first to sixth embodiments.
[FIGS. 22A and 22B] FIG. 22A is a schematic side view showing a first example in which the housing position adjustment mechanism includes a plurality of pressure chambers, and FIG. 22B is a schematic side view showing a second example in which the housing position adjustment mechanism includes a plurality of pressure chambers.
[FIGS. 23A and 23B] FIG. 23A is a schematic side view showing a third example in which the housing position adjustment mechanism includes a plurality of pressure chambers, and FIG. 23B is a schematic side view showing a fourth example in which the housing position adjustment mechanism includes a plurality of pressure chambers.
[FIG. 24] FIG. 24 is a schematic side view showing a fifth example in which the housing position adjustment mechanism includes a plurality of pressure chambers.
[FIG. 25] FIG. 25 is a cross-sectional view taken along a line XXV-XXV in FIG. 23A.
[FIG. 26] FIG. 26 is a view corresponding to FIG. 2 of a ball screw feeding device according to a seventh embodiment of the present invention.
[FIG. 27] FIG. 27 is a view corresponding to FIG. 2 of a ball screw feeding device according to a first modification of the seventh embodiment.
[FIG. 28] FIG. 28 is a view corresponding to FIG. 2 of a ball screw feeding device according to a second modification of the seventh embodiment.
[FIG. 29] FIG. 29 is a view corresponding to FIG. 2 of a ball screw feeding device according to a third modification of the seventh embodiment.
[FIG. 30] FIG. 30 is an enlarged view of a part XXX in FIG. 29.
[FIG. 31] FIG. 31 is a view corresponding to FIG. 2 of a ball screw feeding device according to a fourth modification of the seventh embodiment.
[FIG. 32] FIG. 32 is a view corresponding to FIG. 2 of a ball screw feeding device according to a fifth modification of the seventh embodiment.
[FIGS. 33A and 33B] FIG. 33A is an enlarged cross-sectional view corresponding to FIG. 2 in a phase in which an oil supply passage is formed in a bearing housing side member in order to fill a pressure chamber with a working fluid, and FIG. 33B is a cross-sectional view showing a modification of a stopper bolt in FIG. 33A.
[FIGS. 34A to 34D] FIG. 34A is a cross-sectional view of a stopper plug used instead of the stopper bolt in FIG. 33A, FIG. 34B is a cross-sectional view showing an example in which the stopper plug in FIG. 34A is combined with a disk-shaped member, FIG. 34C is a cross-sectional view showing a modification of the disk-shaped member in FIG. 34B, and FIG. 34D is a cross-sectional view showing another modification of the disk-shaped member in FIG. 34B.
[FIG. 35] FIG. 35 is a cross-sectional view of a table feeding system of a machine tool to which a ball screw feeding device according to a modification of the present invention is applied.
[FIG. 36] FIG. 36 is a cross-sectional view showing a first example of the housing position adjustment mechanism in which a support base is disposed on an axial end side with respect to the bearing unit.
[FIG. 37] FIG. 37 is a cross-sectional view showing a second example of the housing position adjustment mechanism in which the support base is disposed on the axial end side with respect to the bearing unit.
[FIG. 38] FIG. 38 is a cross-sectional view showing a third example of the housing position adjustment mechanism in which the support base is disposed on the axial end side with respect to the bearing unit.
[FIG. 39] FIG. 39 is a cross-sectional view showing a fourth example of the housing position adjustment mechanism in which the support base is disposed on the axial end side with respect to the bearing unit.
[FIG. 40] FIG. 40 is a cross-sectional view showing a rotation support device according to the present invention.
[FIG. 41] FIG. 41 is a cross-sectional view showing another rotation support device according to the present invention.
[FIG. 42] FIG. 42 is a cross-sectional view showing a shaft support device to which a support mechanism position adjustment mechanism according to the present invention is applied.
[FIG. 43] FIG. 43 is an enlarged view of a part XLIII in FIG. 42.

### DESCRIPTION OF EMBODIMENTS

Hereinafter, embodiments of a ball screw feeding device, which is an example of a rotation support device or a shaft support device according to the present invention, will be described in detail with reference to the drawings.

### (First Embodiment)

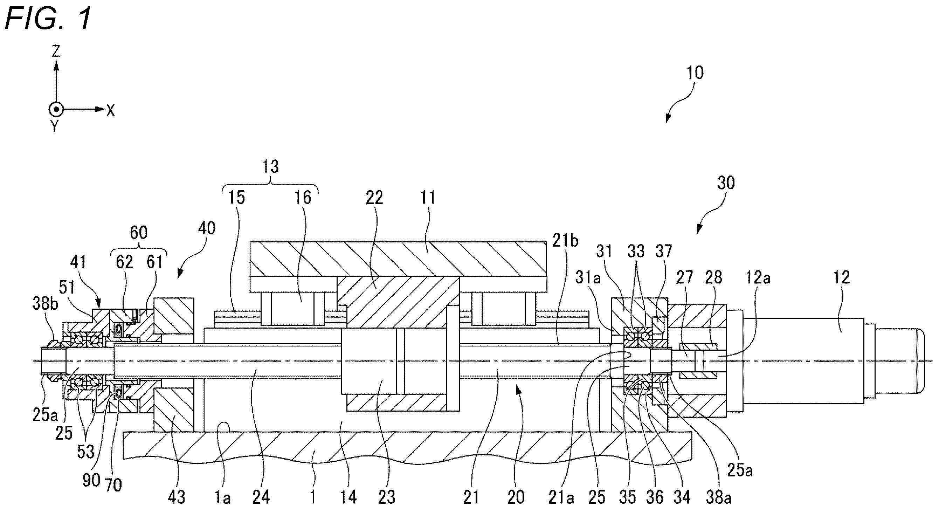

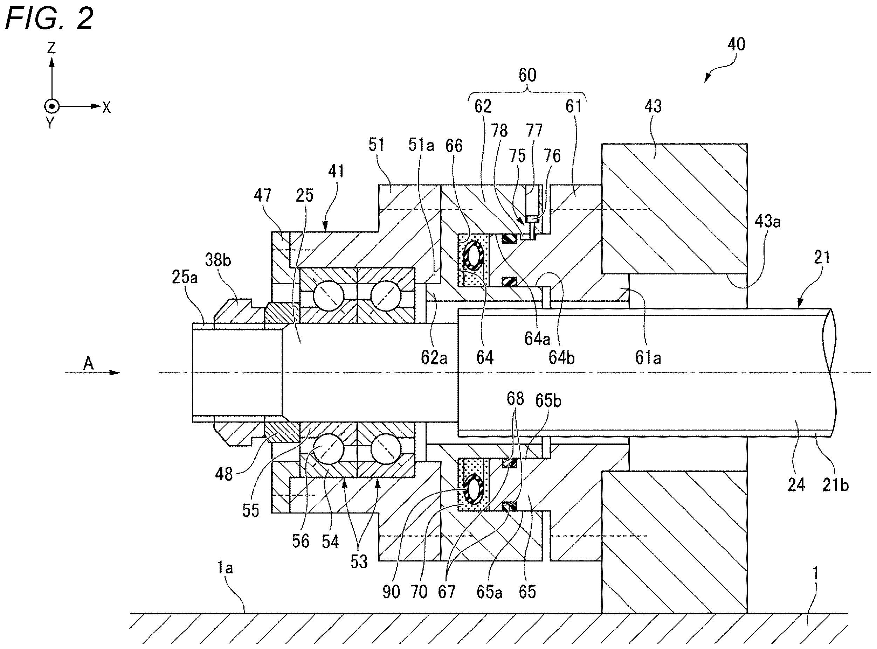

FIG. 1 shows a table feeding system of a machine tool to which a ball screw feeding device according to a first embodiment of the present invention is applied. Note that in FIGS. 1 to 3, an axial direction of a screw shaft 21 of a ball screw feeding device 20 (a left-right direction in FIG. 1) is defined as an X direction, a direction parallel to a mounting surface 1a of a base 1 and orthogonal to the axial direction of the screw shaft 21 (a direction perpendicular to a paper surface of FIG. 1) is defined as a Y direction, and a direction perpendicular to the mounting surface 1a of the base 1 (an upper-lower direction in FIG. 1) is defined as a Z direction. In FIG. 2 and each drawing corresponding to FIG. 2, a dotted line represents a bolt fastening portion.

A table feeding system 10 includes a moving table 11 fixed to a nut 23 of the ball screw feeding device 20, and is configured such that the moving table 11 is movable in the X direction by driving the screw shaft 21 of the ball screw feeding device 20 with a drive motor 12. The moving table 11 is provided with a pair of linear guides 13 (only one of which is shown in FIG. 1) on both sides in the Y direction with respect to the ball screw feeding device 20. Each linear guide 13 includes a guide rail 15 disposed on the base 1 in parallel with the screw shaft 21 via a rail mounting base 14, and two sliders 16 fixed to a lower surface of the moving table 11 and provided across the guide rail 15. When the screw shaft 21 is rotated by the drive motor 12, the moving table 11 is guided by the pair of linear guides 13 and moves reciprocally in a straight line together with the nut 23.

The ball screw feeding device 20 includes: the screw shaft 21 having a helical thread groove 21b formed on an outer peripheral surface thereof; the nut 23 disposed around the screw shaft 21, having a helical thread groove (not shown) on an inner peripheral surface, and fitted to a nut housing 22 that is fixed to the lower surface of the moving table 11; and a plurality of balls (not shown) arranged between the thread groove of the nut 23 and the thread groove 21b of the screw shaft 21 in a freely rolling manner.

The screw shaft 21 includes a large diameter portion 24 formed at a center in the axial direction and on which the thread groove 21b is formed, and a small diameter portion 25 formed at both end portions in the axial direction of the large diameter portion 24. A male screw 25a is formed on an outer peripheral surface on a tip end side of the small diameter portion 25, and a small diameter shaft portion 27 is provided at a tip end on one side (right side in the drawing) of the screw shaft 21. A rotation shaft 12a of the drive motor 12 is connected to the small diameter shaft portion 27 via a coupling 28.

Regarding the screw shaft 21, one side of the screw shaft 21 to which the drive motor 12 is coupled is supported by a first support mechanism 30 in a rotatable manner, and the other side (left side in the drawing) of the screw shaft 21 is supported by a second support mechanism 40 in a rotatable manner.

The first support mechanism 30 includes a fixed side bearing housing 31 fixed to the base 1, and a pair of angular ball bearings 33 and 33 that support the screw shaft 21 in a rotatable manner with respect to the fixed side bearing housing 31 and are arranged in face-to-face combination. The pair of angular ball bearings 33 and 33 each include an outer ring 34 fitted inside the fixed side bearing housing 31, an inner ring 35 fitted outside the small diameter portion 25 of the screw shaft 21, and a plurality of balls 36 arranged in a freely rolling manner between the outer ring 34 and the inner ring 35 with a contact angle.

Of the pair of angular ball bearings 33 and 33, the outer ring 34 of the angular ball bearing 33 on an inner side in the axial direction is brought into contact with an inward flange 31a of the fixed side bearing housing 31, and the outer ring 34 of the angular ball bearing 33 on an outer side in the axial direction is fixed by an outer ring retainer 37 fastened to the fixed side bearing housing 31. The inner ring 35 of the angular ball bearing 33 on the inner side in the axial direction is brought into contact with a step portion 21a between the large diameter portion 24 and the small diameter portion 25 of the screw shaft 21, and the inner ring 35 of the angular ball bearing 33 on the outer side in the axial direction is fastened by a fastening nut 38a which is screwed to the male screw 25a.

Therefore, the first support mechanism 30 supports the screw shaft 21 in a state in which a position in the axial direction of the screw shaft 21 is fixed.

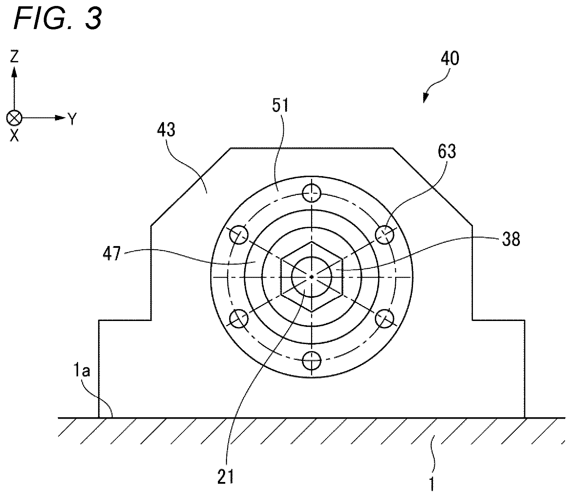

Referring also to FIGS. 2 and 3, the second support mechanism 40 includes a bearing unit 41 disposed at an end portion on the other side of the screw shaft 21, a support base 43 fixed to the base 1 on an axial center side than the bearing unit 41, and a housing position adjustment mechanism 60 disposed between the bearing unit 41 and the support base 43. The support base 43 is provided with a through hole 43a through which the screw shaft 21 passes.

The bearing unit 41 includes a moving side bearing housing 51, and a pair of angular ball bearings 53 and 53 that support the screw shaft 21 in a rotatable manner with respect to the moving side bearing housing 51.

The pair of angular ball bearings 53 and 53 each include an outer ring 54 fitted inside the moving side bearing housing 51, an inner ring 55 fitted outside the small diameter portion 25 of the screw shaft 21, and a plurality of balls 56 arranged in a freely rolling manner between the outer ring 54 and the inner ring 55 with a contact angle.

Of the pair of angular ball bearings 53 and 53, the outer ring 54 of the angular ball bearing 53 on the inner side in the axial direction is brought into contact with an inward flange 51a of the moving side bearing housing 51, the outer ring 54 of the angular ball bearing 53 on the outer side in the axial direction is fastened by an outer ring retainer 47 which is fastened and fixed to the moving side bearing housing 51, and both of the outer rings 54 and 54 are positioned in the axial direction with respect to the moving side bearing housing 51. The inner ring 55 of the angular ball bearing 53 disposed on the outer side in the axial direction is fastened by a fastening nut 38b screwed to the male screw 25a via a spacer 48.

That is, the pair of angular ball bearings 53 and 53, the moving side bearing housing 51, and the outer ring retainer 47 can be unitized as the bearing unit 41 in a state in which a predetermined preload is applied to the pair of angular ball bearings 53 and 53 arranged in face-to-face combination, and the bearing unit 41 can be easily attached to the screw shaft 21 and to the housing position adjustment mechanism 60. In this configuration, the moving side bearing housing 51 may be integrated with a bearing housing side member 62 as necessary.

The housing position adjustment mechanism 60 includes a support base side member 61 that is provided on a support base 43 side and through which the screw shaft 21 passes, and a bearing housing side member 62 that is provided on a moving side bearing housing 51 side and is movable relative to the support base side member 61 in the axial direction. The support base side member 61 and the bearing housing side member 62 face each other in the axial direction.

The support base side member 61 has an annular portion 61a that protrudes toward the support base 43 and fits into the through hole 43a of the support base 43, and is fixed to the support base 43 with a plurality of bolts (not illustrated). The bearing housing side member 62 has an annular portion 62a that protrudes toward the moving side bearing housing 51 and fits into the inward flange 51a, and is fixed to the moving side bearing housing 51 with a plurality of bolts 63 (see FIG. 3).

A side surface of the bearing housing side member 62 on a support base side member 61 side is provided with a bottomed annular recessed portion 64 that opens to the support base side member 61 side (one side in the axial direction). Further, a side surface of the support base side member 61 on a bearing housing side member 62 side is provided with an annular protruding portion 65 that protrudes into the annular recessed portion 64 toward the bearing housing side member 62 side (the other side in the axial direction). The annular recessed portion 64 and the annular protruding portion 65 are fitted together so as to be slidable in the axial direction, and an annular pressure chamber 66 is formed between a bottom surface, an inward surface 64a, and an outward surface 64b of the annular recessed portion 64, and a tip end surface of the annular protruding portion 65.

A hollow member 90 having a sealed structure is disposed within the pressure chamber 66, and a space within the pressure chamber 66 other than the hollow member 90 is filled with a working fluid 70.

The hollow member 90 is a life-ring-shaped structure formed in an annular shape and having an elliptical cross section with an inner diameter larger than that of the outward surface 64b of the annular recessed portion 64 and an outer diameter smaller than that of the inward surface 64a of the annular recessed portion 64, and is made of an elastically deformable rubber, resin, metal, or the like, or a combination thereof. The hollow member 90 contains any liquid or gas that has an elastic effect when an external force is applied thereto and has industrially confirmed rigidity.

In the present embodiment, oil is used as the working fluid 70, but is not limited thereto, and may be any liquid or gas, including water, that has substantially an elastic effect when an external force is applied and has industrially confirmed rigidity.

Regarding the elastic effect of the working fluid, reference is made to Non-Patent Literature ("Measurement of bulk modulus of fluids" written by Junichi Deshimaru and Hirohisa Tanaka, Hydraulics and Pneumatics Society, Vol. 19, No. 7, 1988, pp. 580-583), which describes that the bulk elastic modulus of working oil is affected by the inclusion of gas, for example.

Further, O-rings 67 are respectively mounted between an outward surface 65a of the annular protruding portion 65 and the inward surface 64a of the annular recessed portion 64, and between an inward surface 65b of the annular protruding portion 65 and the outward surface 64b of the annular recessed portion 64. Specifically, the O-rings 67 are disposed in annular seal grooves 68 formed in the outward surface 65a and in the inward surface 65b of the annular protruding portion 65, and are in sliding contact with the inward surface 64a and the outward surface 64b of the annular recessed portion 64 correspondingly to seal a radial gap between the outward surface 65a of the annular protruding portion 65 and the inward surface 64a of the annular recessed portion 64 and a radial gap between the inward surface 65b of the annular protruding portion 65 and the outward surface 64b of the annular recessed portion 64. Alternatively, the seal grooves 68 may be formed in the inward surface 64a and the outward surface 64b of the annular recessed portion 64. One O-ring 67 and one seal groove 68 are disposed in opposing surfaces, respectively. Alternatively, a plurality of O-rings 67 and a plurality of seal grooves 68 may be disposed in the opposing surfaces correspondingly. As a result, the O-rings 67 prevent leakage of the working fluid 70 that fills the pressure chamber 66. The O-ring 67 may be subjected to a surface treatment having wear resistance or the like from the viewpoint of preventing wear.

A rotation prevention mechanism 75 is provided between the support base side member 61 and the bearing housing side member 62 to prevent relative rotation therebetween. Specifically, for example, the bearing housing side member 62 has a through hole 77 formed in at least one location in a circumferential direction, the through hole 77 penetrating in a radial direction such that a tip end portion of a positioning pin 76 protrudes from the inward surface 64a of the annular recessed portion 64. The tip end portion of the positioning pin 76 is inserted into a long hole 78 formed along the axial direction in the outward surface 65a of the annular protruding portion 65 of the support base side member 61 so that the bearing housing side member 62 can move in the axial direction. Note that the positioning pin 76 may be replaced by a positioning key (not shown) or the like having a similar rotation prevention function in a rotation direction, which is inserted into the long hole 78 so that the bearing housing side member 62 can be moved in the axial direction.

In such a housing position adjustment mechanism 60, the hollow member 90 is disposed in the pressure chamber 66, the pressure chamber 66 is filled with the working fluid 70, and then by fastening the fastening nut 38b, the bearing housing side member 62 is pushed into the support base side member 61 via the pair of angular ball bearings 53 and 53 and the moving side bearing housing 51. Accordingly, the hollow member 90 in the pressure chamber 66 is compressed by the working fluid 70, and pressure in a screw shaft direction is applied to the working fluid 70.

Further, since the support base side member 61 is fixed to the base 1 via the support base 43, the bearing housing side member 62 and the moving side bearing housing 51 are pressed toward the left direction in the drawing via the working fluid 70 due to the pressure of the hollow member 90 in a compressed state disposed in the pressure chamber 66. As a result, tension is applied to the screw shaft 21 to the left direction in FIGS. 1 and 2 in advance.

The pressure of the hollow member 90 disposed in the pressure chamber 66 can be freely controlled by adjusting an amount of tightening of the fastening nut 38b. That is, the magnitude of a load applied to the screw shaft 21 in the axial direction can be freely set by the fastening nut 38b.

In addition to the setting by the amount of tightening of the fastening nut 38b, the magnitude of the load applied to the screw shaft 21 in the axial direction by the working fluid 70 and the hollow member 90 may be set in consideration of volume expansion due to a temperature rise of the working fluid 70 or the hollow member 90 caused by a temperature rise of the angular ball bearings 53 and 53 or the screw shaft 21 during operation of the ball screw feeding device 20. In addition, the magnitude of the load applied to the screw shaft 21 in the axial direction by the working fluid 70 and the hollow member 90 may be set in consideration of volume expansion due to a temperature rise of the working fluid 70 and the hollow member 90 caused by changes in the environment around the ball screw feeding device during the operation of the ball screw feeding device 20.

Next, the operation of the ball screw feeding device 20 according to the present embodiment will be described.

In the ball screw feeding device 20, when the screw shaft 21 is rotated by the drive motor 12 and the moving table 11 fixed to the nut 23 is moved reciprocally in a straight line, the drive motor 12, the angular ball bearings 33 and 53, the nut 23, and the like generate heat along with the movement, a temperature of the ball screw feeding device 20 gradually rises, and the screw shaft 21 extends in the axial direction due to thermal expansion.

When the screw shaft 21 thermally expands and extends in the axial direction, in the ball screw feeding device 20 according to the present embodiment illustrated in FIG. 1, since a right end portion of the screw shaft 21 is fixed to the fixed side bearing housing 31 via the angular ball bearings 33 and 33, the screw shaft 21 extends to the left. When the screw shaft 21 extends in the axial direction (to the left) due to the influence of heat, the bearing unit 41 and the bearing housing side member 62 move in the same direction following the extension of the screw shaft 21 in the axial direction due to thermal expansion while maintaining a state of being pressed via the working fluid 70 by the pressure of the hollow member 90 disposed in the pressure chamber 66.

In the present embodiment, the hollow member 90 is designed to continuously push the bearing unit 41 and the bearing housing side member 62 to the left via the working fluid 70 even when the screw shaft 21 extends in the axial direction. The hollow member 90 and the pressure chamber 66 have a high degree of freedom in design, and by appropriately selecting the physical properties of the working fluid that fills the pressure chamber and the size and shape of the pressure chamber, it is possible to apply a sufficient and appropriate load in response to a larger extension of the shaft compared to the case where a disc spring or the like is used. Therefore, even when the temperature of the ball screw feeding device 20 rises by more than 4 degrees, support rigidity in the axial direction can be maintained by moving the pair of angular ball bearings 53 and 53 in the axial direction, and rigidity in the axial direction of the ball screw feeding device 20 is stabilized.

In particular, since the pressure by the hollow member 90 can be changed corresponding to the extension of the screw shaft 21 in the axial direction even when the temperature rises by more than 4 degrees, during extension of the screw shaft 21 in the axial direction, the rigidity of the ball screw feeding device 20 in the axial direction is stabilized while maintaining a state in which the pair of angular ball bearings 33 and 33 are fixed supports.

In this case, since an excessive load does not act on the pairs of angular ball bearings 33, 33 and 53, 53, there is no risk of excessive wear or seizure due to poor lubrication, and lifetimes of the pairs of angular ball bearings 33, 33 and 53, 53 become long.

That is, in the present embodiment, since it is no longer necessary to apply pre-tension to the screw shaft 21 as much as that applied by the spacer in the ball screw described in Patent Literature 1, an excessive load does not act on the pairs of angular ball bearings 33, 33 and 53, 53.

Further, in the ball screw feeding device 20 according to the present embodiment, it is not necessary to install an external device for supplying the working fluid 70 to the pressure chamber 66, and the housing position adjustment mechanism 60 can be simplified. As a result, the pressure in the pressure chamber 66 can be maintained with as little change as possible without consuming energy supplied from outside. The ball screw feeding device 20 according to the present embodiment may have a configuration in which an external device such as an accumulator or a pump is provided outside.

The O-ring 67 of the present embodiment also acts as a damping mechanism. That is, when a workpiece placed on the moving table 11 is machined, the vibration generated in the moving table 11 tends to cause the screw shaft 21, which has a relatively low rigidity, to vibrate as well. The vibration of the screw shaft 21 is also transmitted to the bearing housing side member 62 via the pair of angular ball bearings 33 and 33 and the moving side bearing housing 51, but the vibration to the bearing housing side member 62 is damped by the O-ring 67 between the bearing housing side member 62 and the support base side member 61. Therefore, the vibration of the screw shaft 21 can also be damped, and disturbance on the quality of a machined surface of the workpiece placed on the moving table 11 can be reduced.

At this time, the O-ring 67 disposed between the bearing housing side member 62 and the support base side member 61 can damp not only the vibration in the axial direction of the screw shaft 21 but also the vibration in the radial direction of the screw shaft 21.

In addition, the working fluid 70 of the housing position adjustment mechanism 60 is stored not only in the pressure chamber 66, but also between the outward surface 65a of the annular protruding portion 65 and the inward surface 64a of the annular recessed portion 64, between the inward surface 65b of the annular protruding portion 65 and the outward surface 64b of the annular recessed portion 64, and each gap on the pressure chamber 66 side relative to the O-ring 67. Therefore, the pressure of the hollow member 90 is transmitted via the working fluid 70, so that the bearing housing side member 62 is supported with a sufficient and appropriate load in the radial direction with respect to the support base side member 61.

As a result, the housing position adjustment mechanism 60 can provide the support rigidity in the radial direction to the screw shaft 21 via the pair of angular ball bearings 53 and 53 and the bearing housing 51, and can also have an alignment function with respect to the screw shaft 21.

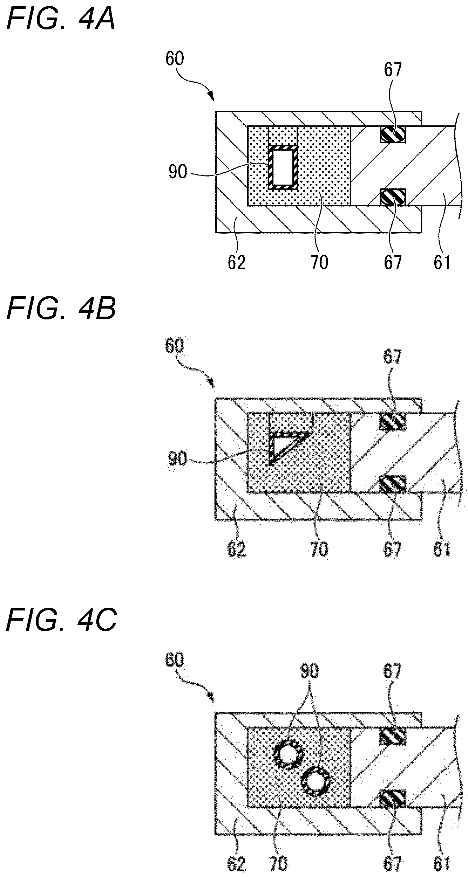

In the above embodiment, the hollow member 90 has an elliptical cross section, but is not limited thereto, and may have a rectangular cross section as shown in FIG. 4A or a triangular cross section as shown in FIG. 4B. In the above embodiment, the hollow member 90 is formed in an annular shape, but is not limited thereto, and may be formed in one or more spherical shapes as shown in FIG. 4C, in semicircular arc shapes (not shown), or the like.

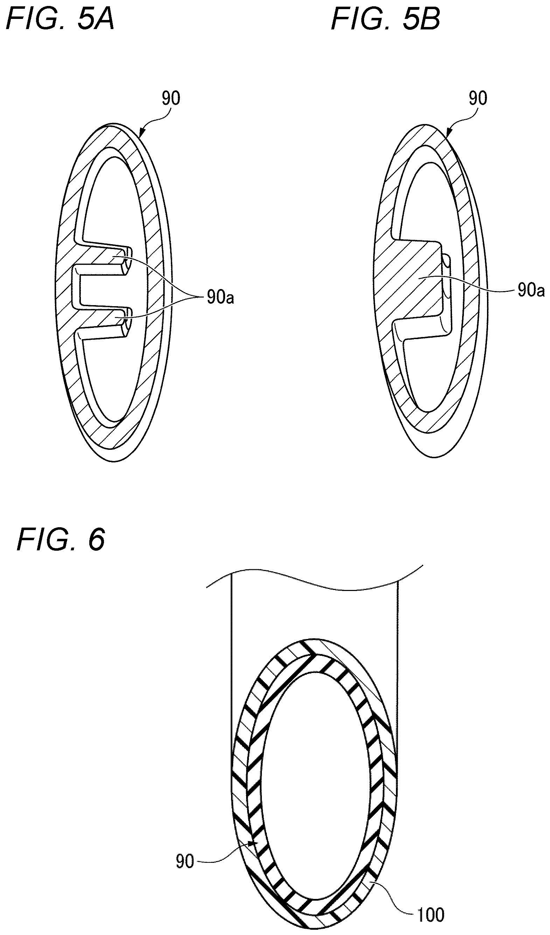

FIGS. 5A and 5B are cross-sectional views of the hollow member 90 formed in an annular shape according to modifications of the present embodiment. As in these modifications, the hollow member 90 may have at least one rib 90a protruding from an inner peripheral surface thereof. The rib 90a may be formed in an annular shape around the entire circumference of the hollow member 90, or may be formed partially in a circumferential direction of the hollow member 90. It is sufficient as long as the rib 90a is formed on a part of the ring-shaped cross section in the circumferential direction.

Since the hollow member 90 has such a rib 90a, when the hollow member 90 is compressed and deformed due to the pressure generated in the pressure chamber 66, the rib 90a and an inner peripheral surface facing the rib 90a come into contact with each other, so that it is possible to prevent the hollow member 90 from being excessively deformed, such as by undergoing plastic deformation. Accordingly, it is possible to prevent liquid or gas contained in the hollow member 90 from leaking out into the pressure chamber 66.

The rib 90a may be applied to a hollow member having a shape other than an annular shape, and may be formed inside the spherical or semicircular hollow member described above, for example.

Further, as in a modification shown in FIG. 6, the hollow member 90 may be provided with at least one outer layer 100 that covers (molds) the entire surface. Accordingly, the rigidity of the hollow member 90 can be changed, and the surface of the hollow member 90 can be protected from the working fluid 70 such as oil.

The outer layer 100 may be made of the same material as the hollow member, but may also be made of other materials.

Further, in the above embodiment, the hollow member 90 is molded seamlessly and integrally, and thus local stress concentration is unlikely to occur, and the hollow member 90 can be easily manufactured. The hollow member 90 is not limited to being molded integrally, and may be, for example, a coupling body having a hollow cross section formed by integrating two or more members via edge portions of the two or more members. Alternatively, the hollow member 90 may be formed by bending a member and coupling edge portions of the member to form a hollow cross section.

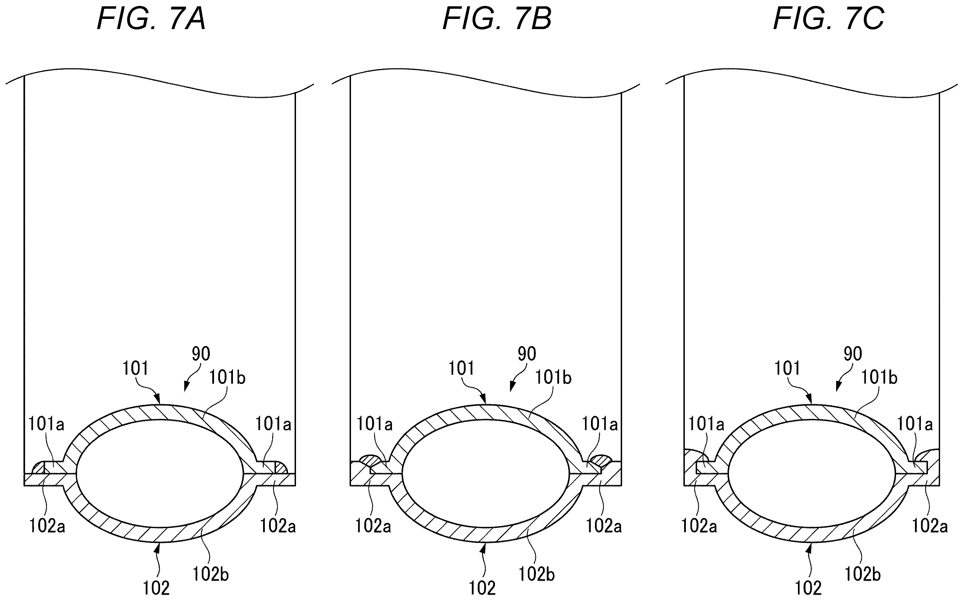

Specifically, in modifications based on a ring-shaped member as illustrated in FIGS. 7A to 9B, the hollow member 90 is a coupling body having a hollow cross section, which is formed by coupling and integrating two or more ring-shaped members 101 and 102 via ribs 101a and 102a formed on both peripheral edge portions of the ring-shaped members 101 and 102. As a method of coupling the ring-shaped members 101 and 102, an appropriate method may be selected from bonding, melt bonding, connection by a mechanical lock mechanism, and the like.

For example, as illustrated in FIGS. 7A to 7C, the hollow member 90 includes the ring-shaped member 101 on an outer diameter side and the ring-shaped member 102 on an inner diameter side, which are divided into two in the radial direction, and a hollow cross section is formed by circular arc-shaped portions 101b and 102b of the ring-shaped members 101 and 102. Further, in FIGS. 7A and 7B, one of the ribs 101a and 102a is made longer than the other, and the ribs 101a and 102a are coupled to each other by adhesion or melt bonding, and in particular, as illustrated in FIG. 7B, a tip end of the longer rib 102a may be bent so that the rib 102a covers a side surface of the shorter rib 101a. Further, as illustrated in FIG. 7C, the longer rib 102a and the shorter rib 101a may be coupled in a continuous or discontinuous U-shaped fastening structure so that the tip end of the longer rib 102a covers the tip end of the shorter rib 101a and inside thereof is sealed.

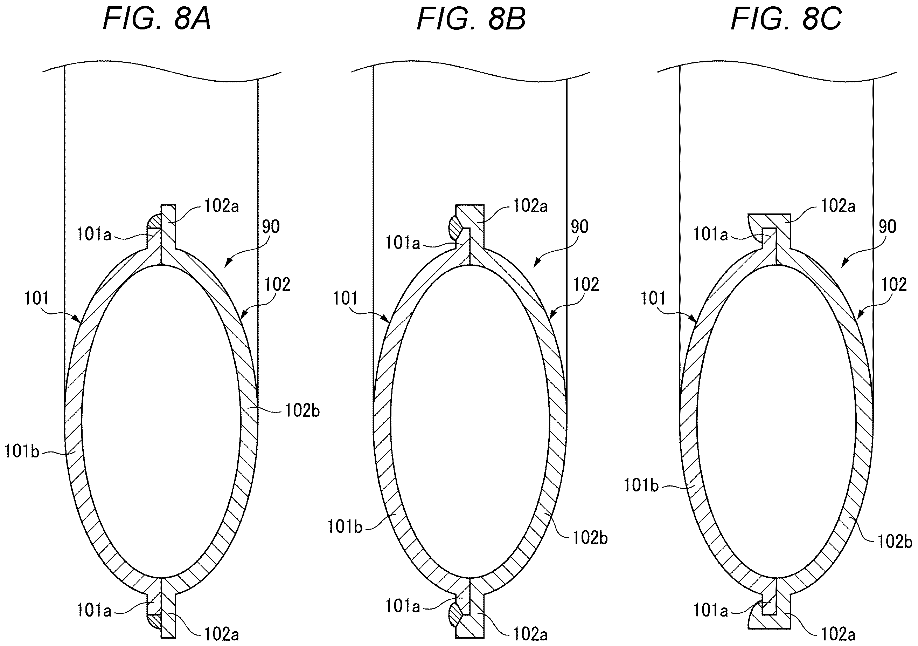

Alternatively, as illustrated in FIGS. 8A to 8C, the hollow member 90 includes the ring-shaped member 101 on the left side and the ring-shaped member 102 on the right side, which are divided into two in the axial direction, and a hollow cross section is formed by circular arc-shaped portions 101b and 102b of the ring-shaped members 101 and 102. Further, in FIG. 8A and 8B, one of the ribs 101a and 102a is also made longer than the other, and the ribs 101a and 102a are coupled to each other by adhesion or melt bonding, and in particular, as illustrated in FIG. 8B, a tip end of the longer rib 102a may be bent so that the rib 102a covers a side surface of the shorter rib 101a. Further, as illustrated in FIG. 8C, the longer rib 102a and the shorter rib 101a may be coupled in a continuous or discontinuous U-shaped fastening structure so that the tip end of the longer rib 102a covers the tip end of the shorter rib 101a and inside thereof is sealed.

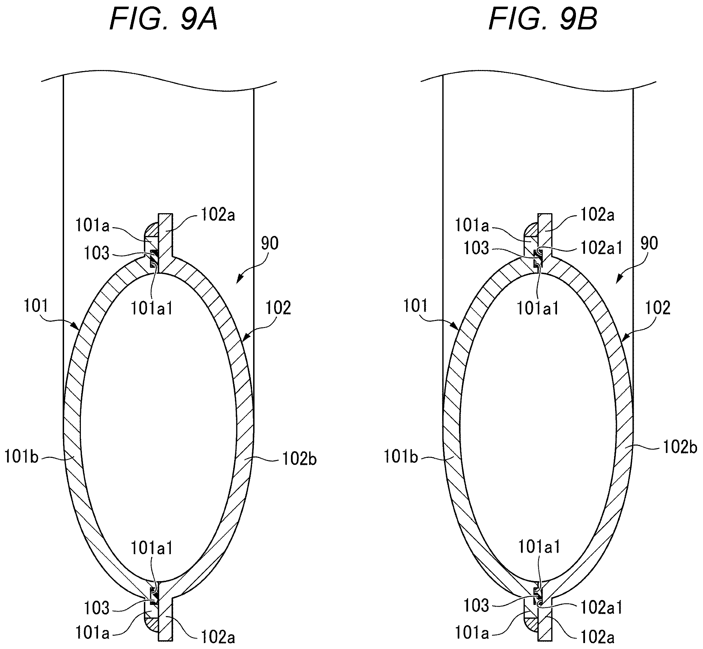

As illustrated in FIG. 9A and 9B, the hollow member 90 may be formed with seal grooves 101a1, 102a1 in the vicinity of edges in at least one of surfaces opposite to the ribs 101a and 102a of the ring-shaped members 101 and 102 divided into two (the rib 101a in FIG. 9A, the ribs 101a, 102a in FIG. 9B), and a seal member such as an O-ring 103 may be disposed to improve a sealing property of the inside.

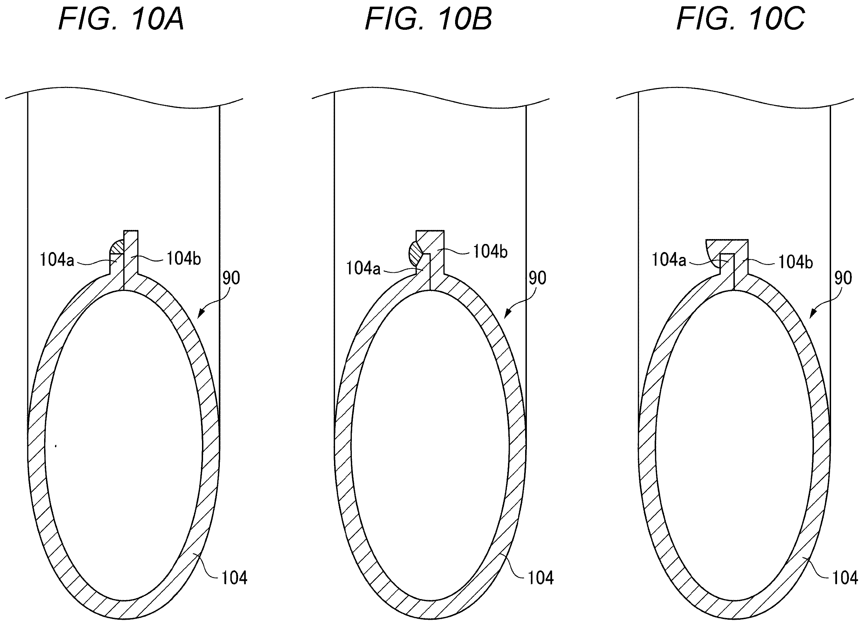

Further, in modifications based on a ring-shaped member as illustrated in FIGS. 10A to 10C, the hollow member 90 is formed by bending a ring-shaped member 104 having a band-shaped cross section so as to form a hollow cross section over the entire circumference, and coupling ribs 104a and 104b formed on a peripheral edge portion of the ring-shaped member 104. In this case, as a method of coupling the ring-shaped member 104, an appropriate method may also be selected from bonding, melt bonding, connection by a mechanical lock mechanism, and the like.

That is, in of FIGS. 10A and 10B, one of the ribs 104a and 104b is made longer than the other, and the ribs 104a and 104b are coupled to each other by adhesion or melt bonding, and in particular, as illustrated in FIG. 10B, a tip end of the longer rib 104b may be bent so that the rib 104b covers a side surface of the shorter rib 104a. Further, as illustrated in FIG. 10C, the longer rib 104b and the shorter rib 104a may be coupled in a continuous or discontinuous U-shaped fastening structure so that the tip end of the longer rib 104b covers the tip end of the shorter rib 104a and inside thereof is sealed.

As described above, with the configuration illustrated in FIGS. 7A to 10C, the deformable hollow member 90 can be easily manufactured by a method other than the integral molding.

Note that the peripheral edge portion of the ring-shaped member 101, 102, 104 may not include the rib 101a, 102a, 104a, 104b as illustrated in FIGS. 7 to 10. That is, the hollow member 90 may be formed by coupling the peripheral edge portions of the circular arc-shaped portions 101b, 102b of the ring-shaped members 101, 102 by an appropriate coupling method, or the hollow member 90 may be formed by coupling a peripheral edge portion of a curved portion of the ring-shaped member 104 by an appropriate coupling method.

The configurations as illustrated in FIGS. 7A to 10C are not limited to those based on the ring-shaped members, but can also be applied to a planar member or a curved member for implementing a spherical shape or a semicircular arc shape as shown in FIG. 4C.

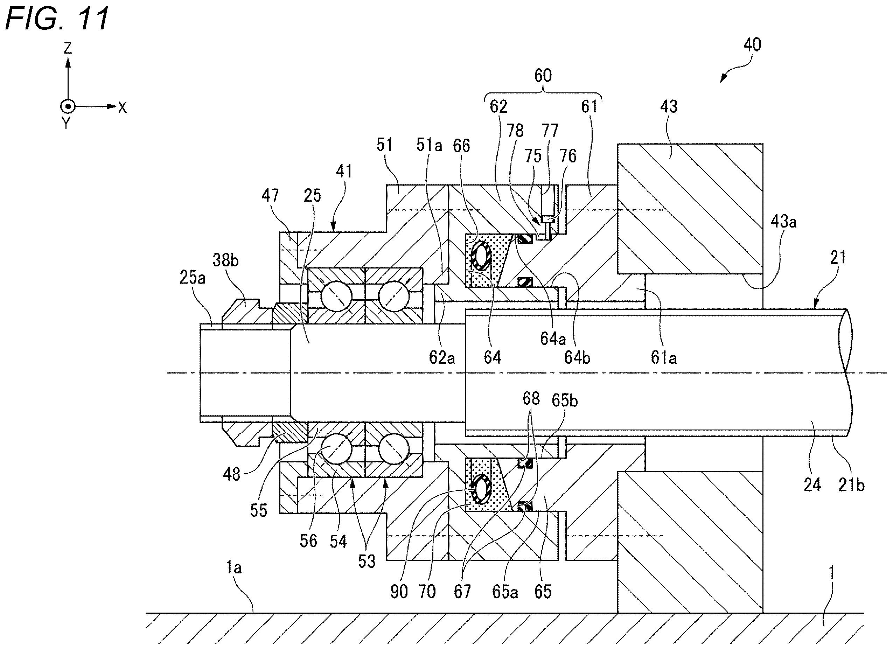

As a modification of the present embodiment, as illustrated in FIG. 11, a tip end surface of the annular protruding portion 65 of the support base side member 61 may be formed in a pointed protruding tapered shape from an inner peripheral edge to an outer peripheral edge such that an axial length of the pressure chamber 66 gradually increases toward an outer side in the radial direction.

As a result, in a state where the hollow member 90 is accommodated in the pressure chamber 66 and the pressure chamber 66 is filled with the working fluid 70, the bearing housing side member 62 is further aligned with respect to the support base side member 61, so that the alignment function of the pair of angular ball bearings 53 and 53 with respect to the screw shaft 21 can be further improved.

Note that although not illustrated, when the tip end surface of the annular protruding portion 65 of the support base side member 61 has a cone-shaped recessed tapered shape from the outer peripheral edge toward the inner peripheral edge, coaxiality of the pair of angular ball bearings 53 and 53 with respect to the screw shaft 21 can be improved.

Although not illustrated, the support base side member 61 may be integrally formed with the support base 43, and the bearing housing side member 62 may also be integrally formed with the moving side bearing housing 51.

### (Second Embodiment)

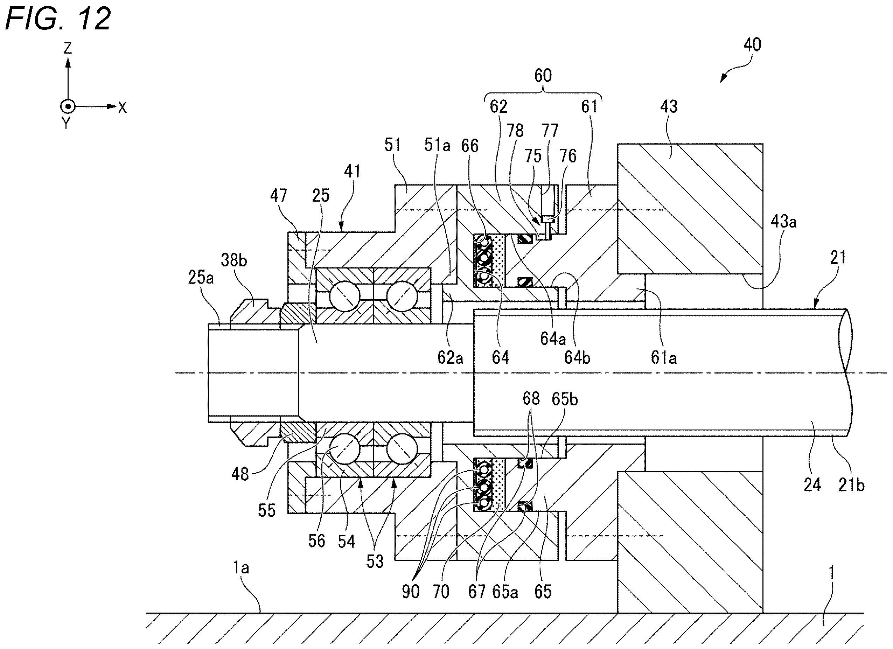

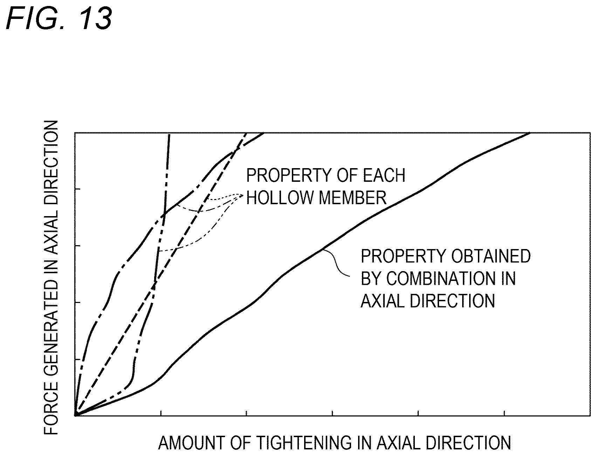

Next, a ball screw feeding device according to a second embodiment of the present invention will be described with reference to FIGS. 12 and 13. Note that in the present embodiment, the configuration of the housing position adjustment mechanism 60 of the second support mechanism 40 is different from that of the first embodiment.

In the housing position adjustment mechanism 60 of the second embodiment, a plurality of (three in the present embodiment) hollow members 90 are disposed in the pressure chamber 66. In the present embodiment, the three hollow members 90 are all formed in an annular shape, and are arranged concentrically with different outer diameter dimensions. Note that the hollow members 90 are not necessarily made of the same material, and appropriate rigidity can be imparted according to the shape and physical properties.

In addition, the plurality of hollow members 90 do not necessarily have to be arranged regularly, such as concentrically, or be annular, but are all constructed as a seamless sealed structure capable of generating pressure when being compressed.

As shown in FIG. 13, each hollow member 90 is deformed and compressed according to an amount of tightening of the fastening nut 38b in the axial direction. Further, the bearing housing side member 62 and the moving side bearing housing 51 are pressed via the working fluid 70 by a force generated in the screw shaft direction by the plurality of hollow members 90 in the compressed state. At this time, as shown in FIG. 13, the amount of tightening in the axial direction can be made larger than the case when a single hollow member 90 generates the same force in the axial direction, due to the effect of elastic deformation of the other hollow members 90.

Therefore, similarly to the first embodiment, even when the temperature of the ball screw feeding device 20 rises by more than 4 degrees, the hollow members 90 function in a composite manner, the support rigidity in the axial direction can be maintained by moving the pair of angular ball bearings 53 and 53 in the axial direction, and rigidity in the axial direction of the ball screw feeding device 20 is stabilized. In addition, by using a plurality of hollow members 90, not only can a large deformation be obtained even with a same compressive load, but it also makes it possible to avoid a complete loss of a function due to breakage of a member itself caused by plastic deformation or the like, which is a concern when only a single hollow member is used.

Other configurations and operations are similar as those of the first embodiment.

### (Third Embodiment)

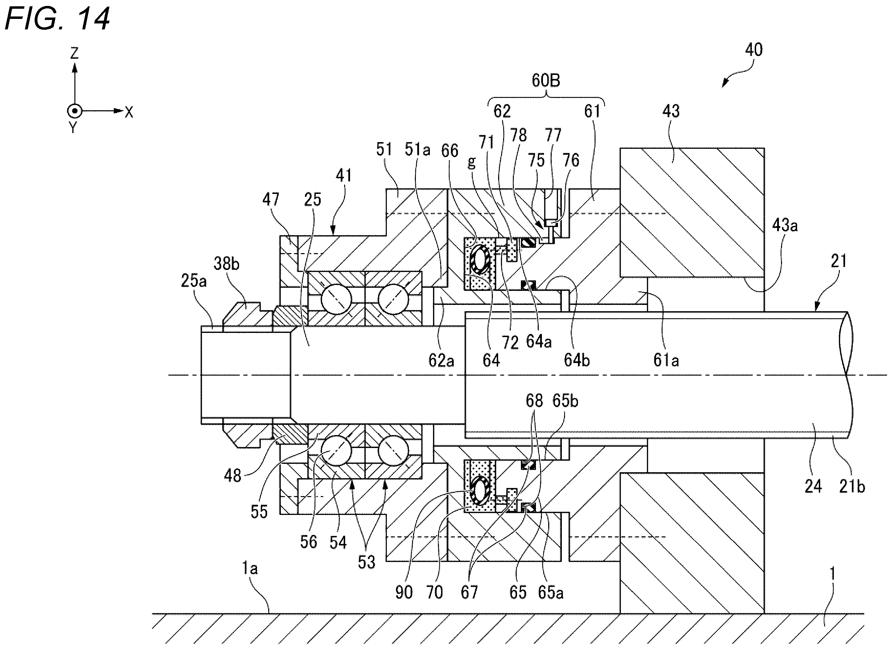

Next, a ball screw feeding device according to a third embodiment of the present invention will be described with reference to FIG. 14. Note that in the present embodiment, the configuration of the housing position adjustment mechanism 60 of the second support mechanism 40 is different from that of the first embodiment.

In the housing position adjustment mechanism 60 of the third embodiment, a storage chamber 71 is formed in the annular protruding portion 65, and an orifice 72 is formed along the axial direction in at least one location (two locations in FIG. 14) in the circumferential direction so that the storage chamber 71 communicates with the pressure chamber 66.

The storage chamber 71 is formed in a disk groove shape, opening to the outward surface 65a of the annular protruding portion 65 on a side closer to a tip end surface of the annular protruding portion 65 than the groove in which the O-ring 67 is disposed. Therefore, in the present embodiment, the working fluid 70 is stored in the storage chamber 71 and the orifice 72 in addition to the pressure chamber 66.

Accordingly, in the present embodiment, the bearing housing side member 62 vibrates together with the moving side bearing housing 51 and the pair of angular ball bearings 33 and 33 due to the vibration of the screw shaft 21, and thus the working fluid 70 in the pressure chamber 66 and the storage chamber 71 passes through the orifice 72 and a gap g between the outward surface 65a of the annular protruding portion 65 and the inward surface 64a of the annular recessed portion 64, so that the vibration can be damped. Therefore, similarly to the O-ring 67 described above, when a workpiece placed on the moving table 11 is machined, the vibration transmitted to the screw shaft 21 can be damped, and the disturbance on the quality of a machined surface of the workpiece can be further reduced.

In the above embodiment, the storage chamber 71 is formed on the outer diameter side so as to open to the outward surface 65a of the annular protruding portion 65. Alternatively, the storage chamber 71 may be formed on the inner diameter side so as to open to the inward surface 65b of the annular protruding portion 65.

In addition, the cross-sectional shape and the length of the orifice 72 may be freely set as long as the damping function can be exerted.

Other configurations and operations are similar as those of the first embodiment.

### (Fourth Embodiment)

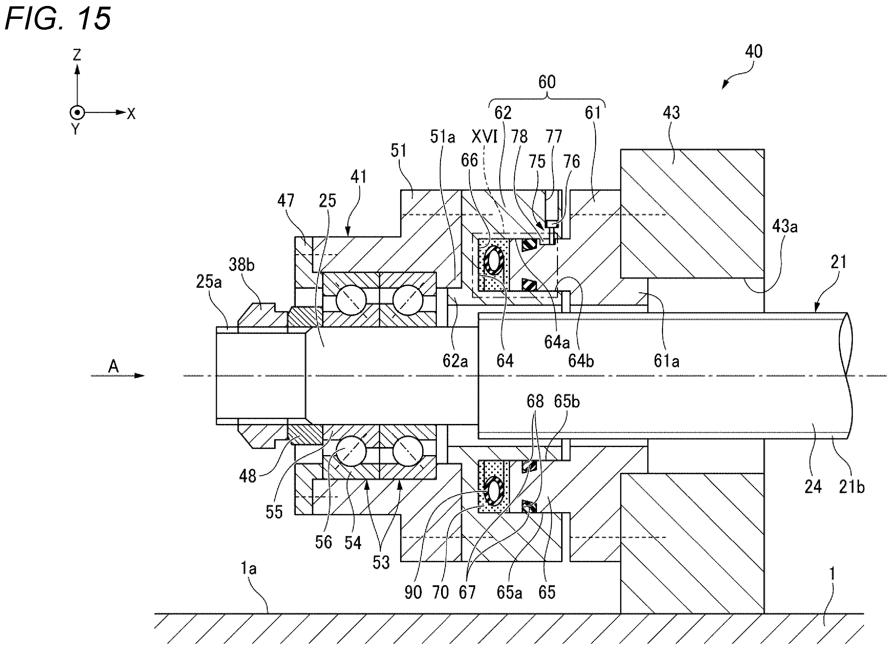

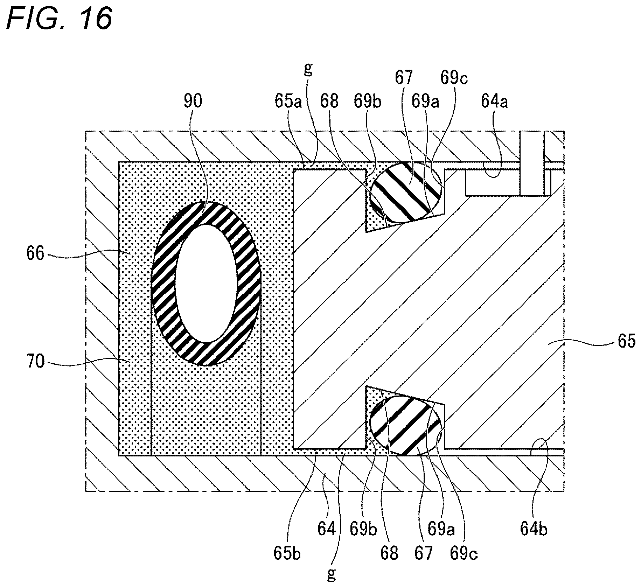

Next, a ball screw feeding device according to a fourth embodiment of the present invention will be described with reference to FIGS. 15 and 16. Note that in the present embodiment, the configuration of the housing position adjustment mechanism 60 of the second support mechanism 40 is different from that of the first embodiment.

In the housing position adjustment mechanism 60 of the fourth embodiment, each of the seal grooves 68 formed in the outward surface 65a and the inward surface 65b of the annular protruding portion 65 includes a tapered surface 69a whose groove depth decreases as a distance from the pressure chamber 66 increases, and both axial side surfaces 69b and 69c having a circular ring shape extending along the radial direction from both end edges of the tapered surface 69a in the axial direction.

A distance in the axial direction between the axial side surfaces 69b and 69c is larger than a width of the O-ring 67 in the axial direction in a state of being elastically deformed and mounted in the seal groove 68. As a result, the working fluid 70 that has passed through the gap g from the pressure chamber 66 flows around to the vicinity of a boundary between the tapered surface 69a and the axial side surface 69b which has a deep groove depth.

Therefore, as the pressure of the working fluid 70 in the pressure chamber 66 increases and the O-ring 67 is pushed toward the atmospheric pressure side by the working fluid 70, the sealing property of the O-ring 67 is further improved by a wedge structure between the tapered surface 69a of the seal groove 68 and the opposing inward surface 64a or outward surface 64b of the annular recessed portion 64. As a result, even when relative movement occurs between the support base side member 61 and the bearing housing side member 62, leakage of the working fluid 70 to the atmospheric pressure side can be prevented, and rigidity of the ball screw feeding device 20 in the axial direction can be continuously maintained.

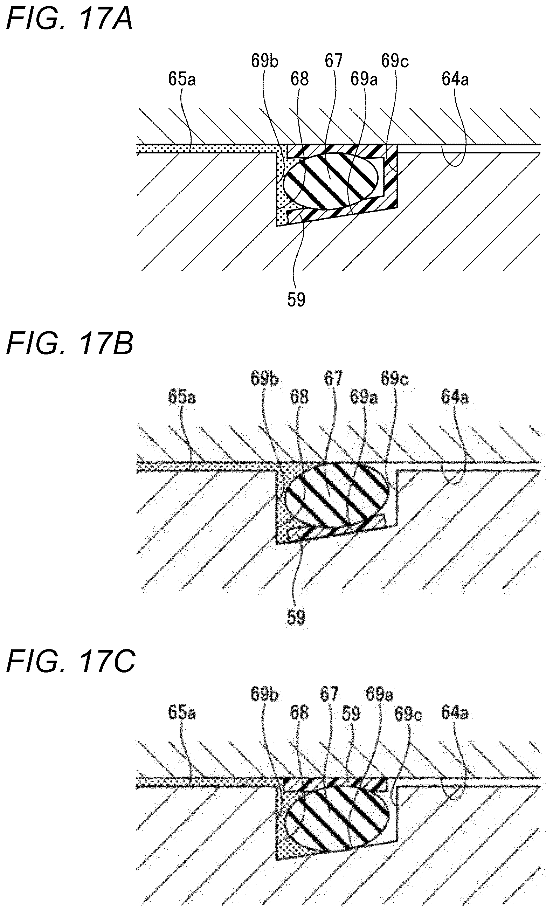

Note that as modifications of the present embodiment, as illustrated in FIGS. 17A to 17C, a wear-resistant member 59 may be interposed between the O-ring 67 and at least one of the inward surface 64a of the annular recessed portion 64 and the outward surface 65a of the annular protruding portion 65 (in the present embodiment, the tapered surface 69a of the seal groove 68 formed on the outward surface 65a).

Specifically, as illustrated in FIG. 17A, the wear-resistant member 59 may be formed as an annular member having a U-shaped cross section so as to be positioned between an outer peripheral surface of the O-ring 67 and the inward surface 64a of the annular recessed portion 64 and between an inner peripheral surface of the O-ring 67 and the tapered surface 69a of the seal groove 68 formed on the outward surface 65a of the annular protruding portion 65.

As illustrated in FIG. 17B, the wear-resistant member 59 may be formed as an annular member having a linear cross section so as to be positioned between the inner peripheral surface of the O-ring 67 and the tapered surface 69a of the seal groove 68 formed on the outward surface 65a of the annular protruding portion 65. Further, as illustrated in FIG. 17C, the wear-resistant member 59 may be formed as an annular member having a linear cross section so as to be positioned between the outer peripheral surface of the O-ring 67 and the inward surface 64a of the annular recessed portion 64.

As the wear-resistant member 59, for example, a resin material such as fluorine-based resin or a metal material subjected to appropriate surface treatment is used.

In any form of FIGS. 17A to 17C, by using the wear-resistant member 59, stress concentration applied to the O-ring 67 can be dispersed, and damage such as wear on the O-ring 67 and a contact surface with the O-ring 67 can be prevented.

Note that as illustrated in FIG. 16, the wear-resistant member 59 may also be interposed between the O-ring 67 and at least one of the outward surface 64b of the annular recessed portion 64 and the inward surface 65b of the annular protruding portion 65 (in FIG. 16, the tapered surface 69a of the seal groove 68 formed on the inward surface 65b).

In FIGS. 17A to 17C, the wear-resistant member 59 is interposed between the O-ring 67 and a surface opposite to the O-ring 67 in the seal groove 68 having the tapered surface 69a. In this regard, the above effect can also be achieved by interposing the wear-resistant member 59 between the O-ring 67 and the surface opposite to the O-ring 67 in the seal groove 68 having a uniform groove depth as illustrated in FIG. 2.

Other configurations and operations are similar as those of the first embodiment.

### (Fifth Embodiment)

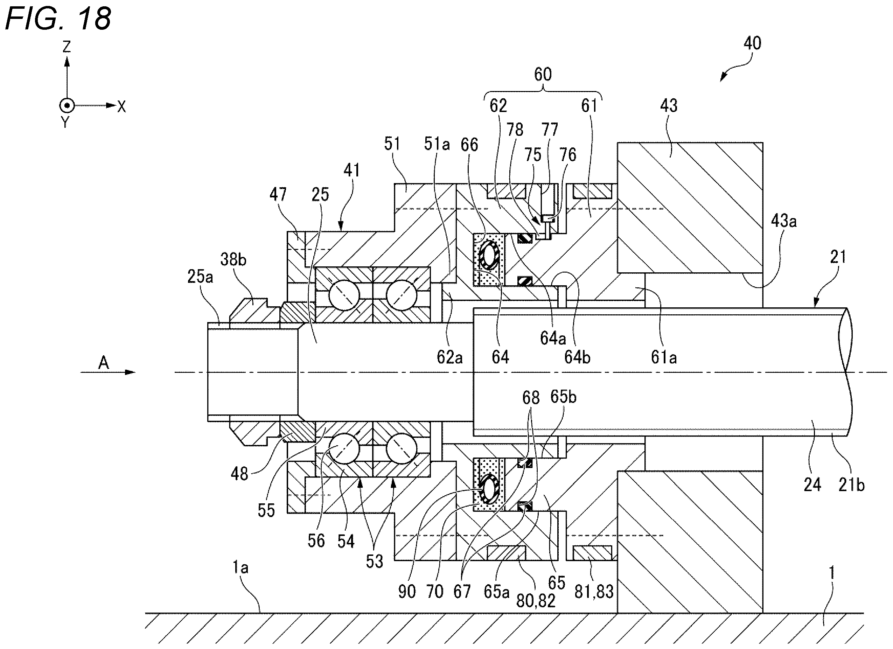

Next, a ball screw feeding device according to a fifth embodiment of the present invention will be described with reference to FIG. 18. Note that in the present embodiment, the configuration of the housing position adjustment mechanism 60 of the second support mechanism 40 is different from that of the first embodiment.

In the housing position adjustment mechanism 60 of the fifth embodiment, heating elements 80 and 81 such as electric heating wires or rubber heaters, serving as working medium volume changing parts, are arranged annularly or discretely on an outer peripheral surface of the support base side member 61 and an outer peripheral surface of the bearing housing side member 62.

Accordingly, heat from the heating elements 80 and 81 is transferred from the support base side member 61 and the bearing housing side member 62 to the hollow member 90 and the working fluid 70 in the pressure chamber 66, and the hollow member 90 and the working fluid 70 are heated, so that the volumes of the hollow member 90 and the working fluid 70 can be expanded. As a result, even when the screw shaft 21 is elongated in the axial direction, a load is excited in the pressure chamber 66 due to the volume expansion of the hollow member 90 and the working fluid 70, so that the support rigidity in the axial direction can be maintained.

Note that in the present embodiment, the heating elements 80 and 81 are attached as the working medium volume changing parts to the outer peripheral surface of the support base side member 61 and the outer peripheral surface of the bearing housing side member 62, but cooling media 82 and 83 such as cooling jackets or cooling elements may be attached instead.

By using the cooling media 82 and 83, even when the load excited in the pressure chamber 66 becomes excessive due to the volume expansion of the hollow member 90 and the working fluid 70, the hollow member 90 and the working fluid 70 can be cooled and the volumes of the hollow member 90 and the working fluid 70 can be contracted. Accordingly, the support rigidity of the ball screw feeding device 20 in the axial direction can be prevented from being excessively increased, and the support rigidity in the axial direction can be continuously maintained in a stable state.

In the present embodiment, the temperatures of the hollow member 90 and the working fluid 70 are affected by the components, the installation environment, an operation cycle and the like of the ball screw feeding device 20, and therefore, the heating elements 80 and 81 and cooling media 82 and 83 may be used to set up a feedback loop for the temperatures of the components, the hollow member 90, the working fluid 70 and the like, thereby controlling the hollow member 90 and the working fluid 70 to a target temperature. Further, in the present embodiment, the operation of the heating elements 80 and 81 and the cooling media 82 and 83 may be feedback controlled by taking into account a volume change of the working fluid 70, the state of pressure in the pressure chamber 66, a relative displacement in the axial direction between the support base side member 61 and the bearing housing side member 62, and the like.

In the present embodiment, the working medium volume changing part is attached to both the support base side member 61 and the bearing housing side member 62. Alternatively, the working medium volume changing part may be attached to one of the support base side member 61 and the bearing housing side member 62.

Further, in the present embodiment, the working medium volume changing parts are provided on the outer peripheral surface of the support base side member 61 and the outer peripheral surface of the bearing housing side member 62, and the working medium volume changing part may be attached to any location such as an axial side surface, an inner peripheral surface, or the interior as long as the volumes of the hollow member 90 and the working fluid 70 in the pressure chamber 66 can be expanded or contracted.

Further, a heating element may be attached to one of the support base side member 61 and the bearing housing side member 62, and a cooling medium may be attached to the other. The heating element and the cooling medium may be provided so as to coexist in either the support base side member 61 or the bearing housing side member 62.

Other configurations and operations are similar as those of the first embodiment.

### (Sixth Embodiment)

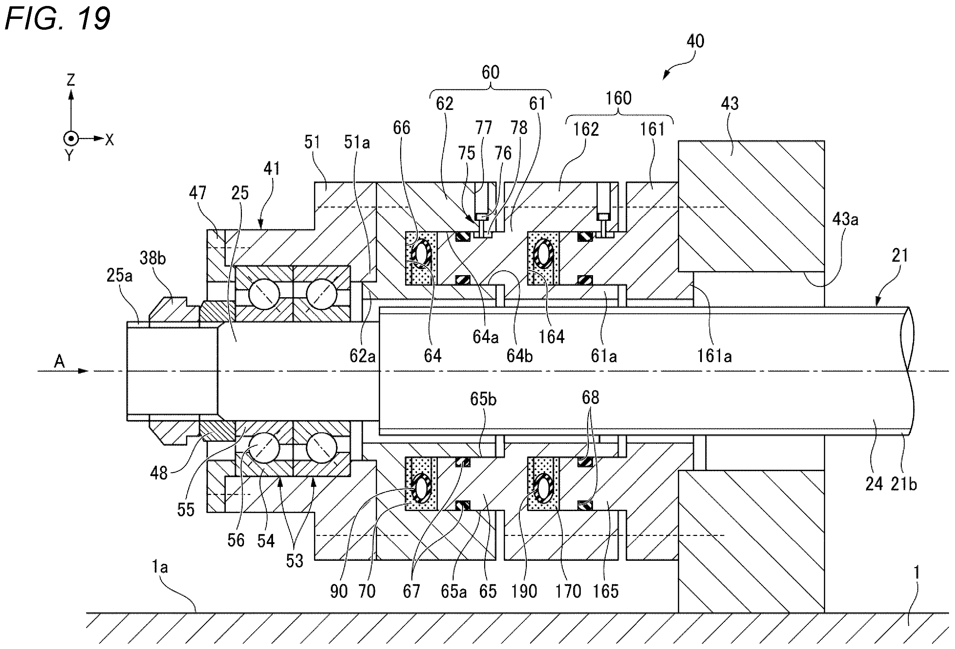

Next, a ball screw feeding device according to a sixth embodiment of the present invention will be described with reference to FIG. 19. Note that the present embodiment is different from the first embodiment in that the second support mechanism 40 further includes another housing position adjustment mechanism 160.

That is, the second support mechanism 40 of the sixth embodiment further includes another housing position adjustment mechanism 160 disposed adjacent to the housing position adjustment mechanism 60 between the bearing unit 41 and the support base 43.

The other housing position adjustment mechanism 160 includes: another support base side member 161 which is provided on the support base 43 side and through which the screw shaft 21 passes; another bearing housing side member 162 which is provided on the bearing housing 51 side, through which the screw shaft 21 passes, and which is movable relative to the other support base side member 161 in the axial direction; the hollow member 90 disposed in a pressure chamber 166 formed between the other support base side member 161 and the other bearing housing side member 162; and another working fluid 170 that fills a space other than the hollow member 90 in the pressure chamber 166. That is, the second support mechanism 40 includes two housing position adjustment mechanisms 60 and 160 arranged in tandem in the axial direction.

As shown in FIG. 19, the other housing position adjustment mechanism 160 is also configured such that the other bearing housing side member 162 has an annular recessed portion 164, the other support base side member 161 has an annular protruding portion 165 fitted in the annular recessed portion 164 so as to be slidable in the axial direction, and the hollow member 90 and the other working fluid 170 are disposed in the pressure chamber 166 formed between the annular recessed portion 164 and the annular protruding portion 165. As the other working fluid 170, those exemplified as the working fluid 70 are applicable.

Further, in the present embodiment, the other support base side member 161 has an annular portion 161a that protrudes toward the support base 43 and fits into the through hole 43a of the support base 43, and is fixed to the support base 43 with a plurality of bolts (not illustrated). Further, the support base side member 61 of the housing position adjustment mechanism 60 and the other bearing housing side member 162 of the other housing position adjustment mechanism 160 are integrally constructed by a single member or by connecting two members.

As described above, the two housing position adjustment mechanisms 60 and 160 are arranged in series in the axial direction, so that even when the screw shaft is further elongated, the rigidity of the ball screw feeding device 20 in the axial direction can be stably maintained, and alignment and coaxiality in the axial direction can be improved.

Note that the other housing position adjustment mechanism 160 is not limited to the same configuration as the housing position adjustment mechanism 60 as illustrated in FIG. 19, and may have any other configuration as long as it has a pressure generating unit that is accommodated in a compressed state in the pressure chamber 166 formed between the other support base side member 161 and the other bearing housing side member 162. For example, as the pressure generating unit, an elastic member such as a spring may be disposed in the pressure chamber 166.

The second support mechanism 40 may have two housing position adjustment mechanisms 60 and 160, or may have three or more housing position adjustment mechanisms, as long as the plurality of housing position adjustment mechanisms are arranged in series in the axial direction.

Other configurations and operations are similar as those of the first embodiment.

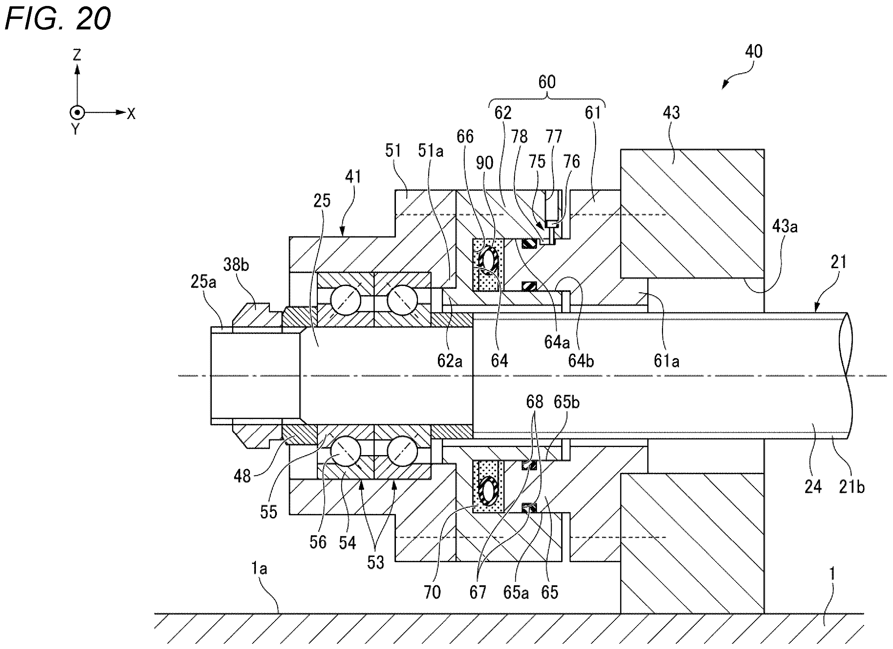

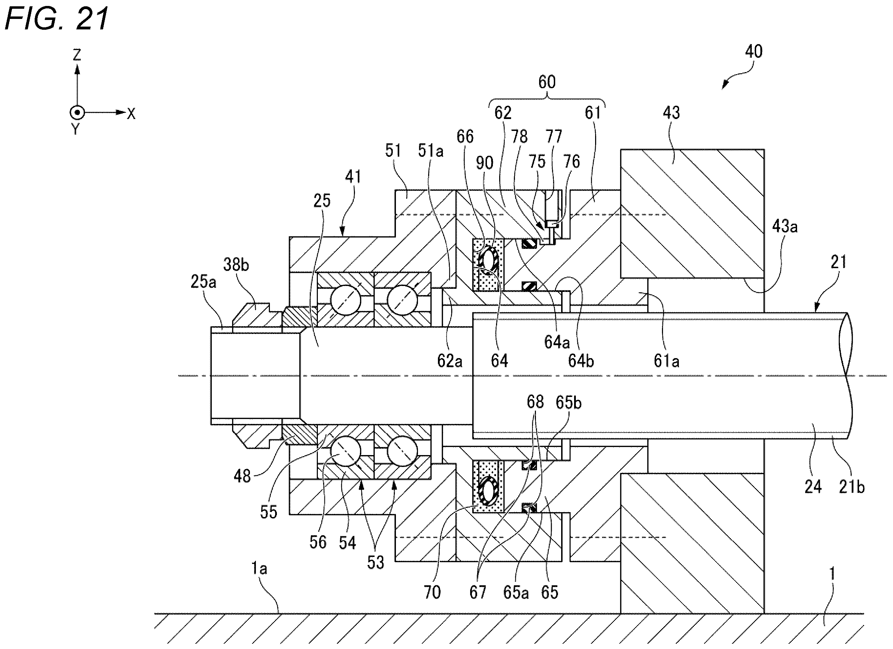

Note that in the first to sixth embodiments, the pair of angular ball bearings applied to the bearing unit of the second support mechanism are arranged in the face-to-face combination, and the combination arrangement is not limited to this. That is, the pair of angular ball bearings 53 and 53 may be arranged in various supporting configurations, such as a back-to-back combination as shown in FIG. 20 or a side-by-side combination as shown in FIG. 21. Note that as illustrated in FIG. 20, when the pair of angular ball bearings 53 and 53 are arranged in the back-to-back combination, an inner ring spacer 49 may be disposed between a step between the large diameter portion 24 and the small diameter portion 25 of the screw shaft 21 and the inner ring 55 of the angular ball bearing 53 on the inner side in the axial direction.

In addition, the pair of angular ball bearings 33 and 33 of the first support mechanism are also arranged in face-to-face combination, but may be arranged in various supporting configurations, such as a back-to-back combination or a side-by-side combination.

Further, although not illustrated, the angular ball bearings 33, 53 do not necessarily include two angular ball bearings, and may include three or more angular ball bearings.

Further, in the above embodiment, the other housing position adjustment mechanism 160 is disposed adjacent to the housing position adjustment mechanism 60 in the axial direction, but the present invention is not limited thereto, and the other housing position adjustment mechanism 160 may be disposed adjacent to the housing position adjustment mechanism 60 in the radial direction in parallel.

This makes it easier to maintain the rigidity of the ball screw feeding device 20 in the axial direction while reducing the dimension of the ball screw feeding device 20 in the axial direction, even when a larger load is generated in the axial direction than when a single housing position adjustment mechanism is installed.

In the above embodiment, the pressure chamber 66 is formed in an annular shape by the annular recessed portion 64 and the annular protruding portion 65. Alternatively, a plurality of recessed portions and protruding portions may be formed in a peripheral direction to form a plurality of pressure chambers. Further, in this case, an O-ring may be disposed between an inner peripheral surface of the recessed portion and an outer peripheral surface of the protruding portion to provide a configuration with working fluid leakage and damping functions, and a storage chamber opening to the outer peripheral surface of the protruding portion and an orifice that establishes communication between the storage chamber and the pressure chamber may be provided to have an additional damping function. In this case, a hollow member designed to have an appropriate shape such as a semicircular arc shape is applicable.

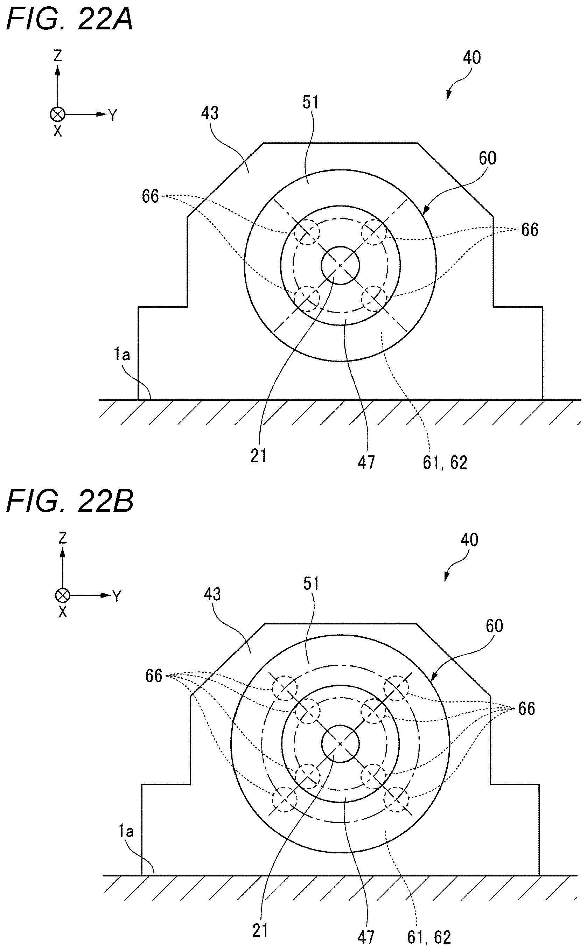

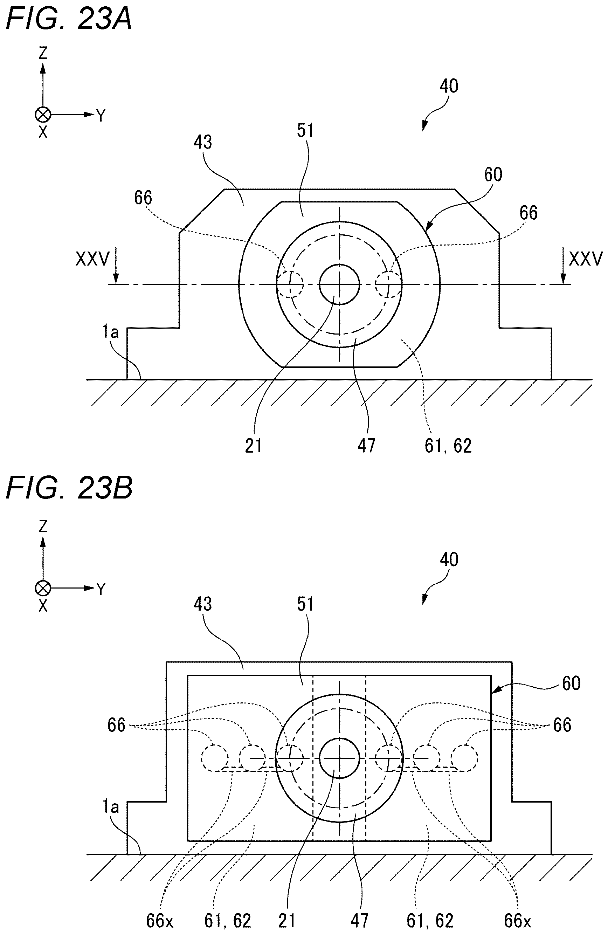

For example, as illustrated in FIG. 22A, four pressure chambers 66 may be arranged around the screw shaft 21 in the peripheral direction, and as illustrated in FIG. 22B, two pressure chambers 66 arranged in parallel with and adjacent to each other in the radial direction may be arranged at four locations in the peripheral direction, that is, a total of eight pressure chambers 66 may be arranged around the screw shaft 21. Alternatively, as illustrated in FIG. 23A, the pressure chambers 66 arranged at two locations in the peripheral direction, that is, the pressure chambers 66 on both sides in the width direction (Y direction) with respect to the screw shaft 21 may be arranged around the screw shaft 21, and as illustrated in FIG. 23B, three pressure chambers 66 arranged in parallel with and adjacent to each other in the radial direction (a width direction in the example) may be arranged at two locations in the peripheral direction, that is, a total of six pressure chambers 66 may be arranged around the screw shaft 21. In this case, height dimensions of the support base side member 61 and the bearing housing side member 62 can be reduced.

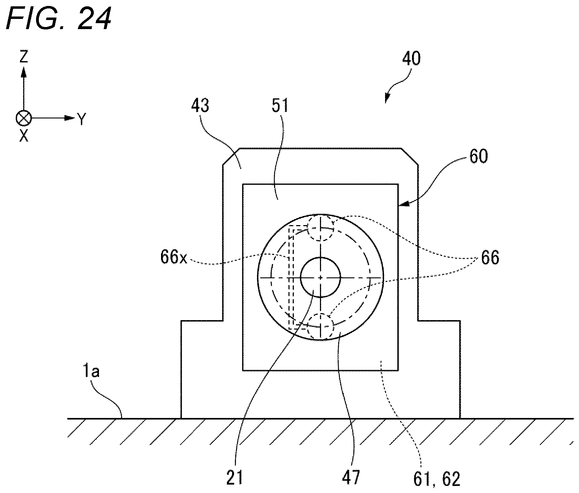

Further, as illustrated in FIG. 24, the pressure chambers 66 arranged at two locations in the peripheral direction, that is, the pressure chambers 66 on both sides in the upper-lower direction with respect to the screw shaft 21 may be arranged around the screw shaft 21. In this case, width dimensions of the support base side member 61 and the bearing housing side member 62 can be reduced.

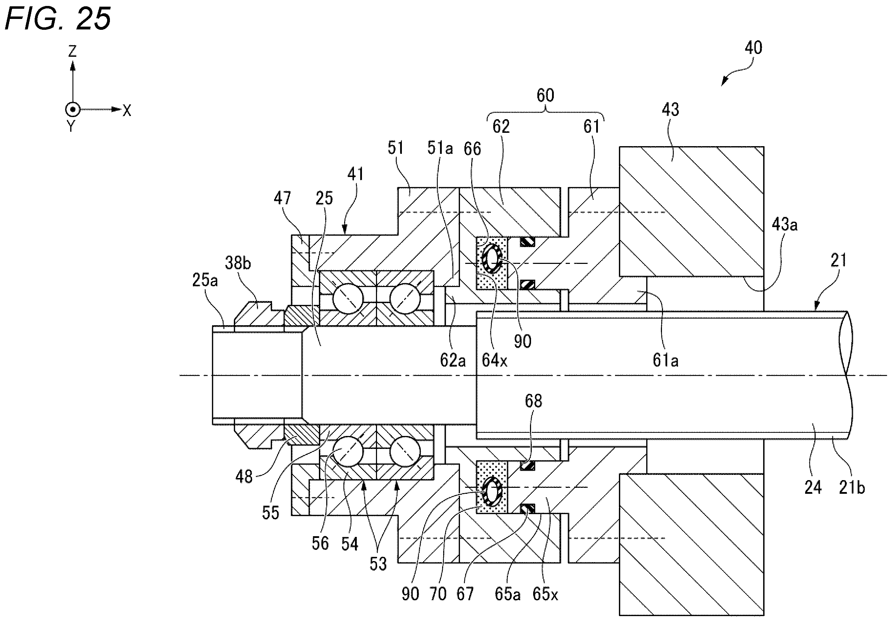

FIG. 25 is a schematic cross-sectional view taken along a line XXV-XXV in FIG. 23A. In this case, the two pressure chambers 66 are each formed of a recessed portion 64x and a protruding portion 65x.

Note that in the drawings, the protruding portion 65x is formed integrally with a base portion of the support base side member 61, but may be formed separately from the base portion and joined thereto.

Note that the plurality of pressure chambers 66 may be freely arranged as long as the bearing unit 41 and the bearing housing side member 62 can move stably in the same direction following the extension of the screw shaft 21 in the axial direction due to thermal expansion, and specifically, the pressure chambers 66 are preferably arranged in point symmetry or line symmetry on a plane orthogonal to the screw shaft 21. The plurality of pressure chambers 66 may be arranged to be offset in the axial direction.

Further, the adjacent pressure chambers 66 may be in communication with each other via a communication passage as necessary for the purpose of pressure equalization or the like, and a working fluid inside may flow through the adjacent pressure chamber 66.

For example, in FIG. 23B and FIG. 24, adjacent pressure chambers 66 communicate with each other via a communication passage 66x.

The support base side member 61 and the bearing housing side member 62 are not limited to being constructed as a single member, and may be divided and constructed to be arranged around the screw shaft 21 according to layout of the pressure chambers 66. Further, the support base side member 61 and the bearing housing side member 62, which are single members, may also be arranged around the screw shaft 21, and may be configured such that a part in the peripheral direction thereof is opened or divided.

For example, in FIG. 23B, the two support base side members 61 and the two bearing housing side members 62 are divided in the width direction with respect to the screw shaft 21.

In addition, similarly to the other housing position adjustment mechanism 160 described above, the pressure generating units in the plurality of pressure chambers 66 are not limited to the same configuration, that is, the working fluid filled in a compressed state, and the pressure generating unit in any of the pressure chambers 66 may have another configuration such as using an elastic member such as a spring.

A cross section of the recessed portion or the protruding portion forming the pressure chamber 66 is not limited to a circular shape, and may have any shape such as a rectangular shape. Further, the plurality of pressure chambers 66 may be configured to have any cross-sectional dimensions and axial dimensions.

### (Seventh Embodiment)

In the housing position adjustment mechanism 60 of the embodiments and the modifications described above, when the screw shaft 21 extends in the axial direction, the volume of the pressure chamber 66 increases, and the hollow member 90 in a compressed state presses the bearing unit 41 and the bearing housing side member 62 to the left via the working fluid 70 while the pressure is gradually decreased. In this way, the pair of angular ball bearings 53 and 53 are moved in the axial direction, and the support rigidity of the screw shaft 21 in the axial direction is maintained.

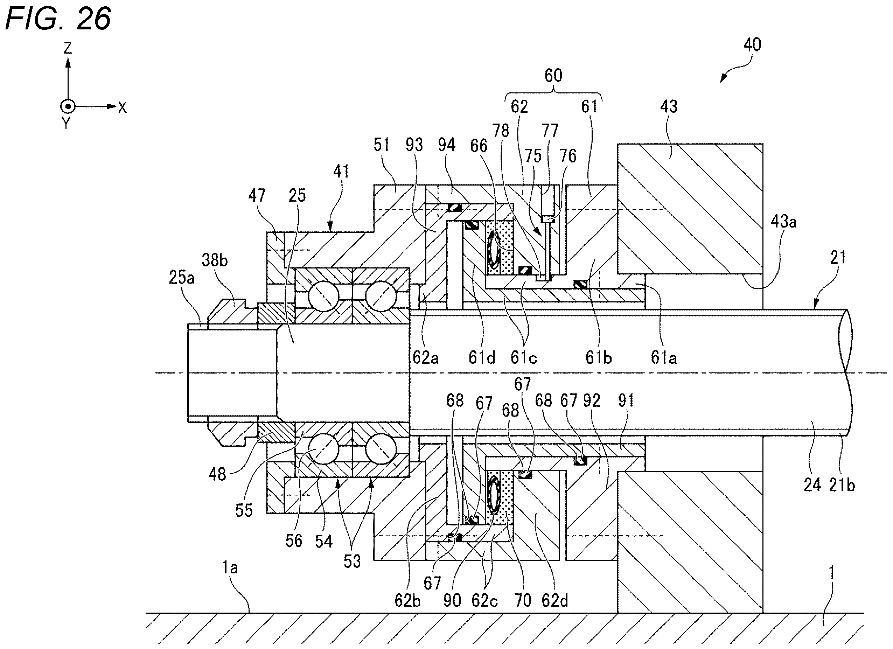

However, in the seventh embodiment, the housing position adjustment mechanism 60 as illustrated in FIG. 26 is used to maintain the support rigidity of the screw shaft 21 in the axial direction. Specifically, when the screw shaft 21 extends in the axial direction, the bearing unit 41 and the bearing housing side member 62 move to the left via the pair of angular ball bearings 53 and 53 that move together with the screw shaft 21, and the volume of the pressure chamber 66 decreases. On the other hand, when the pressure in the hollow member 90 gradually increases, the bearing unit 41 and the bearing housing side member 62 are pressed to the right via the working fluid 70. Therefore, the support rigidity of the screw shaft 21 in the axial direction can be maintained by adjusting the volume of the pressure chamber 66 and the pressure in the hollow member 90 so as to allow the screw shaft 21 to extend in the axial direction.

In this case, the support base side member 61 includes a small diameter cylindrical portion 61c extending toward the bearing housing 51 from a small diameter portion of an annular base portion 61b attached to the support base 43, and an outward flange portion 61d extending from a tip end portion of the small diameter cylindrical portion 61c toward the outer diameter side. The bearing housing side member 62 includes a large diameter cylindrical portion 62c extending toward the support base 43 from a large diameter portion of an annular base portion 62b attached to the moving side bearing housing 51, and an inward flange portion 62d extending from a tip end portion of the large diameter cylindrical portion 62c toward the inner diameter side.

The outward flange portion 61d of the support base side member 61 is relatively movable in the axial direction between the annular base portion 62b and the inward flange portion 62d of the bearing housing side member 62, and an outer peripheral surface thereof is in sliding contact with an inner peripheral surface of the large diameter cylindrical portion 62c via the O-ring 67. The inward flange portion 62d of the bearing housing side member 62 is relatively movable in the axial direction between the annular base portion 61b and the outward flange portion 61d of the support base side member 61, and an inner peripheral surface thereof is in sliding contact with an outer peripheral surface of the small diameter cylindrical portion 61c via the O-ring 67. Therefore, the pressure chamber 66 is formed by an annular space partitioned by the small diameter cylindrical portion 61c and the outward flange portion 61d of the support base side member 61 and the large diameter cylindrical portion 62c and the inward flange portion 62d of the bearing housing side member 62, and the hollow member 90 is accommodated in the pressure chamber 66 together with the working fluid 70.

In this case, the size, material, and the gas or liquid inside the hollow member 90 are appropriately selected so that even if the temperature rises by more than 4 degrees, the working fluid 70 and hollow member 90 are compressed when the pressure chamber 66 narrows in the axial direction in response to the axial elongation of the screw shaft 21, and the pressure acting on the bearing housing side member 62 gives the screw shaft 21 the desired rigidity in the axial direction.

Further, since the O-ring 67 is mounted between the inner peripheral surface of the inward flange portion 62d and the outer peripheral surface of the small diameter cylindrical portion 61c and between the outer peripheral surface of the outward flange portion 61d and the inner peripheral surface of the large diameter cylindrical portion 62c, the leakage of the working fluid 70 that fills the pressure chamber 66 can be prevented, and the O-ring 67 can also act as a damping mechanism to damp the vibration generated in the screw shaft 21.

Further, the working fluid 70 is stored in each gap between the inner peripheral surface of the inward flange portion 62d and the outer peripheral surface of the small diameter cylindrical portion 61c and between the outer peripheral surface of the outward flange portion 61d and the inner peripheral surface of the large diameter cylindrical portion 62c. Therefore, the support rigidity and the alignment in the radial direction between the bearing housing side member 62 and the support base side member 61 can be improved by the radial pressure of the working fluid 70 acting on each gap. As a result, the housing position adjustment mechanism 60 can provide the support rigidity in the radial direction to the screw shaft 21, and can also have an alignment function with respect to the screw shaft 21.

Note that the support base side member 61 and the bearing housing side member 62 may be constructed by a single member, but in consideration of ease of assembly, as illustrated in FIG. 26, the support base side member 61 and the bearing housing side member 62 may be constructed in a state in which the O-rings 67 are respectively sandwiched between two members 91 and 92, and between two members 93 and 94.

One O-ring 67 and one seal groove 68 are disposed in opposing surfaces, respectively. Alternatively, a plurality of O-rings 67 and a plurality of seal grooves 68 may be disposed in the opposing surfaces correspondingly.

Further, instead of the configuration shown in FIG. 26, the support base side member 61 may include a large diameter cylindrical portion and an inward flange portion, and the bearing housing side member 62 may include a small diameter cylindrical portion and an outward flange portion to form the pressure chamber.

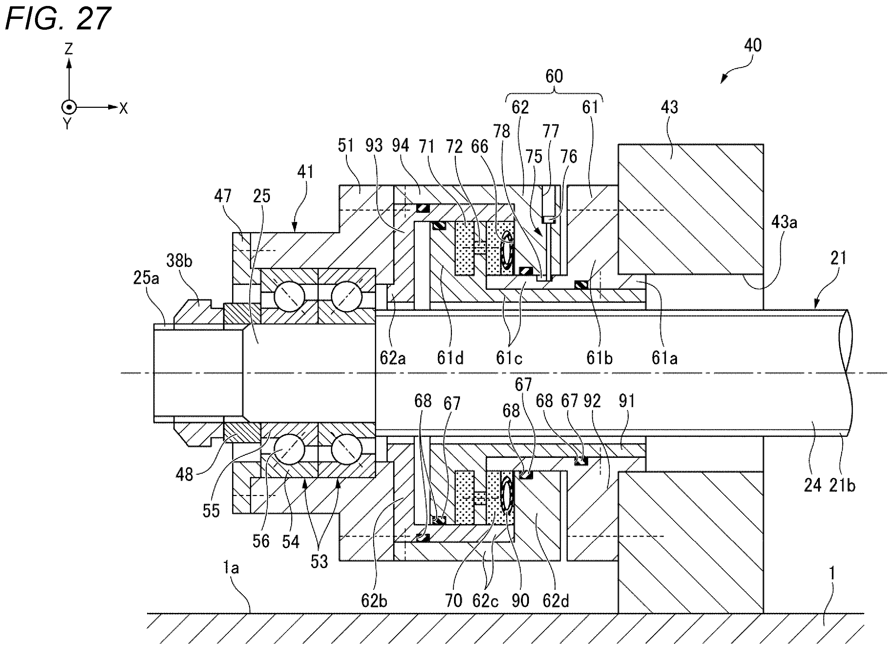

Further, as illustrated in FIG. 27, such a housing position adjustment mechanism 60 may have the storage chamber 71 and the orifice 72 in the outward flange portion 61d, and as in the second embodiment, the working fluid 70 in the pressure chamber 66 and the storage chamber 71 passes through the orifice 72 and a gap between the inner peripheral surface of the large diameter cylindrical portion 62c and the outer peripheral surface of the outward flange portion 61d, so that the vibration of the screw shaft 21 can be damped.

Note that the storage chamber and the orifice may be formed in the inward flange portion 62d, and the storage chamber may be open to the outer peripheral surface of the small diameter cylindrical portion 61c.

In addition, similarly to the modification of the first embodiment, the axial side surface of the outward flange portion 61d or the inward flange portion 62d which forms the pressure chamber 66 may be formed in a protruding tapered shape or a recessed tapered shape to enhance the alignment function or the coaxiality of the angular ball bearings 53 and 53 with respect to the screw shaft 21.

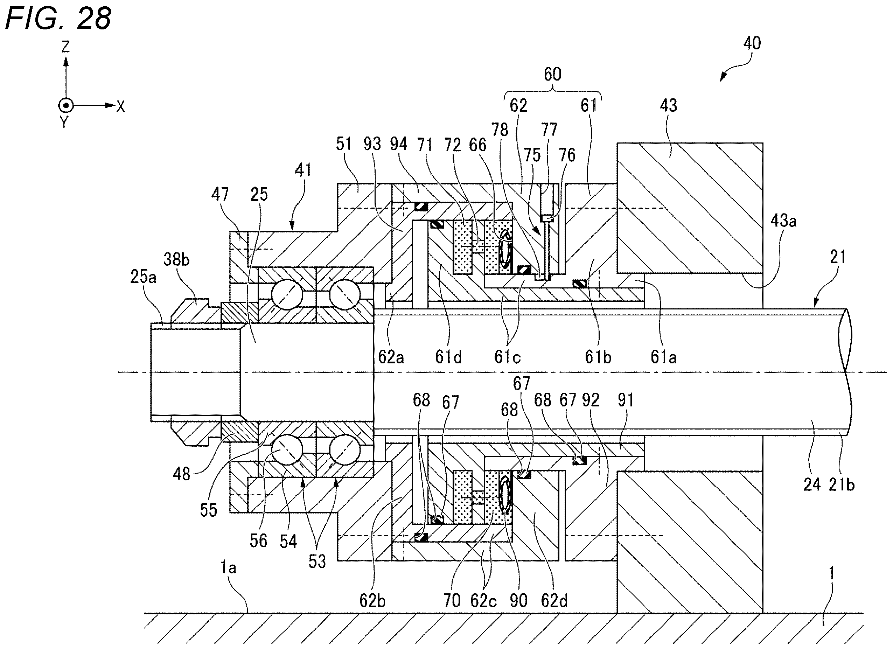

In such a housing position adjustment mechanism 60, the pair of angular ball bearings 53 and 53 may also be arranged in various supporting configurations such as in a face-to-face combination as illustrated in FIGS. 26 and 27, in a back-to-back combination as illustrated in FIG. 28, or in a side-by-side combination. In addition, although not illustrated, the pair of angular ball bearings is not necessarily constituted by two angular ball bearings, and may be constituted by three or more ball bearings.

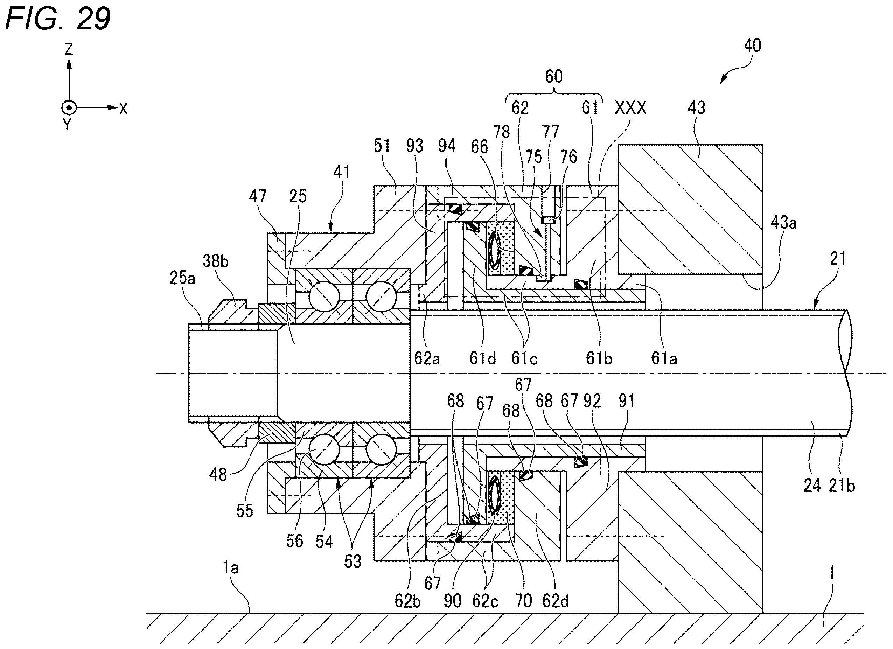

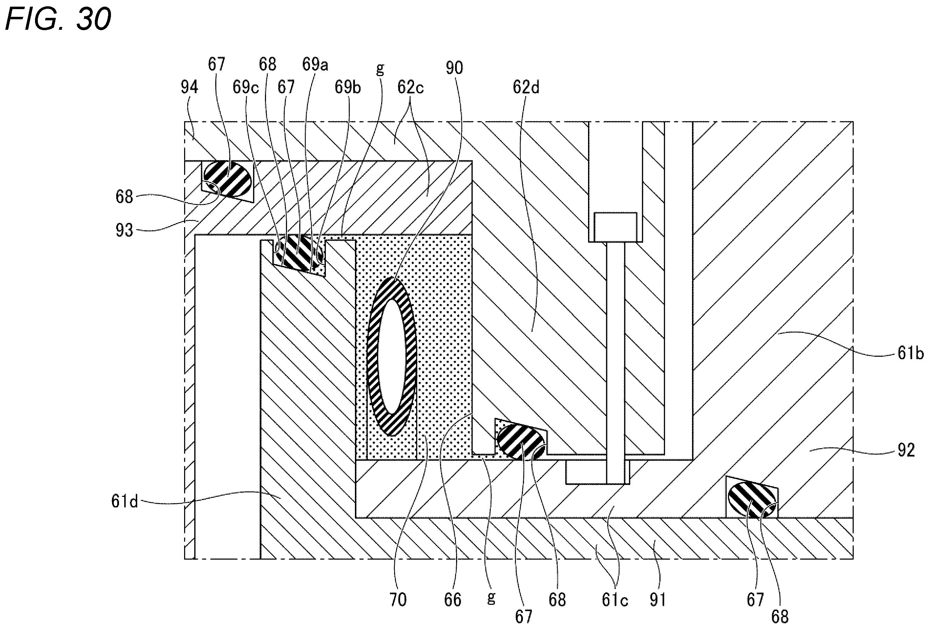

Further, as illustrated in FIGS. 29 and 30, in the housing position adjustment mechanism 60 according to the seventh embodiment, similarly to the fourth embodiment, the seal groove 68 formed on the inner peripheral surface of the inward flange portion 62d and the outer peripheral surface of the outward flange portion 61d may include the tapered surface 69a whose groove depth decreases as a distance from the pressure chamber increases, and both axial side surfaces 69b and 69c having a circular ring shape extending along the radial direction from both end edges of the tapered surface 69a in the axial direction.

Therefore, as the pressure of the working fluid 70 in the pressure chamber 66 increases and the O-ring 67 is pushed toward the atmospheric pressure side, the sealing property of the O-ring 67 is further improved by a wedge structure between the tapered surface 69a of the seal groove 68 and the outer peripheral surface of the small diameter cylindrical portion 61c or the inner peripheral surface of the large diameter cylindrical portion 62c that faces the tapered surface 69a. As a result, even when relative movement occurs between the support base side member 61 and the bearing housing side member 62, leakage of the working fluid 70 to the atmospheric pressure side can be prevented, and rigidity of the ball screw feeding device 20 in the axial direction can be continuously maintained.

Note that in the modification, as illustrated in FIG. 30, the seal groove 68 formed in any one of opposing surfaces of the two members 91 and 92 forming the support base side member 61 and the seal groove 68 formed in any one of opposing surfaces of the two members 93 and 94 forming the bearing housing side member 62 may also have the tapered surface 69a whose groove depth decreases as the distance from the pressure chamber increases.

In the case of the modification, a wear-resistant member may also be interposed between the O-ring 67 and at least one of the inner peripheral surface of the inward flange portion 62d and the outer peripheral surface of the small diameter cylindrical portion 61c, and between the O-ring 67 and at least one of the outer peripheral surface of the outward flange portion 61d and the inner peripheral surface of the large diameter cylindrical portion 62c.

In this case, the wear-resistant member 59 may also be interposed between the O-ring 67 and a surface opposite to the O-ring 67 in the seal groove 68 having the tapered surface 69a as illustrated in FIG. 30, or may be interposed between the O-ring 67 and a surface opposite to the O-ring 67 in the seal groove 68 having a uniform groove depth as illustrated in FIG. 26.

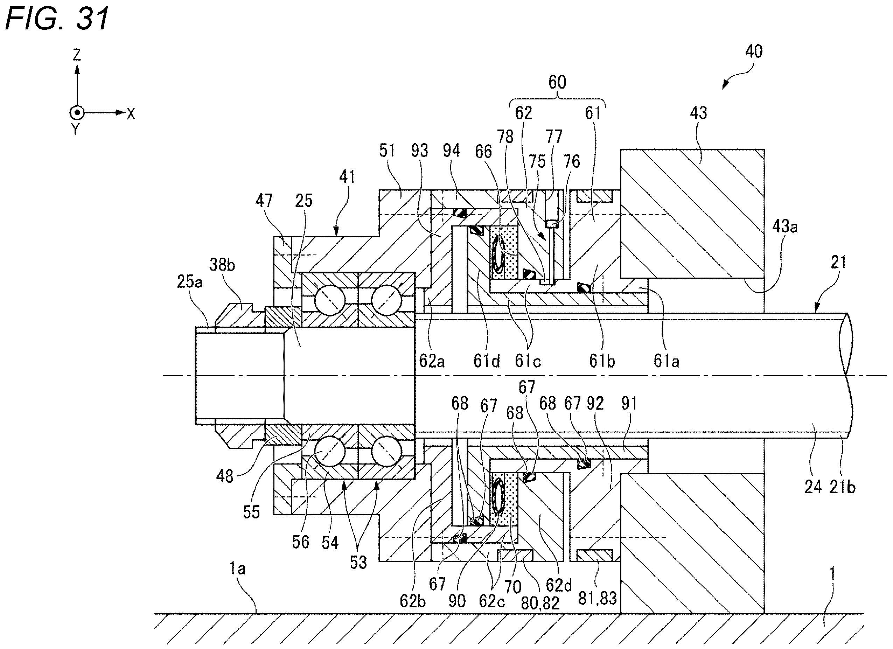

Further, as illustrated in FIG. 31, in the housing position adjustment mechanism 60 of the seventh embodiment, similarly to the fifth embodiment, the support base side member 61 and the bearing housing side member 62 may be provided with a working medium volume changing part such as the heating elements 80 and 81 or the cooling media 82 and 83.

Accordingly, as described in the fifth embodiment, depending on the state of the ball screw feeding device 20 being used, the volume of the hollow member 90 and the working fluid 70 in the pressure chamber 66 is expanded by the heating elements 80 and 81, and the volume of the hollow member 90 and the working fluid 70 in the pressure chamber 66 is contracted by the cooling media 82 and 83, so that the support rigidity in the axial direction can be continuously maintained in a stable state.

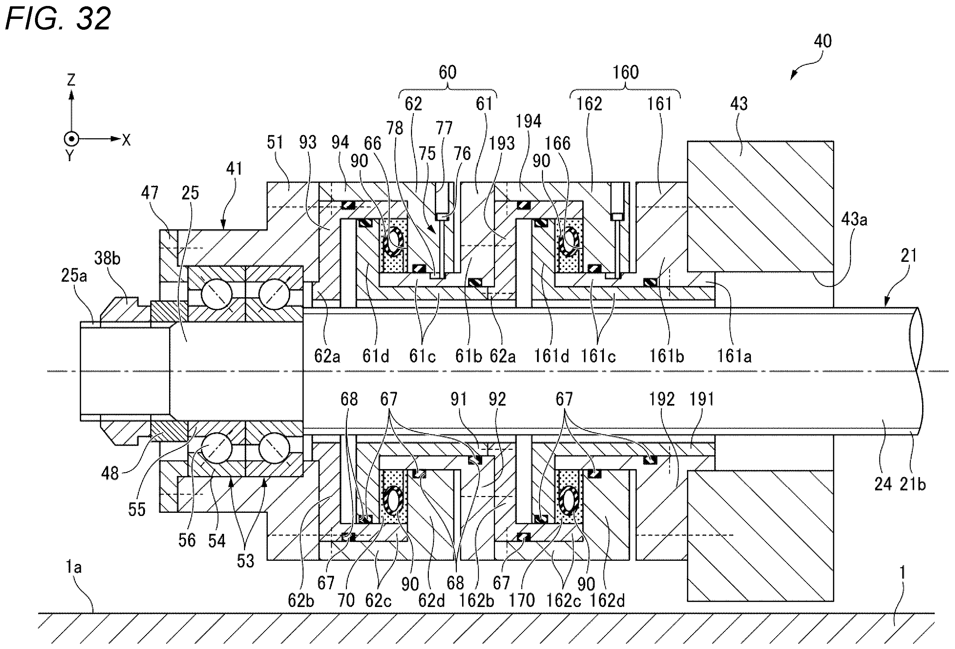

In the housing position adjustment mechanism 60 of the seventh embodiment, as illustrated in FIG. 32, similarly to the sixth embodiment, the second support mechanism 40 may have a tandem configuration in which the housing position adjustment mechanism 60 and the other housing position adjustment mechanism 160 are arranged in series in the axial direction between the bearing unit 41 and the support base 43.

In this case, the other support base side member 161 of the other housing position adjustment mechanism 160 also includes an annular base portion 161b, a small diameter cylindrical portion 161c, and an outward flange portion 161d, and the other bearing housing side member 162 includes an annular base portion 162b, a large diameter cylindrical portion 162c, and an inward flange portion 162d. The other support base side member 161 and the other bearing housing side member 162 of the other housing position adjustment mechanism 160 include two members 191, 192 and two members 193, 194, respectively. Further, the support base side member 61 of the housing position adjustment mechanism 60 and the other bearing housing side member 162 of the other housing position adjustment mechanism 160 are connected to each other and integrally formed.

Similarly to the fifth embodiment, the second support mechanism 40 may have a configuration in which a plurality of housing position adjustment mechanisms are arranged in series in the axial direction, or may have a configuration in which the housing position adjustment mechanisms are arranged in parallel in the radial direction.

The present invention is not limited to the above embodiments, and may be appropriately modified, improved, or the like. Each embodiment and each modification described in the present specification can be combined and applied within a practicable range.

For example, the pressure chamber may diagnose or correct the state of the ball screw feeding device by monitoring the pressure of the working fluid and the load applied to the pair of angular ball bearings 53 and 53.

In the first to sixth embodiments, the O-rings 67 are respectively mounted between the outward surface 65a of the annular protruding portion 65 and the inward surface 64a of the annular recessed portion 64, and between the inward surface 65b of the annular protruding portion 65 and the outward surface 64b of the annular recessed portion 64, but the present invention is not limited thereto, and a seal member for preventing the working fluid 70 from leaking from the pressure chamber 66 may be disposed.

Similarly, in the seventh embodiment, the O-rings 67 are respectively mounted between the outer peripheral surface of the outward flange portion 61d and the inner peripheral surface of the large diameter cylindrical portion 62c, and between the inner peripheral surface of the inward flange portion 62d and the outer peripheral surface of the small diameter cylindrical portion 61c, but the present invention is not limited thereto, and a seal member for preventing the working fluid 70 from leaking from the pressure chamber 66 may be disposed.

Further, it is more preferable that the seal member not only prevents the working fluid 70 from leaking from the pressure chamber 66, but also damps the vibration of the screw shaft 21 in the same manner as the O-ring 67.

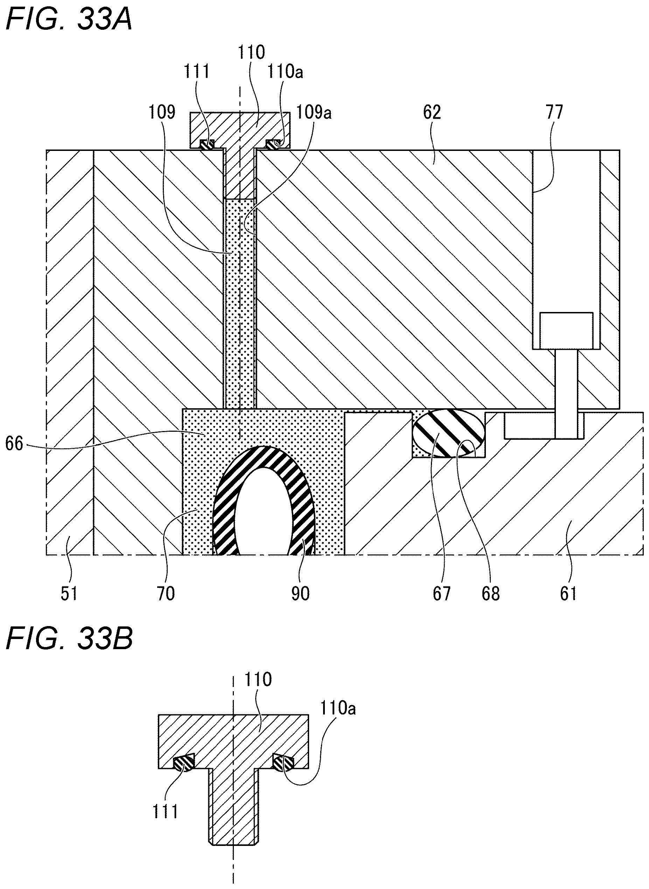

In any of the embodiments, it is necessary to fill the pressure chamber 66 with the working fluid 70 and then seal off from the outside. In this case, for example, in the housing position adjustment mechanism 60 illustrated in FIG. 2, as illustrated in FIG. 33A, an oil supply passage 109 for filling the pressure chamber 66 with the working fluid 70 may be formed in the bearing housing side member 62 so as to penetrate in the radial direction between the inward surface 64a of the annular recessed portion 64 and the outer peripheral surface of the bearing housing side member 62.

A stopper bolt 110 for blocking the oil supply passage 109 by screwing into a female threaded portion 109a formed in the oil supply passage 109 may be attached to the outer peripheral surface of the bearing housing side member 62. By wrapping a sealing tape (not illustrated) around a male screw portion of the stopper bolt 110 or applying a leak prevention agent to fill a gap between the male screw and the female threaded portion 109a, leakage of the filled working fluid 70 in a compressed state can be more reliably prevented.

An annular seal groove 110a may be formed in a surface opposite to a head of the stopper bolt 110 that is opposite to the outer peripheral surface of the bearing housing side member 62. Accordingly, an O-ring 111 is attached to the seal groove 110a, and a sealing property of the stopper bolt 110 can be improved.

Note that as illustrated in FIG. 33B, a bottom surface of the seal groove 110a of the stopper bolt 110 may be formed in a tapered shape so as to further improve the sealing property.

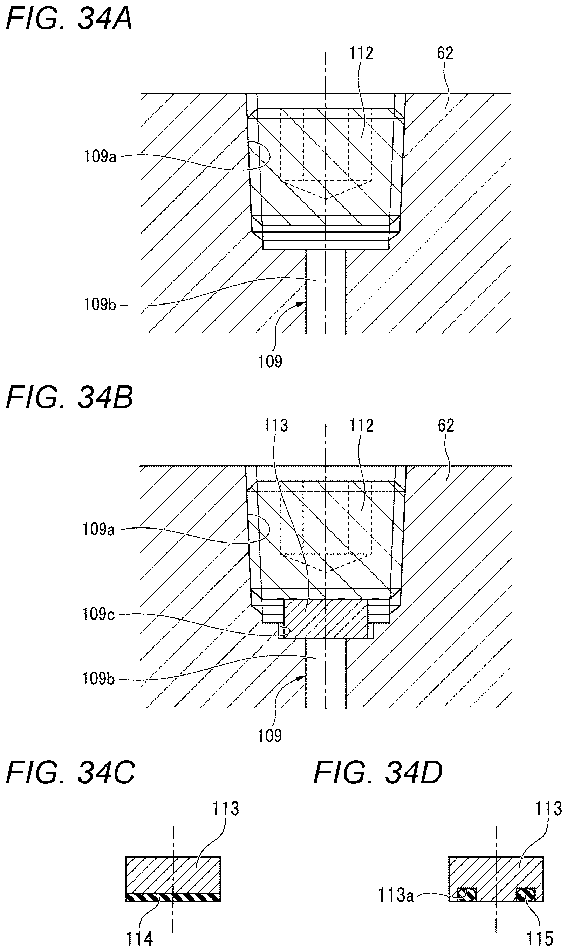

As a member for blocking the oil supply passage 109, a stopper plug may be used instead of the stopper bolt 110, and for example, the oil supply passage 109 may be blocked by a tapered stopper plug 112 as illustrated in FIG. 34A. In this case, the stopper plug 112 is screwed into the female threaded portion 109a formed on the outer diameter side of the oil supply passage 109 and fixed to the oil supply passage 109. As illustrated in FIG. 34B, the oil supply passage 109 includes the tapered female threaded portion 109a on the outer diameter side, and a straight portion 109b not including the female threaded portion is continuous with the female threaded portion 109a via a stepped hole 109c. In this case, the stopper plug 112 may be fastened to the female threaded portion 109a in a state in which a disk-shaped member 113 is accommodated in the stepped hole 109c. In this case, since the stopper plug 112 is fastened to the female threaded portion 109a while deforming the disk-shaped member 113, a sealing property is ensured between the disk-shaped member 113 and a contact surface of the stepped hole 109c.

By wrapping a sealing tape (not illustrated) around a male screw portion of the stopper plug 112 or applying a leak prevention agent to fill a gap between the male screw and the female threaded portion 109a, a good sealing property can be provided.

Note that as illustrated in FIG. 34C, the disk-shaped member 113 may be integrated with an elastic deformable member 114 that forms a contact surface with the stepped hole 109c. Alternatively, as illustrated in FIG. 34D, the disk-shaped member 113 may have an annular seal groove 113a formed on a contact surface with the stepped hole 109c, and an O-ring 115 may be disposed.

The oil supply passage 109 communicating with the pressure chamber 66 is not limited to the configuration in which the oil supply passage 109 is formed to penetrate in the radial direction, and may be formed to penetrate any member forming the pressure chamber 66 in the axial direction.

Further, the support base may be configured to directly or indirectly support the support base side member of the housing position adjustment mechanism, and is not limited to the configuration in which the rotation shaft penetrates the support base as in the above embodiments, and may be disposed around the rotation shaft, and may be designed in any shape.

### (Application to Other Ball Screw Feeding Devices)

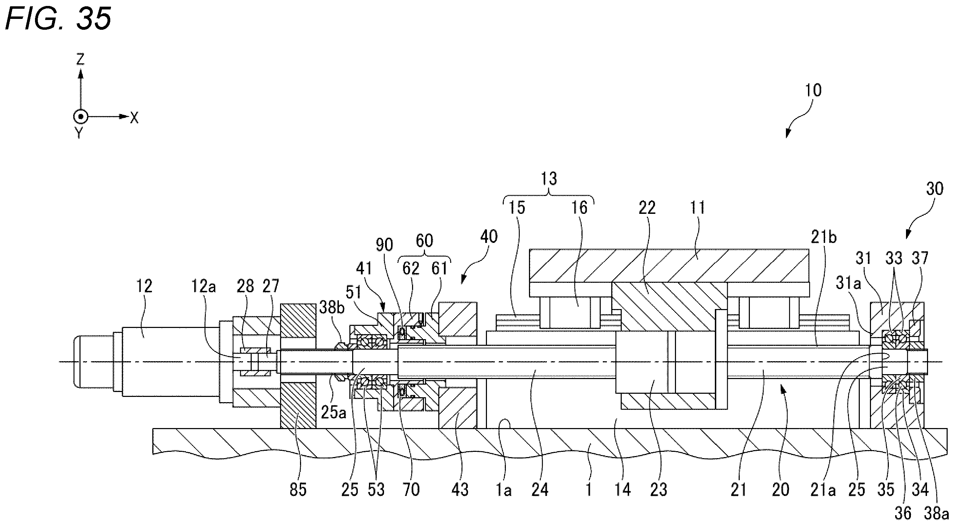

In the ball screw feeding device 20 of FIG. 1, the drive motor 12 is coupled to one side (right side in FIG. 1) of the screw shaft 21 supported by the first support mechanism 30, but the present invention is not limited thereto. That is, as in the ball screw feeding device 20 of FIG. 35, the drive motor 12 may be coupled to the other side (left side in FIG. 35) of the screw shaft 21 supported by the second support mechanism 40.

In this case, the drive motor 12 is fixed to the base 1 and is supported by another support base 85 through which the screw shaft 21 penetrates. A tip end of the small diameter shaft 27 is disposed in the coupling 28 away from the rotation shaft 12a of the drive motor 12 so that the small diameter shaft 27 can move in the axial direction when the screw shaft 21 extends in the axial direction due to thermal expansion.

Therefore, the present invention can be used with a high degree of freedom as a ball screw feeding device used for positioning of a device that performs high-precision machining and measurement, semiconductor manufacturing, and the like, such as a machine tool (machining center, lathe, grinder, and the like), a measuring machine (three-dimensional measuring device), and a semiconductor manufacturing device (exposure device, table of inspection probe and the like).

Although the support base 43 is disposed on the axial center side with respect to the bearing unit 41 in the above embodiments, the present invention is not limited thereto, and the support base 43 may be disposed on an axial end side of the bearing unit 41. That is, the support base 43 may be disposed on the axial center side or may be disposed on the axial end side with respect to the bearing unit 41 according to the configuration and function of the housing position adjustment mechanism 60.

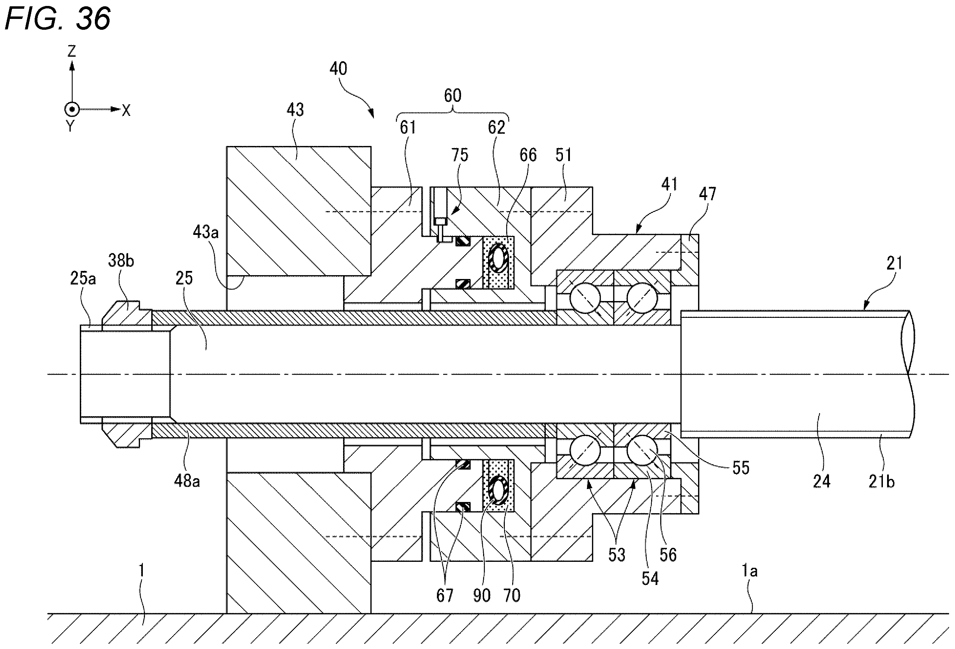

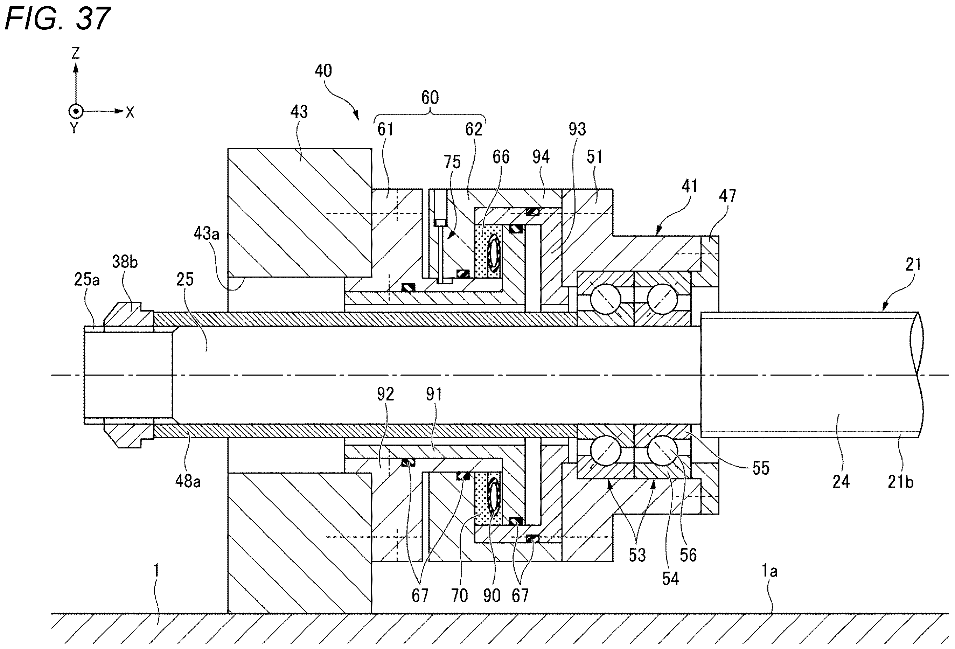

For example, in examples illustrated in FIGS. 36 and 37, the support base 43 is provided on the axial end side with respect to the bearing unit 41. In this case, the support base side member 61 may be directly or indirectly attached to the support base 43, and the bearing housing side member 62 may be directly or indirectly attached to the bearing housing 51. A spacer 48a disposed between the inner ring 55 and the fastening nut 38b passes through the through hole 43a of the support base 43, and the inside of the support base side member 61 and the bearing housing side member 62.

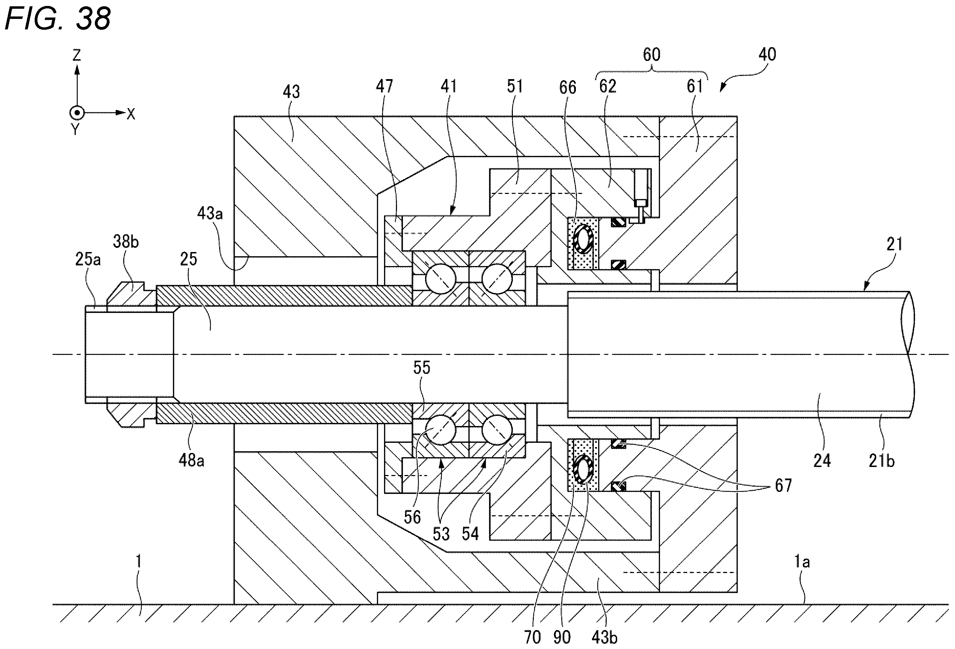

In the examples as illustrated in FIGS. 38 and 35, the support base 43 is disposed on the axial end side with respect to the bearing unit 41, extends in the axial direction from a main body part having the through hole 43a, and is fixed to the support base side member 61 disposed on the axial center side with respect to the bearing unit 41 by an outer tubular portion 43b surrounding a periphery of the housing position adjustment mechanism 60. Also in this case, the support base side member 61 may be directly or indirectly attached to the support base 43, and the bearing housing side member 62 may be directly or indirectly attached to the bearing housing 51. The spacer 48a disposed between the inner ring 55 and the fastening nut 38b passes through the through hole 43a of the support base 43.

### (Application to Devices other than Ball Screw Feeding Device)

In the above-described embodiments, the ball screw feeding device has been described, but the present invention can be applied not only to the ball screw feeding device, but also to a rotation support device in which both end portions in an axial direction of a rotation shaft are supported by a pair of support mechanisms in a rotatable manner. That is, when an axial length of the rotation shaft changes due to an influence of heat, a housing position adjustment mechanism as in the above embodiments can be used to continuously and stably maintain the support rigidity of the rotation shaft in the axial direction.

By using the housing position adjustment mechanism in the above embodiments, vibration in the axial direction can be damped.

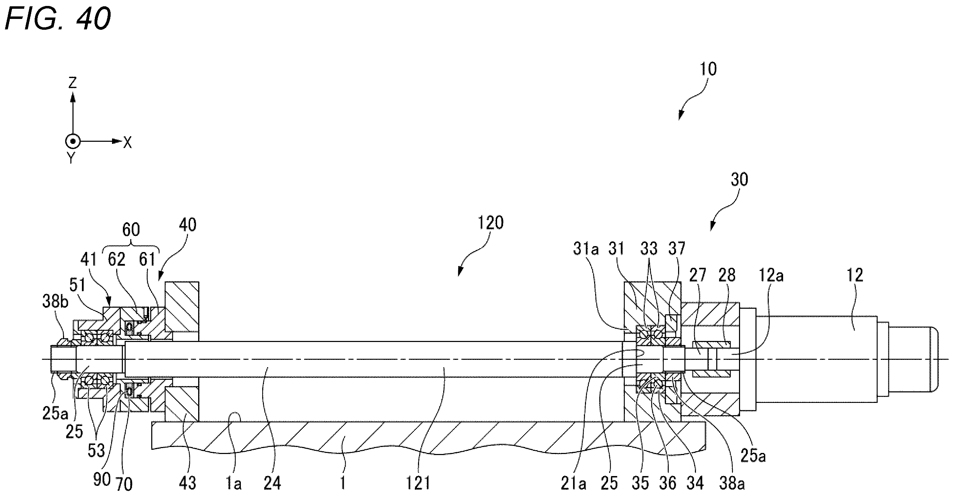

For example, as illustrated in FIG. 40, a rotation support device 120 includes a rotation shaft 121 and a pair of support mechanisms 30 and 40 that support both end portions in an axial direction of the rotation shaft 121 in a rotatable manner.

The support mechanism 30 includes the bearing housing 31 fixed to the base 1, and bearings 33 and 33 that support the rotation shaft 121 in a rotatable manner with respect to the fixed side bearing housing 31, that is, a pair of angular ball bearings 33 and 33 arranged in face-to-face combination.

The support mechanism 40 includes: the bearing unit 41 including the bearing housing 51 and a pair of bearings 53 and 53 that support the rotation shaft 121 in a rotatable manner with respect to the bearing housing 51 and can support a load in the axial direction, that is, a pair of angular ball bearings 53 and 53 arranged in face-to-face combination; the support base 43 that is disposed on the axial center side with respect to the bearing unit 41 and through which the rotation shaft 121 penetrates; and the housing position adjustment mechanism 60 disposed between the bearing unit 41 and the support base 43.

The housing position adjustment mechanism 60 includes: the support base side member 61 which is provided on the support base 43 side and through which the rotation shaft 121 passes; the bearing housing side member 62 which is provided on the bearing housing 51 side, through which the rotation shaft 121 passes, and which is movable relative to the support base side member 61 in the axial direction; the hollow member 90 disposed in the pressure chamber 66 formed between the support base side member 61 and the bearing housing side member 62; and the working fluid 70 that fills a space other than the hollow member 90 in the pressure chamber 66.

Note that in FIG. 40, the same reference numerals as those in the above embodiments denote the same parts, and description thereof will be omitted or simplified. In addition, the various structures described in the ball screw feeding device 20 can also be applied to the rotation support device, and achieve the same effects.

Each of the bearings 33, 53 of the support mechanisms 30, 40 of the rotation support device 120 may be an angular ball bearing as in the above embodiments, but is not limited thereto, and may be a roller bearing or a slide bearing capable of supporting a load in the axial direction. By using a bearing capable of supporting such a load in the axial direction, especially in the support mechanism 40, the hollow member 90 can be compressed via the bearing by fastening the fastening nut 38b as in the above embodiments.

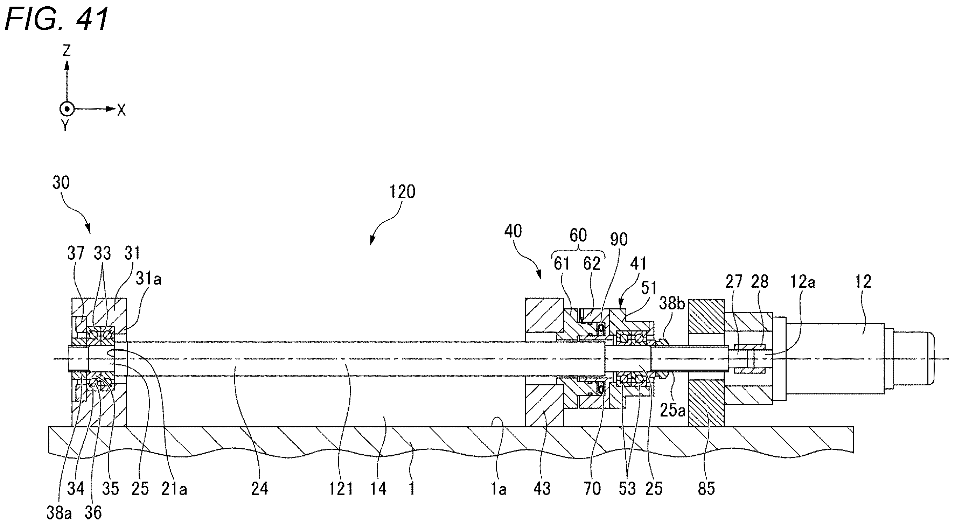

In FIG. 40, the second support mechanism 40 including the housing position adjustment mechanism 60 is configured to support an end portion of the rotation shaft 121. Alternatively, as illustrated in FIG. 41, the second support mechanism 40 including the housing position adjustment mechanism 60 may be configured to support the rotation shaft 121 at a position close to another support base 85 that supports the drive motor 12.

For example, when the rotation support device 120 as illustrated in FIG. 41 is applied to a spindle device that rotates a tool in a machine tool, by attaching the tool to an end portion of the rotation shaft 121 supported by the support mechanism 30, positioning in the axial direction of the tool is reliably performed while continuously and stably maintaining the support rigidity of the rotation shaft 121 in the axial direction, and highly accurate machining can be achieved.

Note that in the rotation support device 120 as illustrated in FIGS. 40 and 41, the drive motor 12 is not necessarily disposed coaxially with the rotation shaft 121, and for example, power of a drive motor may be transmitted to the rotation shaft 121 via a pulley, a gear train, or the like.

In addition, the drive motor 12 is not necessarily limited to a separate body disposed coaxially with the rotation shaft 121. For example, a built-in motor may be provided in the rotation shaft 121 directly.

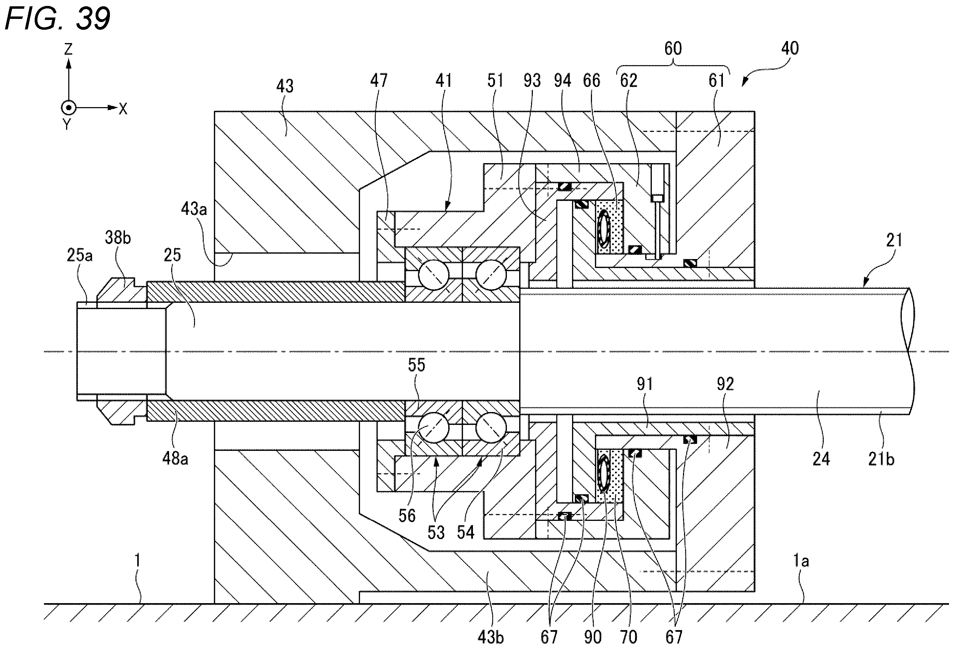

Note that in a rotation support device other than the ball screw feeding device, as illustrated in FIGS. 36 to 39, the support base may also be disposed on an axial end side with respect to the bearing unit.

The rotation support device 120 may be configured as a support body in the form of a housing case in which the bearing housing 31 of the first support mechanism 30 and the support base 43 of the second support mechanism 40 are integrated.

In the above embodiments, the housing position adjustment mechanism is described as a mechanism that adjusts a position in the axial direction of the bearing housing of the bearing that supports the rotation shaft, but the present invention is not limited thereto, and can be applied as a support mechanism position adjustment mechanism of a shaft support device. That is, the shaft is not limited to a rotation shaft, and the support mechanism is not limited to a configuration including a bearing, as long as the shaft support device has a configuration including a shaft and a pair of support mechanisms provided at both end portions in an axial direction of the shaft for supporting the shaft with respect to the base, in which one of the pair of support mechanisms has a support body (for example, the support base 43 in the above embodiments) through which the shaft penetrates or which is disposed around the shaft.

Therefore, the support mechanism position adjustment mechanism of a shaft support device may be configured to include: a first member (for example, the support base side member 61 in the above embodiments) which is provided on one of the shaft side and the support body side, through which the shaft penetrates or which is disposed around the shaft; a second member (for example, the bearing housing side member 62 in the above embodiments) which is provided on the other of the shaft side and the support body side, through which the shaft penetrates or which is disposed around the shaft, which is movable in the axial direction relative to the first member, and which forms an accommodation space (for example, the pressure chamber 66 in the above embodiments) with the first member, the hollow member disposed in the accommodation space; and the working fluid that fills a space other than the hollow member in the accommodation space.

The structure of the housing position adjustment mechanism described in the ball screw feeding device 20 can be applied to such a support mechanism position adjustment mechanism of a shaft support device, and the same effects are obtained.

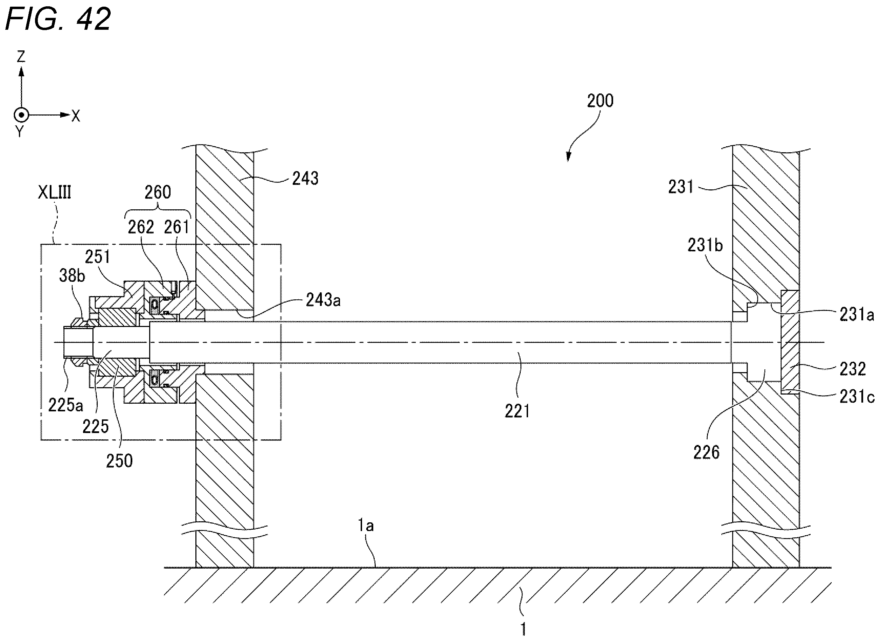

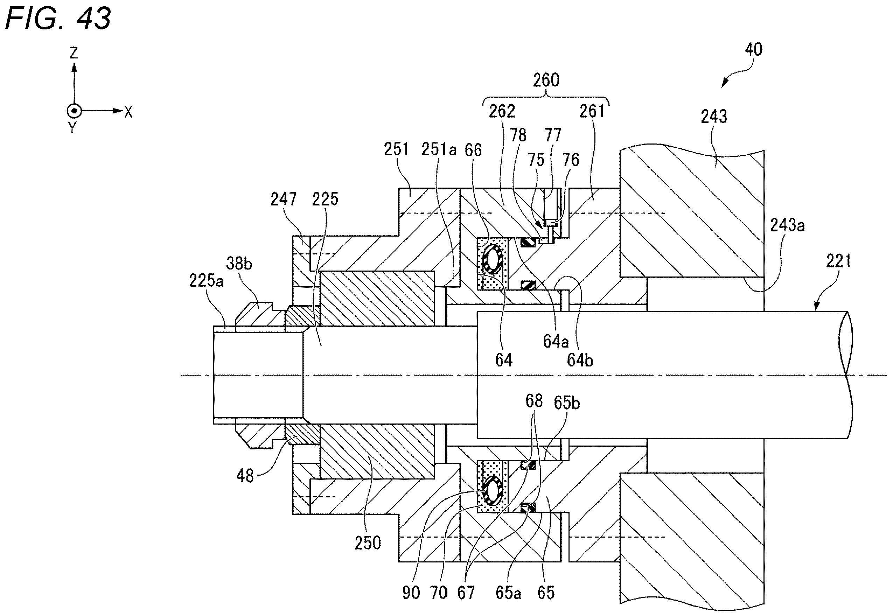

For example, FIGS. 42 and 43 illustrate a rigid joint structure 200 as a shaft support device in which a support mechanism position adjustment mechanism is provided on one of a pair of support mechanisms that support a shaft. The rigid joint structure 200 includes two support bodies 231 and 243 that are made of steel and parallel to each other and fixed to a base 1 while standing vertically. The support bodies 231 and 243 are respectively formed with concentric through holes 231a and 243a, through which a shaft 221 forming a beam member is inserted. Note that the support bodies 231 and 243 may be pillars, beams, support plates, or the like, and may be made of a member of any material and shape capable of supporting the shaft.

In this example, a flange 226 on one end side in the axial direction of the shaft 221 is brought into contact with a small diameter step portion 231b of the through hole 231a of the support body 231, and one end portion of the shaft 221 is positioned and fixed to the support body 231 by the other support mechanism for attaching a pressing lid 232 to a large diameter step portion 231c of the through hole 231a.

The other end portion of the shaft 221 in the axial direction is inserted through the through hole 243a of the support body 243, protrudes to a side opposite to the support body 231, and is supported by the support body 243 via one support mechanism including a shaft guide member 250, a housing 251, and a support mechanism position adjustment mechanism 260.

A cross-sectional shape of a central portion of the shaft 221 is freely set, and may be a rectangular steel pipe, H-shaped steel, or the like.

The shaft guide member 250 is a member configured to surround the shaft 221, guides a small diameter portion 225 of the shaft 221, and both end portions on the outer diameter side are sandwiched between the housing 251 and a pressing member 247 fixed to the housing 251 to be integrated with each other.

Similarly to the above embodiments, the housing 251 is attached to the support body 243 via the support mechanism position adjustment mechanism 260. That is, the first member 261 corresponding to the support base side member 61 of the above embodiments is fitted to the through hole 243a of the support body 243 and fixed to the support body 243, and the second member 262 corresponding to the bearing housing side member 62 of the above embodiments is fitted to an inward flange 251a of the housing 251 and fixed to the housing 251.

Therefore, when the shaft guide member 250 is fastened by the fastening nut 38b screwed to a male screw 225a via the spacer 48, a reaction force acts on the shaft guide member 250 to receive a load in the axial direction. Therefore, predetermined rigidity is given between the shaft 221 and the support bodies 231 and 243.

In such a rigid joint structure 200, even when the shaft 221 extends in the axial direction, the support mechanism position adjustment mechanism 260 operates to move the shaft guide member 250 and the housing 251 in the same direction following the extension of the shaft 221 in the axial direction. Therefore, an axial force acting on the shaft 221 can be maintained, and rigidity of the rigid joint structure 200 can be maintained.

In this example, the housing 251 and the second member 262 of the support mechanism position adjustment mechanism 260 may be integrally formed, and the shaft guide member 250 may be disposed on the integrated member. Further, the shaft guide member 250 may be directly fixed to the second member 262 of the support mechanism position adjustment mechanism 260 without providing the housing 251.

The shaft support device is not limited to the rigid joint structure as in the example, and may be a brace structure in which support mechanisms on a shaft side and a support body side are joined via pins. In this case, the shaft 221 may be disposed to be inclined according to the configuration of the brace structure.

Further, in the shaft support device such as the rigid structure, the support mechanisms may both have a support mechanism position adjustment mechanism.

As described above, the following matters are disclosed in the present description.

(A1) A ball screw feeding device including:
a screw shaft having an outer peripheral surface formed with a helical thread groove;
a nut having an inner peripheral surface formed with a helical thread groove;
a plurality of balls arranged between the thread groove of the screw shaft and the thread groove of the nut in a freely rolling manner; and
a pair of support mechanisms rotatably supporting both end portions in an axial direction of the screw shaft, respectively, in which
one of the pair of support mechanisms includes
   a bearing unit including a bearing housing and an angular ball bearing that includes an outer ring fitted into the bearing housing, an inner ring fitted outside the end portion in the axial direction of the screw shaft, and a ball disposed between the outer ring and the inner ring in a freely rolling manner,
   a support base disposed on an axial center side than the bearing unit and through which the screw shaft passes, and
   a housing position adjustment mechanism disposed between the bearing unit and the support base, and
the housing position adjustment mechanism includes
   a support base side member provided on a support base side and through which the screw shaft passes,
   a bearing housing side member provided on a bearing housing side, through which the screw shaft passes, and movable in the axial direction relative to the support base side member,
   a hollow member disposed in a pressure chamber formed between the support base side member and the bearing housing side member, and
   a working fluid filling a space other than the hollow member in the pressure chamber.

According to this configuration, even when an axial length of the screw shaft changes due to the influence of heat, support rigidity in the axial direction can be continuously and stably maintained. Further, since the hollow member is disposed within the pressure chamber, it is not always necessary to have an external accumulator, a pump, or the like, and a compact configuration can be achieved.

(A2) In the ball screw feeding device according to (A1), the hollow member has at least one rib protruding from an inner peripheral surface of the hollow member.

According to this configuration, when the hollow member is compressed and deformed, the hollow member can be prevented from being excessively deformed.

(A3) In the ball screw feeding device according to (A1) or (A2), a plurality of the hollow members are disposed in the pressure chamber.

According to this configuration, even when the axial length of the screw shaft changes due to the influence of heat, the support rigidity in the axial direction can be continuously and stably maintained by a total pressure generated by the plurality of hollow members.

(A4) In the ball screw feeding device according to any one of (A1) to (A3), a surface of the hollow member is covered with an outer layer.

According to this configuration, rigidity of the hollow member can be changed and the hollow member can be protected from the liquid.

(A5) In the ball screw feeding device according to any one of (A1) to (A4), the hollow member is a structure having a seamless hollow cross section that is integrally molded.

According to this configuration, local stress concentration is unlikely to occur, and a deformable hollow member can be easily manufactured.

(A6) In the ball screw feeding device according to any one of (A1) to (A4), the hollow member is a coupling body having a hollow cross section, which is formed by integrating two or more members via edge portions of the two or more members.

According to this configuration, a deformable hollow member can be easily manufactured.

(A7) In the ball screw feeding device according to any one of (A1) to (A4), the hollow member is formed by bending a member and coupling edge portions of the member to form a hollow cross section.

According to this configuration, a deformable hollow member can be easily manufactured.

(A8) In the ball screw feeding device according to any one of (A1) to (A7),
one of the support base side member and the bearing housing side member has an annular recessed portion that opens to one side in the axial direction,
the other of the support base side member and the bearing housing side member has an annular protruding portion that protrudes toward the other side in the axial direction and is fitted into the annular recessed portion in a slidable manner in the axial direction, and
the pressure chamber is formed between the annular recessed portion and the annular protruding portion.

According to this configuration, the pressure chamber in which the hollow member is disposed, and filled with the working fluid can be compactly configured around the screw shaft.

(A9) In the ball screw feeding device according to (A8), at least one seal member for preventing leakage of the working fluid that fills the pressure chamber is mounted between an inward surface of the annular recessed portion and an outward surface of the annular protruding portion, and between an outward surface of the annular recessed portion and an inward surface of the annular protruding portion.

According to this configuration, the seal member can prevent leakage of the working fluid that fills the pressure chamber, and functions of the housing position adjustment mechanism can be maintained for a long period of time.

(A10) In the ball screw feeding device according to (A8) or (A9), the working fluid is stored in a gap between an inward surface of the annular recessed portion and an outward surface of the annular protruding portion, and in a gap between an outward surface of the annular recessed portion and an inward surface of the annular protruding portion.

According to this configuration, the housing position adjustment mechanism can provide the support rigidity in a radial direction to the screw shaft, and can also have an alignment function with respect to the screw shaft.

(A11) In the ball screw feeding device according to (A8) or (A9), the housing position adjustment mechanism includes a storage chamber formed in the annular protruding portion so as to open to an outward surface or an inward surface of the annular protruding portion and configured to store the working fluid, and an orifice formed in the annular protruding portion such that the storage chamber and the pressure chamber communicate.

According to this configuration, the working fluid in the pressure chamber and the storage chamber passes through the orifice and a gap between the outward surface of the annular protruding portion and the inward surface of the annular recessed portion, so that vibration can be damped.

(A12) In the ball screw feeding device according to (A8) or (A9), a tip end surface of the annular protruding portion is formed in a protruding tapered shape or a recessed tapered shape from an inner peripheral edge to an outer peripheral edge.

According to this configuration, the alignment function and coaxiality of the angular ball bearing with respect to the screw shaft can be further improved.

(A13) In the ball screw feeding device according to (A9),
the seal member is an O-ring,
the inward surface of the annular recessed portion or the outward surface of the annular protruding portion, and the outward surface of the annular recessed portion or the inward surface of the annular protruding portion are each formed with a seal groove in which the O-ring is disposed, and
the seal groove has a tapered surface whose groove depth decreases as a distance from the pressure chamber increases.

According to this configuration, by using the O-ring as the seal member, the O-ring also acts as a damping mechanism, and the vibration generated in the screw shaft can be damped. Further, even when relative movement occurs between the support base side member and the bearing housing side member, leakage of the working oil to the atmospheric pressure side can be prevented, and rigidity of the ball screw feeding device in the axial direction can be continuously maintained.

(A14) In the ball screw feeding device according to (A9) or (A13),
the seal member is an O-ring, and
a wear-resistant member is interposed between the O-ring and at least one of the inward surface of the annular recessed portion and the outward surface of the annular protruding portion, and between the O-ring and at least one of the outward surface of the annular recessed portion and the inward surface of the annular protruding portion.

According to this configuration, by using the O-ring as the seal member, the O-ring also acts as a damping mechanism, and the vibration generated in the screw shaft can be damped. Further, stress concentration applied to the O-ring can be dispersed, and damage such as wear of the O-ring and a contact surface with the O-ring can be reduced.

(A15) In the ball screw feeding device according to any one of (A1) to (A7),
one of the support base side member and the bearing housing side member has a small diameter cylindrical portion extending to one side in the axial direction, and an outward flange portion extending from a tip end portion of the small diameter cylindrical portion toward an outer diameter side,
the other of the support base side member and the bearing housing side member has a large diameter cylindrical portion extending to the other side in the axial direction and having an inner peripheral surface to come into sliding contact with an outer peripheral surface of the outward flange portion, and an inward flange portion extending from a tip end portion of the large diameter cylindrical portion toward an inner diameter side and having an inner peripheral surface to come into sliding contact with an outer peripheral surface of the small diameter cylindrical portion, and
the pressure chamber is formed in an annular space partitioned by the small diameter cylindrical portion, the outward flange portion, the large diameter cylindrical portion, and the inward flange portion.

According to this configuration, even when an axial length of the screw shaft changes due to the influence of heat, support rigidity in the axial direction can be continuously and stably maintained.

(A16) In the ball screw feeding device according to (A15), at least one seal member for preventing leakage of the working fluid that fills the pressure chamber is mounted between the inner peripheral surface of the inward flange portion and the outer peripheral surface of the small diameter cylindrical portion, and between the outer peripheral surface of the outward flange portion and the inner peripheral surface of the large diameter cylindrical portion.

According to this configuration, the seal member can prevent leakage of the working fluid that fills the pressure chamber, and functions of the housing position adjustment mechanism can be maintained for a long period of time.

(A17) In the ball screw feeding device according to (A15) or (A16), the working fluid in a compressed state is stored in a gap between the inner peripheral surface of the inward flange portion and the outer peripheral surface of the small diameter cylindrical portion, and in a gap between the outer peripheral surface of the outward flange portion and the inner peripheral surface of the large diameter cylindrical portion.

According to this configuration, the housing position adjustment mechanism can provide the support rigidity in a radial direction to the screw shaft, and can also have an alignment function with respect to the screw shaft.

(A18) In the ball screw feeding device according to (A15) or (A16), the housing position adjustment mechanism includes a storage chamber formed in the outward flange portion or the inward flange portion so as to open to the inner peripheral surface of the large diameter cylindrical portion or the outer peripheral surface of the small diameter cylindrical portion and configured to store the working fluid, and an orifice formed in the outward flange portion or the inward flange portion such that the storage chamber and the pressure chamber communicate.

According to this configuration, the working fluid in the pressure chamber and the storage chamber passes through the orifice and the gap between the inner peripheral surface of the large diameter cylindrical portion and the outer peripheral surface of the outward flange portion or the gap between the outer peripheral surface of the small diameter cylindrical portion and the inner peripheral surface of the inward flange portion, so that the vibration can be damped.

(A19) In the ball screw feeding device according to (A16),
the seal member is an O-ring,
the inner peripheral surface of the inward flange portion or the outer peripheral surface of the small diameter cylindrical portion, and the outer peripheral surface of the outward flange portion or the inner peripheral surface of the large diameter cylindrical portion are each formed with a seal groove in which the O-ring is disposed, and
the seal groove has a tapered surface whose groove depth decreases as a distance from the pressure chamber increases.

According to this configuration, by using the O-ring as the seal member, the O-ring also acts as a damping mechanism, and the vibration generated in the screw shaft can be damped. Further, even when relative movement occurs between the support base side member and the bearing housing side member, leakage of the working oil to the atmospheric pressure side can be prevented, and rigidity of the ball screw feeding device in the axial direction can be continuously maintained.

(A20) In the ball screw feeding device according to (A16),
the seal member is an O-ring, and
a wear-resistant member is interposed between the O-ring and at least one of the inner peripheral surface of the inward flange portion and the outer peripheral surface of the small diameter cylindrical portion, and between the O-ring and at least one of the outer peripheral surface of the outward flange portion and the inner peripheral surface of the large diameter cylindrical portion.

According to this configuration, by using the O-ring as the seal member, the O-ring also acts as a damping mechanism, and the vibration generated in the screw shaft can be damped. Further, stress concentration applied to the O-ring can be dispersed, and damage such as wear of the O-ring and a contact surface with the O-ring can be reduced.

(A21) In the ball screw feeding device according to any one of (A1) to (A20), a working medium volume changing part configured to change volumes of the hollow member and the working fluid by heating or cooling the hollow member and the working fluid is attached to at least one of the support base side member and the bearing housing side member.

According to this configuration, the hollow member and the working fluid can be heated or cooled to expand or contract the volumes of the hollow member and the working fluid, so that the support rigidity in the axial direction can be continuously maintained in a stable state.

(A22) In the ball screw feeding device according to any one of (A1) to (A21),
one of the pair of support mechanisms further includes another housing position adjustment mechanism disposed adjacent to the housing position adjustment mechanism in series or in parallel between the bearing unit and the support base, and
the other housing position adjustment mechanism includes
   another support base side member provided on the support base side and through which the screw shaft passes,
   another bearing housing side member provided on the bearing housing side, through which the screw shaft passes, and movable in the axial direction relative to the other support base side member, and
   a pressure generating unit accommodated in a compressed state in a pressure chamber formed between the other support base side member and the other bearing housing side member.

According to this configuration, in the case of series arrangement, it is possible to maintain the rigidity of the ball screw feeding device in the axial direction even when the screw shaft is further elongated, and it is also possible to improve alignment and coaxiality of the screw shaft. Further, in the case of parallel arrangement, a larger axial load can be generated as compared with the case where a single housing position adjustment mechanism is disposed, and the rigidity in the axial direction can be maintained.

(A23) A ball screw feeding device including:
a screw shaft having an outer peripheral surface formed with a helical thread groove;
a nut having an inner peripheral surface formed with a helical thread groove;
a plurality of balls arranged between the thread groove of the screw shaft and the thread groove of the nut in a freely rolling manner; and
a pair of support mechanisms rotatably supporting both end portions in an axial direction of the screw shaft, respectively, in which
one of the pair of support mechanisms includes
   a bearing unit including a bearing housing and an angular ball bearing that includes an outer ring fitted into the bearing housing, an inner ring fitted outside the end portion in the axial direction of the screw shaft, and a ball disposed between the outer ring and the inner ring in a freely rolling manner,
   a support base through which the screw shaft passes, and
   a housing position adjustment mechanism attached to the bearing unit and the support base, and
the housing position adjustment mechanism includes
   a support base side member attached to the support base and through which the screw shaft passes,
   a bearing housing side member attached to the bearing housing, through which the screw shaft passes, and movable in the axial direction relative to the support base side member,
   a hollow member disposed in a pressure chamber formed between the support base side member and the bearing housing side member, and
   a working fluid filling a space other than the hollow member in the pressure chamber.

According to this configuration, even when an axial length of the screw shaft changes due to the influence of heat, support rigidity in the axial direction can be continuously and stably maintained. Further, since the hollow member is disposed within the pressure chamber, it is not always necessary to have an external accumulator, a pump, or the like, and a compact configuration can be achieved.

(A24) A rotation support device including:
a rotation shaft; and
a pair of support mechanisms that rotatably support both end portions in an axial direction of the rotation shaft, respectively, in which
one of the pair of support mechanisms includes
   a bearing unit including a bearing housing and a bearing that rotatably supports the rotation shaft with respect to the bearing housing and is configured to support a load in the axial direction,
   a support base disposed on an axial center side than the bearing unit and through which the rotation shaft passes, and
   a housing position adjustment mechanism disposed between the bearing unit and the support base, and
the housing position adjustment mechanism includes
   a support base side member provided on a support base side and through which the rotation shaft passes,
   a bearing housing side member provided on a bearing housing side, through which the rotation shaft passes, and movable in the axial direction relative to the support base side member,
   a hollow member disposed in a pressure chamber formed between the support base side member and the bearing housing side member, and
   a working fluid filling a space other than the hollow member in the pressure chamber.

According to this configuration, even when an axial length of the rotation shaft changes due to the influence of heat, support rigidity in the axial direction can be continuously and stably maintained. Further, since the hollow member is disposed within the pressure chamber, it is not always necessary to have an external accumulator, a pump, or the like, and a compact configuration can be achieved.

(A25) A rotation support device including:
a rotation shaft; and
a pair of support mechanisms that rotatably support both end portions in an axial direction of the rotation shaft, respectively, in which
one of the pair of support mechanisms includes
   a bearing unit including a bearing housing and a bearing that rotatably supports the rotation shaft with respect to the bearing housing and is configured to support a load in the axial direction,
   a support base through which the rotation shaft passes, and
   a housing position adjustment mechanism attached to the bearing unit and the support base, and
the housing position adjustment mechanism includes
   a support base side member attached to the support base and through which the rotation shaft passes,
   a bearing housing side member attached to the bearing housing, through which the rotation shaft passes, and movable in the axial direction relative to the support base side member,
   a hollow member disposed in a pressure chamber formed between the support base side member and the bearing housing side member, and
   a working fluid filling a space other than the hollow member in the pressure chamber.

According to this configuration, even when an axial length of the shaft changes due to the influence of heat, support rigidity in the axial direction can be continuously and stably maintained. Further, since the hollow member is disposed within the pressure chamber, it is not always necessary to have an external accumulator, a pump, or the like, and a compact configuration can be achieved.

(A26) A support mechanism position adjustment mechanism of a shaft support device,
the shaft support device including a shaft and a pair of support mechanisms provided at both end portions in an axial direction of the shaft to support the shaft with respect to a base,
the support mechanism position adjustment mechanism being provided on one of the pair of support mechanisms,
the support mechanism position adjustment mechanism of a shaft support device including:
   a first member provided on one of a support mechanism side and a base side, and through which the shaft passes;
   a second member provided on the other of the support mechanism side and the base side, through which the shaft passes, and movable in the axial direction relative to the first member, an accommodation space being formed between the first member and the second member;
   a hollow member disposed in the accommodation space; and
   a working fluid filling a space other than the hollow member in the accommodation space.

According to this configuration, even when an axial length of the shaft changes due to the influence of heat, support rigidity in the axial direction can be continuously and stably maintained. Further, since the hollow member is disposed within the pressure chamber, it is not always necessary to have an external accumulator, a pump, or the like, and a compact configuration can be achieved.

(A27) A support mechanism position adjustment mechanism of a shaft support device,
the shaft support device including a shaft and a pair of support mechanisms provided at both end portions in an axial direction of the shaft to support the shaft with respect to a base,
the support mechanism position adjustment mechanism being provided on one of the pair of support mechanisms,
the support mechanism position adjustment mechanism of a shaft support device including:
   a first member provided on one of the support mechanism and the base, and through which the shaft passes;
   a second member provided on the other of the support mechanism and the base, through which the shaft passes, and movable in the axial direction relative to the first member, an accommodation space being formed between the first member and the second member;
   a hollow member disposed in the accommodation space; and
   a working fluid filling a space other than the hollow member in the accommodation space.

According to this configuration, even when an axial length of the shaft changes due to the influence of heat, support rigidity in the axial direction can be continuously and stably maintained. Further, since the hollow member is disposed within the pressure chamber, it is not always necessary to have an external accumulator, a pump, or the like, and a compact configuration can be achieved.

(A28) A rotation support device including:
a rotation shaft; and
a pair of support mechanisms that rotatably support both end portions in an axial direction of the rotation shaft, respectively, in which
one of the pair of support mechanisms includes
   a bearing unit including a bearing housing and a bearing that rotatably supports the rotation shaft with respect to the bearing housing and is configured to support a load in the axial direction,
   a support base through which the rotation shaft passes, and
   a housing position adjustment mechanism disposed between the bearing unit and the support base, and
the housing position adjustment mechanism includes
   a support base side member provided on a support base side and through which the rotation shaft passes or disposed around the rotation shaft,
   a bearing housing side member provided on a bearing housing side, through which the rotation shaft passes or disposed around the rotation shaft, and movable in the axial direction relative to the support base side member,
   a hollow member disposed in a pressure chamber formed between the support base side member and the bearing housing side member, and
   a working fluid filling a space other than the hollow member in the pressure chamber.

According to this configuration, even when an axial length of the rotation shaft changes due to the influence of heat, support rigidity in the axial direction can be continuously and stably maintained. Further, since the hollow member is disposed within the pressure chamber, it is not always necessary to have an external accumulator, a pump, or the like, and a compact configuration can be achieved.

(A29) In the rotation support device according to (A28),
one of the support base side member and the bearing housing side member has a plurality of recessed portions that open to one side in the axial direction,
the other of the support base side member and the bearing housing side member has a plurality of protruding portions that protrude toward the other side in the axial direction and are respectively fitted into the plurality of recessed portions in a slidable manner in the axial direction, and
a plurality of the pressure chambers are respectively formed between the plurality of recessed portions and the plurality of protruding portions.

According to this configuration, a layout of the housing position adjustment mechanism can be freely configured by the plurality of pressure chambers.

(A30) In the rotation support device according to (A29), the plurality of pressure chambers are arranged on both sides in a width direction with respect to the rotation shaft.

According to this configuration, a height dimension of the housing position adjustment mechanism can be reduced.

(A31) In the rotation support device according to (A29), the hollow member and the working fluid are disposed in each of the plurality of pressure chambers.

According to this configuration, the plurality of pressure chambers can be configured in common.

(A32) In the rotation support device according to (A28), the rotation support device is a ball screw feeding device in which the rotation shaft is a screw shaft having an outer peripheral surface formed with a helical thread groove, and further includes a nut having an inner peripheral surface formed with a helical thread groove, and a plurality of balls arranged between the thread groove of the screw shaft and the thread groove of the nut in a freely rolling manner.

According to this configuration, it is possible to implement a ball screw feeding device in which the support rigidity in the axial direction can be continuously and stably maintained even when an axial length of the rotation shaft changes due to an influence of heat.

(A33) A support mechanism position adjustment mechanism of a shaft support device,
the shaft support device including a shaft and a pair of support mechanisms provided at both end portions in an axial direction of the shaft to support the shaft with respect to a base,
the support mechanism position adjustment mechanism being provided on one of the pair of support mechanisms,
the support mechanism position adjustment mechanism of a shaft support device including:
   a first member provided on one of a support mechanism side and a base side, and through which the shaft passes or which is disposed around the shaft;
   a second member provided on the other of the support mechanism side and the base side, through which the shaft passes or which is disposed around the shaft, and movable in the axial direction relative to the first member, an accommodation space being formed between the first member and the second member;
   a hollow member disposed in the accommodation space; and
   a working fluid filling a space other than the hollow member in the accommodation space.

According to this configuration, even when an axial length of the shaft changes due to the influence of heat, support rigidity in the axial direction can be continuously and stably maintained. Further, since the hollow member is disposed within the pressure chamber, it is not always necessary to have an external accumulator, a pump, or the like, and a compact configuration can be achieved.

(B1) A rotation support device including:
a rotation shaft; and
a pair of support mechanisms that rotatably support both end portions in an axial direction of the rotation shaft, respectively, in which
one of the pair of support mechanisms includes
   a bearing unit including a bearing housing and a bearing that rotatably supports the rotation shaft with respect to the bearing housing and is configured to support a load in the axial direction,
   a support base through which the rotation shaft passes or disposed around the rotation shaft, and
   a housing position adjustment mechanism disposed between the bearing unit and the support base, and
the housing position adjustment mechanism includes
   a support base side member provided on a support base side and through which the rotation shaft passes or disposed around the rotation shaft,
   a bearing housing side member provided on a bearing housing side, through which the rotation shaft passes or disposed around the rotation shaft, and movable in the axial direction relative to the support base side member, and
   a working fluid compressed and filling a pressure chamber formed between the support base side member and the bearing housing side member.

According to this configuration, even when an axial length of the rotation shaft changes due to the influence of heat, support rigidity in the axial direction can be continuously and stably maintained. Further, since the hollow member is disposed within the pressure chamber, it is not always necessary to have an external accumulator, a pump, or the like, and a compact configuration can be achieved.

(B2) In the rotation support device according to (B1), the hollow member has at least one rib protruding from an inner peripheral surface of the hollow member.

According to this configuration, when the hollow member is compressed and deformed, the hollow member can be prevented from being excessively deformed.

(B3) In the rotation support device according to (B1) or (B2), a plurality of the hollow members are disposed in the pressure chamber.

According to this configuration, even when the axial length of the rotation shaft changes due to the influence of heat, the support rigidity in the axial direction can be continuously and stably maintained by a total pressure generated by the plurality of hollow members.

(B4) In the rotation support device according to any one of (B1) to (B3), a surface of the hollow member is covered with an outer layer.

According to this configuration, rigidity of the hollow member can be changed and the hollow member can be protected from the liquid.

(B5) In the rotation support device according to any one of (B1) to (B4), the hollow member is a structure having a seamless hollow cross section that is integrally molded.

According to this configuration, local stress concentration is unlikely to occur, and a deformable hollow member can be easily manufactured.

(B6) In the rotation support device according to any one of (B1) to (B4), the hollow member is a coupling body having a hollow cross section, which is formed by integrating two or more members via edge portions of the two or more members.

According to this configuration, a deformable hollow member can be easily manufactured.

(B7) In the rotation support device according to any one of (B1) to (B4), the hollow member is formed by bending a member and coupling edge portions of the member to form a hollow cross section.

According to this configuration, a deformable hollow member can be easily manufactured.

(B8) In the rotation support device according to any one of (B1) to (B7),
one of the support base side member and the bearing housing side member has an annular recessed portion that opens to one side in the axial direction,
the other of the support base side member and the bearing housing side member has an annular protruding portion that protrudes toward the other side in the axial direction and is fitted into the annular recessed portion in a slidable manner in the axial direction, and
the pressure chamber is formed between the annular recessed portion and the annular protruding portion.

According to this configuration, the pressure chamber in which the hollow member is disposed, and filled with the working fluid can be compactly configured around the rotation shaft.

(B9) In the rotation support device according to (B8), at least one seal member for preventing leakage of the working fluid that fills the pressure chamber is mounted between an inward surface of the annular recessed portion and an outward surface of the annular protruding portion, and between an outward surface of the annular recessed portion and an inward surface of the annular protruding portion.

According to this configuration, the seal member can prevent leakage of the working fluid that fills the pressure chamber, and functions of the housing position adjustment mechanism can be maintained for a long period of time.

(B10) In the rotation support device according to (B8) or (B9), the working fluid is stored in a gap between an inward surface of the annular recessed portion and an outward surface of the annular protruding portion, and in a gap between an outward surface of the annular recessed portion and an inward surface of the annular protruding portion.

According to this configuration, the housing position adjustment mechanism can provide the support rigidity in a radial direction to the rotation shaft, and can also have an alignment function with respect to the rotation shaft.

(B11) In the rotation support device according to (B8) or (B9), the housing position adjustment mechanism includes a storage chamber formed in the annular protruding portion so as to open to an outward surface or an inward surface of the annular protruding portion and configured to store the working fluid, and an orifice formed in the annular protruding portion such that the storage chamber and the pressure chamber communicate.

According to this configuration, the working fluid in the pressure chamber and the storage chamber passes through the orifice and a gap between the outward surface of the annular protruding portion and the inward surface of the annular recessed portion, so that vibration can be damped.

(B12) In the rotation support device according to (B8) or (B9), a tip end surface of the annular protruding portion is formed in a protruding tapered shape or a recessed tapered shape from an inner peripheral edge to an outer peripheral edge.

According to this configuration, the alignment function and coaxiality of the angular ball bearing with respect to the rotation shaft can be further improved.

(B13) In the rotation support device according to (B9),
the seal member is an O-ring,
the inward surface of the annular recessed portion or the outward surface of the annular protruding portion, and the outward surface of the annular recessed portion or the inward surface of the annular protruding portion are each formed with a seal groove in which the O-ring is disposed, and
the seal groove has a tapered surface whose groove depth decreases as a distance from the pressure chamber increases.

According to this configuration, by using the O-ring as the seal member, the O-ring also acts as a damping mechanism, and the vibration generated in the rotation shaft can be damped. Further, even when relative movement occurs between the support base side member and the bearing housing side member, leakage of the working oil to the atmospheric pressure side can be prevented, and rigidity of the rotation support device in the axial direction can be continuously maintained.

(B14) In the rotation support device according to (B9) or (B13),
the seal member is an O-ring, and
a wear-resistant member is interposed between the O-ring and at least one of the inward surface of the annular recessed portion and the outward surface of the annular protruding portion, and between the O-ring and at least one of the outward surface of the annular recessed portion and the inward surface of the annular protruding portion.

According to this configuration, by using the O-ring as the seal member, the O-ring also acts as a damping mechanism, and the vibration generated in the rotation shaft can be damped. Further, stress concentration applied to the O-ring can be dispersed, and damage such as wear of the O-ring and a contact surface with the O-ring can be reduced.

(B15) In the rotation support device according to any one of (B1) to (B7),
one of the support base side member and the bearing housing side member has a small diameter cylindrical portion extending to one side in the axial direction, and an outward flange portion extending from a tip end portion of the small diameter cylindrical portion toward an outer diameter side,
the other of the support base side member and the bearing housing side member has a large diameter cylindrical portion extending to the other side in the axial direction and having an inner peripheral surface to come into sliding contact with an outer peripheral surface of the outward flange portion, and an inward flange portion extending from a tip end portion of the large diameter cylindrical portion toward an inner diameter side and having an inner peripheral surface to come into sliding contact with an outer peripheral surface of the small diameter cylindrical portion, and
the pressure chamber is formed in an annular space partitioned by the small diameter cylindrical portion, the outward flange portion, the large diameter cylindrical portion, and the inward flange portion.

According to this configuration, even when an axial length of the rotation shaft changes due to the influence of heat, support rigidity in the axial direction can be continuously and stably maintained.

(B16) In the rotation support device according to (B15), at least one seal member for preventing leakage of the working fluid that fills the pressure chamber is mounted between the inner peripheral surface of the inward flange portion and the outer peripheral surface of the small diameter cylindrical portion, and between the outer peripheral surface of the outward flange portion and the inner peripheral surface of the large diameter cylindrical portion.

According to this configuration, the seal member can prevent leakage of the working fluid that fills the pressure chamber, and functions of the housing position adjustment mechanism can be maintained for a long period of time.

(B17) In the rotation support device according to (B15) or (B16), the working fluid in a compressed state is stored in a gap between the inner peripheral surface of the inward flange portion and the outer peripheral surface of the small diameter cylindrical portion, and in a gap between the outer peripheral surface of the outward flange portion and the inner peripheral surface of the large diameter cylindrical portion.

According to this configuration, the housing position adjustment mechanism can provide the support rigidity in a radial direction to the rotation shaft, and can also have an alignment function with respect to the rotation shaft.

(B18) In the rotation support device according to (B15) or (B16), the housing position adjustment mechanism includes a storage chamber formed in the outward flange portion or the inward flange portion so as to open to the inner peripheral surface of the large diameter cylindrical portion or the outer peripheral surface of the small diameter cylindrical portion and configured to store the working fluid, and an orifice formed in the outward flange portion or the inward flange portion such that the storage chamber and the pressure chamber communicate.

According to this configuration, the working fluid in the pressure chamber and the storage chamber passes through the orifice and the gap between the inner peripheral surface of the large diameter cylindrical portion and the outer peripheral surface of the outward flange portion or the gap between the outer peripheral surface of the small diameter cylindrical portion and the inner peripheral surface of the inward flange portion, so that the vibration can be damped.

(B19) In the rotation support device according to (B16),
the seal member is an O-ring,
the inner peripheral surface of the inward flange portion or the outer peripheral surface of the small diameter cylindrical portion, and the outer peripheral surface of the outward flange portion or the inner peripheral surface of the large diameter cylindrical portion are each formed with a seal groove in which the O-ring is disposed, and
the seal groove has a tapered surface whose groove depth decreases as a distance from the pressure chamber increases.

According to this configuration, by using the O-ring as the seal member, the O-ring also acts as a damping mechanism, and the vibration generated in the rotation shaft can be damped. Further, even when relative movement occurs between the support base side member and the bearing housing side member, leakage of the working oil to the atmospheric pressure side can be prevented, and rigidity of the rotation support device in the axial direction can be continuously maintained.

(B20) In the rotation support device according to (B16),
the seal member is an O-ring, and
a wear-resistant member is interposed between the O-ring and at least one of the inner peripheral surface of the inward flange portion and the outer peripheral surface of the small diameter cylindrical portion, and between the O-ring and at least one of the outer peripheral surface of the outward flange portion and the inner peripheral surface of the large diameter cylindrical portion.

According to this configuration, by using the O-ring as the seal member, the O-ring also acts as a damping mechanism, and the vibration generated in the rotation shaft can be damped. Further, stress concentration applied to the O-ring can be dispersed, and damage such as wear of the O-ring and a contact surface with the O-ring can be reduced.

(B21) In the rotation support device according to any one of (B1) to (B20), a working medium volume changing part configured to change volumes of the hollow member and the working fluid by heating or cooling the hollow member and the working fluid is attached to at least one of the support base side member and the bearing housing side member.

According to this configuration, the hollow member and the working fluid can be heated or cooled to expand or contract the volumes of the hollow member and the working fluid, so that the support rigidity in the axial direction can be continuously maintained in a stable state.

(B22) In the rotation support device according to any one of (B1) to (B21),
one of the pair of support mechanisms further includes another housing position adjustment mechanism disposed adjacent to the housing position adjustment mechanism in series or in parallel between the bearing unit and the support base, and
the other housing position adjustment mechanism includes
   another support base side member provided on the support base side and through which the rotation shaft passes or disposed around the rotation shaft,
   another bearing housing side member provided on the bearing housing side, through which the rotation shaft passes or disposed around the rotation shaft, and movable in the axial direction relative to the other support base side member, and
   a pressure generating unit accommodated in a compressed state in a pressure chamber formed between the other support base side member and the other bearing housing side member.

According to this configuration, in the case of series arrangement, it is possible to maintain the rigidity of the rotation support device in the axial direction even when the rotation shaft is further elongated, and it is also possible to improve alignment and coaxiality of the rotation shaft. Further, in the case of parallel arrangement, a larger axial load can be generated as compared with the case where a single housing position adjustment mechanism is disposed, and the rigidity in the axial direction can be maintained.

(B23) In the rotation support device according to (B1),
one of the support base side member and the bearing housing side member has a plurality of recessed portions that open to one side in the axial direction,
the other of the support base side member and the bearing housing side member has a plurality of protruding portions that protrude toward the other side in the axial direction and are respectively fitted into the plurality of recessed portions in a slidable manner in the axial direction, and
a plurality of the pressure chambers are respectively formed between the plurality of recessed portions and the plurality of protruding portions.

According to this configuration, a layout of the housing position adjustment mechanism can be freely configured by the plurality of pressure chambers.

(B24) In the rotation support device according to (B23), the plurality of pressure chambers are arranged on both sides in a width direction with respect to the rotation shaft.

According to this configuration, a height dimension of the housing position adjustment mechanism can be reduced.

(B25) In the rotation support device according to (B23), the hollow member and the working fluid are disposed in each of the plurality of pressure chambers.

According to this configuration, the plurality of pressure chambers can be configured in common.

(B26) In the rotation support device according to any one of (B1) to (B25), the bearing of the bearing unit includes a pair of angular ball bearings each including an outer ring fitted into the bearing housing, an inner ring fitted outside the end portion in the axial direction of the rotation shaft, and a ball disposed between the outer ring and the inner ring in a freely rolling manner.

According to this configuration, in a case where the bearing unit includes the pair of angular ball bearings, even when an axial length of the rotation shaft changes due to THE influence of heat, support rigidity in the axial direction can be continuously and stably maintained.

(B27) In the rotation support device according to any one of (B1) to (B26), the rotation support device is a ball screw feeding device in which the rotation shaft is a screw shaft having an outer peripheral surface formed with a helical thread groove, and further includes a nut having an inner peripheral surface formed with a helical thread groove, and a plurality of balls arranged between the thread groove of the screw shaft and the thread groove of the nut in a freely rolling manner.

According to this configuration, it is possible to implement a ball screw feeding device in which the support rigidity in the axial direction can be continuously and stably maintained even when an axial length of the rotation shaft changes due to an influence of heat.

(B28) A support mechanism position adjustment mechanism of a shaft support device,
the shaft support device including a shaft and a pair of support mechanisms provided at both end portions in an axial direction of the shaft to support the shaft,
the support mechanism position adjustment mechanism being provided on one of the pair of support mechanisms,
one of the pair of support mechanisms including a support body through which the shaft passes or which is disposed around the shaft,
the support mechanism position adjustment mechanism of a shaft support device including:
   a first member provided on one of a shaft side and a support body side, and through which the shaft passes or which is disposed around the shaft;
   a second member provided on the other of the shaft side and the support body side, through which the shaft passes or which is disposed around the shaft, and movable in the axial direction relative to the first member, an accommodation space being formed between the first member and the second member;
   a hollow member disposed in the accommodation space; and
   a working fluid filling a space other than the hollow member in the accommodation space.

According to this configuration, even when an axial length of the shaft changes due to the influence of heat, support rigidity in the axial direction can be continuously and stably maintained. Further, since the hollow member is disposed within the pressure chamber, it is not always necessary to have an external accumulator, a pump, or the like, and a compact configuration can be achieved.

(B29) In the support mechanism position adjustment mechanism of a shaft support device according to (B28),
the shaft is a rotation shaft,
the one of the pair of support mechanisms further includes a bearing unit including a bearing housing and a bearing that rotatably supports the rotation shaft with respect to the bearing housing and is configured to support a load in the axial direction,
the support mechanism position adjustment mechanism is a housing position adjustment mechanism disposed between the bearing unit and the support body,
the first member is a support body side member provided on the support body side and through which the rotation shaft passes or which is disposed around the rotation shaft, and
the second member is a bearing housing side member provided on a bearing housing side, through which the rotation shaft passes or which is disposed around the rotation shaft, and movable in the axial direction relative to the support body side member, the accommodation space being formed between the bearing housing side member and the support body side member.

According to this configuration, even when an axial length of the rotation shaft changes due to the influence of heat, support rigidity in the axial direction can be continuously and stably maintained.

(B30) In the support mechanism position adjustment mechanism of a shaft support device according to (B28) or (B29), the hollow member has at least one rib protruding from an inner peripheral surface of the hollow member.

According to this configuration, when the hollow member is compressed and deformed, the hollow member can be prevented from being excessively deformed.

(B31) In the support mechanism position adjustment mechanism of a shaft support device according to any one of (B28) to (B30), a plurality of the hollow members are disposed in the pressure chamber.

According to this configuration, even when the axial length of the shaft changes due to the influence of heat, the support rigidity in the axial direction can be continuously and stably maintained by a total pressure generated by the plurality of hollow members.

(B32) In the support mechanism position adjustment mechanism of a shaft support device according to any one of (B28) to (B31), a surface of the hollow member is covered with an outer layer.

According to this configuration, rigidity of the hollow member can be changed and the hollow member can be protected from the liquid.

(B33) In the support mechanism position adjustment mechanism of a shaft support device according to any one of (B28) to (B32), the hollow member is a structure having a seamless hollow cross section that is integrally molded.

According to this configuration, local stress concentration is unlikely to occur, and a deformable hollow member can be easily manufactured.

(B34) In the support mechanism position adjustment mechanism of a shaft support device according to any one of (B28) to (B32), the hollow member is a coupling body having a hollow cross section, which is formed by integrating two or more members via edge portions of the two or more members.

According to this configuration, a deformable hollow member can be easily manufactured.

(B35) In the support mechanism position adjustment mechanism of a shaft support device according to any one of (B28) to (B32), the hollow member is formed by bending a member and coupling edge portions of the member to form a hollow cross section.

According to this configuration, a deformable hollow member can be easily manufactured.

(B36) In the support mechanism position adjustment mechanism of a shaft support device according to any one of (B28) to (B35),
one of the first member and the second member has an annular recessed portion that opens to one side in the axial direction,
the other of the first member and the second member has an annular protruding portion that protrudes toward the other side in the axial direction and is fitted into the annular recessed portion in a slidable manner in the axial direction, and
the pressure chamber is formed between the annular recessed portion and the annular protruding portion.

According to this configuration, the pressure chamber in which the hollow member is disposed, and filled with the working fluid can be compactly configured around the shaft.

(B37) In the support mechanism position adjustment mechanism of a shaft support device according to (B36), at least one seal member for preventing leakage of the working fluid that fills the pressure chamber is mounted between an inward surface of the annular recessed portion and an outward surface of the annular protruding portion, and between an outward surface of the annular recessed portion and an inward surface of the annular protruding portion.

According to this configuration, the seal member can prevent leakage of the working fluid that fills the pressure chamber, and functions of the support mechanism position adjustment mechanism can be maintained for a long period of time.

(B38) In the support mechanism position adjustment mechanism of a shaft support device according to (B36) or (B37), the working fluid is stored in a gap between an inward surface of the annular recessed portion and an outward surface of the annular protruding portion, and in a gap between an outward surface of the annular recessed portion and an inward surface of the annular protruding portion.

According to this configuration, the support mechanism position adjustment mechanism can provide the support rigidity in a radial direction to the shaft, and can also have an alignment function with respect to the shaft.

(B39) In the support mechanism position adjustment mechanism of a shaft support device according to (B36) or (B37), the support mechanism position adjustment mechanism includes a storage chamber formed in the annular protruding portion so as to open to an outward surface or an inward surface of the annular protruding portion and configured to store the working fluid, and an orifice formed in the annular protruding portion such that the storage chamber and the pressure chamber communicate.

According to this configuration, the working fluid in the pressure chamber and the storage chamber passes through the orifice and a gap between the outward surface of the annular protruding portion and the inward surface of the annular recessed portion, so that vibration can be damped.

(B40) In the support mechanism position adjustment mechanism of a shaft support device according to (B36) or (B37), a tip end surface of the annular protruding portion is formed in a protruding tapered shape or a recessed tapered shape from an inner peripheral edge to an outer peripheral edge.

According to this configuration, the alignment function and coaxiality of the shaft can be further improved.

(B41) In the support mechanism position adjustment mechanism of a shaft support device according to (B37),
the seal member is an O-ring,
the inward surface of the annular recessed portion or the outward surface of the annular protruding portion, and the outward surface of the annular recessed portion or the inward surface of the annular protruding portion are each formed with a seal groove in which the O-ring is disposed, and
the seal groove has a tapered surface whose groove depth decreases as a distance from the pressure chamber increases.

According to this configuration, by using the O-ring as the seal member, the O-ring also acts as a damping mechanism, and the vibration generated in the shaft can be damped. Further, even when relative movement occurs between the first member and the second member, leakage of the working oil to the atmospheric pressure side can be prevented, and rigidity of the shaft support device in the axial direction can be continuously maintained.

(B42) In the support mechanism position adjustment mechanism of a shaft support device according to (B37) or (B41),
the seal member is an O-ring, and
a wear-resistant member is interposed between the O-ring and at least one of the inward surface of the annular recessed portion and the outward surface of the annular protruding portion, and between the O-ring and at least one of the outward surface of the annular recessed portion and the inward surface of the annular protruding portion.

According to this configuration, by using the O-ring as the seal member, the O-ring also acts as a damping mechanism, and the vibration generated in the shaft can be damped. Further, stress concentration applied to the O-ring can be dispersed, and damage such as wear of the O-ring and a contact surface with the O-ring can be reduced.

(B43) In the support mechanism position adjustment mechanism of a shaft support device according to any one of (B28) to (B35),
one of the first member and the second member has a small diameter cylindrical portion extending to one side in the axial direction, and an outward flange portion extending from a tip end portion of the small diameter cylindrical portion toward an outer diameter side,
the other of the first member and the second member has a large diameter cylindrical portion extending to the other side in the axial direction and having an inner peripheral surface to come into sliding contact with an outer peripheral surface of the outward flange portion, and an inward flange portion extending from a tip end portion of the large diameter cylindrical portion toward an inner diameter side and having an inner peripheral surface to come into sliding contact with an outer peripheral surface of the small diameter cylindrical portion, and
the pressure chamber is formed in an annular space partitioned by the small diameter cylindrical portion, the outward flange portion, the large diameter cylindrical portion, and the inward flange portion.

According to this configuration, even when an axial length of the shaft changes due to the influence of heat, support rigidity in the axial direction can be continuously and stably maintained.

(B44) In the support mechanism position adjustment mechanism of a shaft support device according to (B43), at least one seal member for preventing leakage of the working fluid that fills the pressure chamber is mounted between the inner peripheral surface of the inward flange portion and the outer peripheral surface of the small diameter cylindrical portion, and between the outer peripheral surface of the outward flange portion and the inner peripheral surface of the large diameter cylindrical portion.

According to this configuration, the seal member can prevent leakage of the working fluid that fills the pressure chamber, and functions of the support mechanism position adjustment mechanism can be maintained for a long period of time.

(B45) In the support mechanism position adjustment mechanism of a shaft support device according to (B43) or (B44), the working fluid in a compressed state is stored in a gap between the inner peripheral surface of the inward flange portion and the outer peripheral surface of the small diameter cylindrical portion, and in a gap between the outer peripheral surface of the outward flange portion and the inner peripheral surface of the large diameter cylindrical portion.

According to this configuration, the support mechanism position adjustment mechanism can provide the support rigidity in a radial direction to the shaft, and can also have an alignment function with respect to the shaft.

(B46) In the support mechanism position adjustment mechanism of a shaft support device according to (B43) or (B44), the support mechanism position adjustment mechanism includes a storage chamber formed in the outward flange portion or the inward flange portion so as to open to the inner peripheral surface of the large diameter cylindrical portion or the outer peripheral surface of the small diameter cylindrical portion and configured to store the working fluid, and an orifice formed in the outward flange portion or the inward flange portion such that the storage chamber and the pressure chamber communicate.

According to this configuration, the working fluid in the pressure chamber and the storage chamber passes through the orifice and the gap between the inner peripheral surface of the large diameter cylindrical portion and the outer peripheral surface of the outward flange portion or the gap between the outer peripheral surface of the small diameter cylindrical portion and the inner peripheral surface of the inward flange portion, so that the vibration can be damped.

(B47) In the support mechanism position adjustment mechanism of a shaft support device according to (B44),
the seal member is an O-ring,
the inner peripheral surface of the inward flange portion or the outer peripheral surface of the small diameter cylindrical portion, and the outer peripheral surface of the outward flange portion or the inner peripheral surface of the large diameter cylindrical portion are each formed with a seal groove in which the O-ring is disposed, and
the seal groove has a tapered surface whose groove depth decreases as a distance from the pressure chamber increases.

According to this configuration, by using the O-ring as the seal member, the O-ring also acts as a damping mechanism, and the vibration generated in the shaft can be damped. Further, even when relative movement occurs between the first member and the second member, leakage of the working oil to the atmospheric pressure side can be prevented, and rigidity of the shaft support device in the axial direction can be continuously maintained.

(B48) In the support mechanism position adjustment mechanism of a shaft support device according to (B44),
the seal member is an O-ring, and
a wear-resistant member is interposed between the O-ring and at least one of the inner peripheral surface of the inward flange portion and the outer peripheral surface of the small diameter cylindrical portion, and between the O-ring and at least one of the outer peripheral surface of the outward flange portion and the inner peripheral surface of the large diameter cylindrical portion.

According to this configuration, by using the O-ring as the seal member, the O-ring also acts as a damping mechanism, and the vibration generated in the shaft can be damped. Further, stress concentration applied to the O-ring can be dispersed, and damage such as wear of the O-ring and a contact surface with the O-ring can be reduced.

(B49) In the support mechanism position adjustment mechanism of a shaft support device according to any one of (B28) to (B48), a working medium volume changing part configured to change volumes of the hollow member and the working fluid by heating or cooling the hollow member and the working fluid is attached to at least one of the first member and the second member.

According to this configuration, the hollow member and the working fluid can be heated or cooled to expand or contract the volumes of the hollow member and the working fluid, so that the support rigidity in the axial direction can be continuously maintained in a stable state.

(B50) In the support mechanism position adjustment mechanism of a shaft support device according to any one of (B28) to (B49),
one of the pair of support mechanisms further includes another support mechanism position adjustment mechanism disposed adjacent to the support mechanism position adjustment mechanism in series or in parallel between the bearing unit and the support body, and
the other support mechanism position adjustment mechanism includes
   another first member provided on the support body side and through which the shaft passes or disposed around the shaft,
   another second member provided on the shaft side, through which the shaft passes or disposed around the shaft, and movable in the axial direction relative to the other first member, and
   a pressure generating unit accommodated in a compressed state in a pressure chamber formed between the other first member and the other second member.

According to this configuration, in the case of series arrangement, it is possible to maintain the rigidity of the shaft support device in the axial direction even when the shaft is further elongated, and it is also possible to improve alignment and coaxiality of the shaft. Further, in the case of parallel arrangement, a larger axial load can be generated as compared with the case where a single support mechanism position adjustment mechanism is disposed, and the rigidity in the axial direction can be maintained.

(B51) In the support mechanism position adjustment mechanism of a shaft support device according to (B28),
one of the first member and the second member has a plurality of recessed portions that open to one side in the axial direction,
the other of the first member and the second member has a plurality of protruding portions that protrude toward the other side in the axial direction and are respectively fitted into the plurality of recessed portions in a slidable manner in the axial direction, and
a plurality of the pressure chambers are respectively formed between the plurality of recessed portions and the plurality of protruding portions.

According to this configuration, a layout of the support mechanism position adjustment mechanism can be freely configured by the plurality of pressure chambers.

(B52) In the support mechanism position adjustment mechanism of a shaft support device according to (B51), the plurality of pressure chambers are arranged on both sides in a width direction with respect to the shaft.

According to this configuration, a height dimension of the support mechanism position adjustment mechanism can be reduced.

(B53) In the support mechanism position adjustment mechanism of a shaft support device according to (B51), the hollow member and the working fluid are disposed in each of the plurality of pressure chambers.

According to this configuration, the plurality of pressure chambers can be configured in common.

Note that the present application is based on Japanese Patent Application No. 2022-173759 filed on October 28, 2022, Japanese Patent Application No. 2023-118993 filed on July 21, 2023, and Japanese Patent Application No. 2023-134633 filed on August 22, 2023, contents of which are incorporated herein by reference.

### REFERENCE SIGNS LIST

20 ball screw feeding device (shaft support device, rotation support device)
21 screw shaft (shaft, rotation shaft)
23 nut
30 first support mechanism (support mechanism)
31 fixed side bearing housing
33, 53 angular ball bearing (bearing)
34, 54 outer ring
35, 55 inner ring
36, 56 ball
38a, 38b fastening nut
40 second support mechanism (support mechanism)
41 bearing unit
43 support base (support body)
51 moving side bearing housing (bearing housing)
51a inward flange
59 wear-resistant member
60 housing position adjustment mechanism (support mechanism position adjustment mechanism)
61 support base side member (first member)
62 bearing housing side member (second member)
64 annular recessed portion
65 annular protruding portion
66 pressure chamber (accommodation space)
67 O-ring (seal member)
68 seal groove
69a tapered surface
70 working fluid
80, 81 heating element (working medium volume changing part)
82, 83 cooling medium (working medium volume changing part)
90 hollow member
90a rib
120 rotation support device
121 rotation shaft
160 another housing position adjustment mechanism
161 another support base side member (another support body side member)
162 another bearing housing side member
170 another working fluid

## Claims

1. A rotation support device comprising:
a rotation shaft; and
a pair of support mechanisms that rotatably support both end portions in an axial direction of the rotation shaft, respectively,
wherein one of the pair of support mechanisms includes
a bearing unit including a bearing housing and a bearing that rotatably supports the rotation shaft with respect to the bearing housing and is configured to support a load in the axial direction,
a support base through which the rotation shaft passes, and
a housing position adjustment mechanism disposed between the bearing unit and the support base, and
wherein the housing position adjustment mechanism includes
a support base side member provided on a support base side and through which the rotation shaft passes or disposed around the rotation shaft,
a bearing housing side member provided on a bearing housing side, through which the rotation shaft passes or disposed around the rotation shaft, and movable in the axial direction relative to the support base side member,
a hollow member disposed in a pressure chamber formed between the support base side member and the bearing housing side member, and
a working fluid filling a space other than the hollow member in the pressure chamber.

2. The rotation support device according to claim 1,
wherein the hollow member has at least one rib protruding from an inner peripheral surface of the hollow member.

3. The rotation support device according to claim 1 or 2,
wherein a plurality of the hollow members are disposed in the pressure chamber.

4. The rotation support device according to claim 1 or 2,
wherein a surface of the hollow member is covered with an outer layer.

5. The rotation support device according to claim 1 or 2,
wherein the hollow member is a structure having a seamless hollow cross section that is integrally molded.

6. The rotation support device according to claim 1 or 2,
wherein the hollow member is a coupling body having a hollow cross section, which is formed by integrating two or more members via edge portions of the two or more members.

7. The rotation support device according to claim 1 or 2,
wherein the hollow member is formed by bending a member and coupling edge portions of the member to form a hollow cross section.

8. The rotation support device according to claim 1,
wherein one of the support base side member and the bearing housing side member has an annular recessed portion that opens to one side in the axial direction,
wherein the other of the support base side member and the bearing housing side member has an annular protruding portion that protrudes toward the other side in the axial direction and is fitted into the annular recessed portion in a slidable manner in the axial direction, and
wherein the pressure chamber is formed between the annular recessed portion and the annular protruding portion.

9. The rotation support device according to claim 8,
wherein at least one seal member for preventing leakage of the working fluid that fills the pressure chamber is mounted between an inward surface of the annular recessed portion and an outward surface of the annular protruding portion, and between an outward surface of the annular recessed portion and an inward surface of the annular protruding portion.

10. The rotation support device according to claim 8 or 9,
wherein the working fluid is stored in a gap between an inward surface of the annular recessed portion and an outward surface of the annular protruding portion, and in a gap between an outward surface of the annular recessed portion and an inward surface of the annular protruding portion.

11. The rotation support device according to claim 8 or 9,
wherein the housing position adjustment mechanism includes a storage chamber formed in the annular protruding portion so as to open to an outward surface or an inward surface of the annular protruding portion and configured to store the working fluid, and an orifice formed in the annular protruding portion such that the storage chamber and the pressure chamber communicate.

12. The rotation support device according to claim 8 or 9,
wherein a tip end surface of the annular protruding portion is formed in a protruding tapered shape or a recessed tapered shape from an inner peripheral edge to an outer peripheral edge.

13. The rotation support device according to claim 9,
wherein the seal member is an O-ring,
wherein the inward surface of the annular recessed portion or the outward surface of the annular protruding portion, and the outward surface of the annular recessed portion or the inward surface of the annular protruding portion are each formed with a seal groove in which the O-ring is disposed, and
wherein the seal groove has a tapered surface whose groove depth decreases as a distance from the pressure chamber increases.

14. The rotation support device according to claim 9,
wherein the seal member is an O-ring, and
wherein a wear-resistant member is interposed between the O-ring and at least one of the inward surface of the annular recessed portion and the outward surface of the annular protruding portion, and between the O-ring and at least one of the outward surface of the annular recessed portion and the inward surface of the annular protruding portion.

15. The rotation support device according to claim 1,
wherein one of the support base side member and the bearing housing side member has a small diameter cylindrical portion extending to one side in the axial direction, and an outward flange portion extending from a tip end portion of the small diameter cylindrical portion toward an outer diameter side,
wherein the other of the support base side member and the bearing housing side member has a large diameter cylindrical portion extending to the other side in the axial direction and having an inner peripheral surface to come into sliding contact with an outer peripheral surface of the outward flange portion, and an inward flange portion extending from a tip end portion of the large diameter cylindrical portion toward an inner diameter side and having an inner peripheral surface to come into sliding contact with an outer peripheral surface of the small diameter cylindrical portion, and
wherein the pressure chamber is formed in an annular space partitioned by the small diameter cylindrical portion, the outward flange portion, the large diameter cylindrical portion, and the inward flange portion.

16. The rotation support device according to claim 15,
wherein at least one seal member for preventing leakage of the working fluid that fills the pressure chamber is mounted between the inner peripheral surface of the inward flange portion and the outer peripheral surface of the small diameter cylindrical portion, and between the outer peripheral surface of the outward flange portion and the inner peripheral surface of the large diameter cylindrical portion.

17. The rotation support device according to claim 15 or 16,
wherein the working fluid is stored in a gap between the inner peripheral surface of the inward flange portion and the outer peripheral surface of the small diameter cylindrical portion, and in a gap between the outer peripheral surface of the outward flange portion and the inner peripheral surface of the large diameter cylindrical portion.

18. The rotation support device according to claim 15 or 16,
wherein the housing position adjustment mechanism includes a storage chamber formed in the outward flange portion or the inward flange portion so as to open to the inner peripheral surface of the large diameter cylindrical portion or the outer peripheral surface of the small diameter cylindrical portion and configured to store the working fluid, and an orifice formed in the outward flange portion or the inward flange portion such that the storage chamber and the pressure chamber communicate.

19. The rotation support device according to claim 16,
wherein the seal member is an O-ring,
wherein the inner peripheral surface of the inward flange portion or the outer peripheral surface of the small diameter cylindrical portion, and the outer peripheral surface of the outward flange portion or the inner peripheral surface of the large diameter cylindrical portion are each formed with a seal groove in which the O-ring is disposed, and
wherein the seal groove has a tapered surface whose groove depth decreases as a distance from the pressure chamber increases.

20. The rotation support device according to claim 16,
wherein the seal member is an O-ring, and
wherein a wear-resistant member is interposed between the O-ring and at least one of the inner peripheral surface of the inward flange portion and the outer peripheral surface of the small diameter cylindrical portion, and between the O-ring and at least one of the outer peripheral surface of the outward flange portion and the inner peripheral surface of the large diameter cylindrical portion.

21. The rotation support device according to claim 1,
wherein a working medium volume changing part configured to change volumes of the hollow member and the working fluid by heating or cooling the hollow member and the working fluid is attached to at least one of the support base side member and the bearing housing side member.

22. The rotation support device according to claim 1,
wherein one of the pair of support mechanisms further includes another housing position adjustment mechanism disposed adjacent to the housing position adjustment mechanism in series or in parallel between the bearing unit and the support base, and
wherein the other housing position adjustment mechanism includes
another support base side member provided on the support base side and through which the rotation shaft passes or disposed around the rotation shaft,
another bearing housing side member provided on the bearing housing side, through which the rotation shaft passes or disposed around the rotation shaft, and movable in the axial direction relative to the other support base side member, and
a pressure generating unit accommodated in a compressed state in a pressure chamber formed between the other support base side member and the other bearing housing side member.

23. The rotation support device according to claim 1,
wherein one of the support base side member and the bearing housing side member has a plurality of recessed portions that open to one side in the axial direction,
wherein the other of the support base side member and the bearing housing side member has a plurality of protruding portions that protrude toward the other side in the axial direction and are respectively fitted into the plurality of recessed portions in a slidable manner in the axial direction, and
wherein a plurality of the pressure chambers are respectively formed between the plurality of recessed portions and the plurality of protruding portions.

24. The rotation support device according to claim 23,
wherein the plurality of pressure chambers are arranged on both sides in a width direction with respect to the rotation shaft.

25. The rotation support device according to claim 23,
wherein the hollow member and the working fluid are disposed in each of the plurality of pressure chambers.

26. The rotation support device according to claim 1,
wherein the bearing of the bearing unit includes a pair of angular ball bearings each including an outer ring fitted into the bearing housing, an inner ring fitted outside an axial end portion of the rotation shaft, and a ball disposed between the outer ring and the inner ring in a freely rolling manner.

27. The rotation support device according to claim 1,
wherein the rotation support device is a ball screw feeding device in which the rotation shaft is a screw shaft having an outer peripheral surface formed with a helical thread groove, and further includes a nut having an inner peripheral surface formed with a helical thread groove, and a plurality of balls arranged between the thread groove of the screw shaft and the thread groove of the nut in a freely rolling manner.

28. A support mechanism position adjustment mechanism of a shaft support device,
the shaft support device including a shaft and a pair of support mechanisms provided at both end portions in an axial direction of the shaft to support the shaft,
the support mechanism position adjustment mechanism being provided on one of the pair of support mechanisms,
one of the pair of support mechanisms including a support body through which the shaft passes or which is disposed around the shaft,
the support mechanism position adjustment mechanism of a shaft support device comprising:
a first member provided on one of a shaft side and a support body side, and through which the shaft passes or which is disposed around the shaft;
a second member provided on the other of the shaft side and the support body side, through which the shaft passes or which is disposed around the shaft, and movable in the axial direction relative to the first member, an accommodation space being formed between the first member and the second member;
a hollow member disposed in the accommodation space; and
a working fluid filling a space other than the hollow member in the accommodation space.

29. The support mechanism position adjustment mechanism of a shaft support device according to claim 28,
wherein the shaft is a rotation shaft,
wherein the one of the pair of support mechanisms further includes a bearing unit including a bearing housing and a bearing that rotatably supports the rotation shaft with respect to the bearing housing and is configured to support a load in the axial direction,
wherein the support mechanism position adjustment mechanism is a housing position adjustment mechanism disposed between the bearing unit and the support body,
wherein the first member is a support body side member provided on the support body side and through which the rotation shaft passes or which is disposed around the rotation shaft, and
wherein the second member is a bearing housing side member provided on a bearing housing side, through which the rotation shaft passes or which is disposed around the rotation shaft, and movable in the axial direction relative to the support body side member, the accommodation space being formed between the bearing housing side member and the support body side member.
